(19) Europäisches Patentamt
European Patent Office
Office européen des brevets

(11) **EP 3 963 284 B1**

(12) **FASCICULE DE BREVET EUROPÉEN**

(45) Date de publication et mention
de la délivrance du brevet:
**07.06.2023 Bulletin 2023/23**

(21) Numéro de dépôt: **20754305.9**

(22) Date de dépôt: **21.04.2020**

(51) Classification Internationale des Brevets (IPC):
*G01B 15/00* (2006.01)    *G01B 15/02* (2006.01)
*G01N 21/90* (2006.01)    *G01N 23/083* (2018.01)
*G01F 17/00* (2006.01)

(52) Classification Coopérative des Brevets (CPC):
**G01B 15/025; G01B 15/00; G01F 17/00;**
**G01N 21/9054; G01N 23/083;** G01N 2021/845;
G01N 2223/04; G01N 2223/1016; G01N 2223/3308;
G01N 2223/643; G01N 2223/645; G01N 2223/646

(86) Numéro de dépôt international:
**PCT/FR2020/050679**

(87) Numéro de publication internationale:
**WO 2020/221975 (05.11.2020 Gazette 2020/45)**

(54) **LIGNE DE CONTRÔLE DE RÉCIPIENTS VIDES EN VERRE**

LINIE ZUR INSPEKTION VON LEEREN GLASBEHÄLTERN

LINE FOR INSPECTING EMPTY GLASS CONTAINERS

(84) Etats contractants désignés:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priorité: **29.04.2019 FR 1904532**

(43) Date de publication de la demande:
**09.03.2022 Bulletin 2022/10**

(73) Titulaire: **TIAMA**
**69230 Saint-Genis-Laval (FR)**

(72) Inventeurs:
• **COLLE, Olivier**
**69600 OULLINS (FR)**
• **COSNEAU, Laurent**
**69510 SOUCIEU-EN-JARREST (FR)**

(74) Mandataire: **Cabinet Beau de Loménie**
**51 avenue Jean Jaurès**
**BP 7073**
**69301 Lyon Cedex 07 (FR)**

(56) Documents cités:
FR-A1- 3 052 555      US-A- 4 393 305
US-A1- 2013 222 575

## Description

## Domaine Technique

La présente invention concerne le domaine technique de l'inspection de récipients vides en verre, tels que par exemple des bouteilles, des pots, des flacons en vue de déceler d'éventuels défauts dimensionnels et d'éventuels défauts de type glaçure.

La présente invention concerne plus précisément la mesure de dimensions et le contrôle de défauts de type glaçure sur des récipients vides en verre, défilant en ligne après leur fabrication en vue de déterminer si de tels récipients respectent des critères dimensionnels et d'absence de défauts requis.

Après leur fabrication, les récipients en verre vides font l'objet de divers contrôles de présence de défauts, dont des contrôles de présence de glaçures ou des contrôles dimensionnels.

Ainsi, il est connu qu'il existe un risque que les récipients présentent une ou plusieurs zones localisées de mauvaise répartition de verre affectant l'esthétique ou plus grave, la résistance mécanique des récipients. De plus, la présence de glaçures dans un récipient en verre est généralement un problème grave de qualité car cela entraîne presque toujours une plus faible résistance mécanique.

Pour mesurer l'épaisseur de la paroi d'un récipient, il est connu par exemple par le brevet EP 0 320 139 ou le brevet EP 0 584 673, une méthode dite par triangulation consistant à projeter un faisceau lumineux sur la paroi du récipient avec un angle d'incidence non nul, et à collecter les faisceaux lumineux réfléchis par la surface extérieure et la surface intérieure de la paroi.

Une alternative à la technique précédente de mesure optique par triangulation est la mesure par le procédé dit « optique confocal à chromatisme » telle que décrite par la demande DE 10 2007 044 530 ou la demande FR2738343A1. Ce procédé consiste à envoyer un faisceau lumineux présentant un codage chromatique, à récupérer les faisceaux réfléchis par les faces intérieure et extérieure, sur un capteur permettant d'analyser la longueur d'onde desdits faisceaux réfléchis, et à déterminer l'épaisseur en fonction des longueurs d'ondes desdits faisceaux réfléchis.

De même, le brevet EP 2 676 127 décrit un dispositif permettant la mesure de l'épaisseur de la paroi de verre des récipients en plusieurs points de mesure distribués sur une région d'inspection de manière superposée selon une hauteur déterminée du récipient prise selon l'axe central. Le procédé d'inspection vise à déceler des défauts de répartition de matière dans des récipients transparents ayant un axe central et une paroi délimitée entre une surface externe et une surface interne.

Les mesures optiques décrites précédemment sont très utilisées car sans contact et assez rapides, mais elles nécessitent toutes la mise en rotation des récipients pour mesurer l'épaisseur sur une circonférence. Il n'est pas possible donc d'utiliser ces principes pour une mesure de récipients défilant en ligne sur une ligne de convoyage au cours de leur fabrication.

De façon supplémentaire, la mise en rotation des récipients nécessaire à la mesure optique d'épaisseur est coûteuse. En effet, la mise en rotation impose l'utilisation d'un équipement de manutention complexe. Il faut en effet arrêter les récipients qui arrivent en translation sur le convoyeur, les entraîner en rotation durant la mesure et les remettre en mouvement de translation sur le convoyeur. Les récipients sont alors mis en contact avec des guides, des galets, des étoiles. Les réglages sont fastidieux et impliquent le recours à des équipements adaptés à chaque format de récipients (équipements variables). Enfin les cadences sont limitées à 300-400 récipients par minute alors que la production actuelle de récipients en verre sur les lignes les plus performantes dépasse actuellement les 700 récipients par minute. Il faut donc dans certains cas un double équipement de mesure.

De manière classique, les récipients en verre vides font également l'objet en dehors des mesures d'épaisseur de leur paroi, de mesures au niveau du goulot ou de la bague du récipient (diamètres interne/externe, étanchéité, hauteur) et du col du récipient (diamètre intérieur, profil intérieur, brochage).

Afin de réaliser de telles inspections, il est connu d'utiliser un ou plusieurs dispositifs comportant chacun une tête d'inspection destinée à être abaissée soit sur une distance précise en fonction de la nature du récipient, soit pour venir en contact avec le récipient, soit pour être en appui sur le récipient le temps de l'inspection. De manière classique, une telle inspection est réalisée à l'aide d'une machine présentant soit un convoyeur linéaire adapté pour maintenir les récipients dans des positions précises, soit de préférence un convoyeur à étoiles, avec un mouvement circulaire indexé pour placer les récipients en relation avec différents postes de contrôle. Chaque tête d'inspection est déplacée selon un mouvement vertical alternatif pour un convoyeur à étoiles tandis que pour un convoyeur linéaire, la tête d'inspection présente de façon supplémentaire, un déplacement horizontal.

Le brevet FR 2 818 748 décrit un dispositif d'inspection comportant une tête montée sur une glissière horizontale qui est fixée sur un chariot déplacé selon des mouvements alternatifs verticaux par une courroie montée entre une poulie folle et une poulie menée par un servomoteur. L'un des inconvénients d'un tel dispositif est la masse déplacée relativement importante, ce qui limite la vitesse et l'accélération de déplacement de la tête d'inspection. Il s'ensuit que la cadence d'inspection des récipients est limitée, ce qui représente un inconvénient majeur dans le processus de production en ligne de récipients. Un autre inconvénient d'un tel dispositif connu apparaît lorsque la tête d'inspection est destinée à venir en contact avec le récipient. En effet, la course de la tête d'inspection n'est pas définie à cause de la dispersion de hauteur des récipients et des défauts qui influent sur cette course comme ceux ne permettant pas à la tête d'inspection de descendre lors d'une opération de brochage. Aussi, compte tenu de l'indétermination de cette course et de la masse embarquée, il peut survenir un choc important entre la tête d'inspection et le récipient, ce qui est susceptible d'entraîner la détérioration du récipient et/ou de la tête d'inspection.

Le brevet GB 1 432 120 décrit un dispositif pour inspecter les récipients comportant plusieurs postes de contrôle dont l'un vise à contrôler la conformité dimensionnelle des bagues et des cols des récipients. Ce poste de contrôle comporte un équipage mobile entraîné par un système de motorisation selon un mouvement alternatif par rapport au bâti du dispositif, dans une direction de déplacement parallèle à l'axe de symétrie des récipients. Cet équipage mobile est équipé d'un calibre externe de contrôle de l'extérieur de la bague des récipients et d'un calibre interne de contrôle de l'intérieur de la bague et du col des récipients. Le dispositif décrit par ce document GB 1 432 120 possède les mêmes inconvénients que le dispositif d'inspection décrit par le brevet FR 2 818 748.

Le brevet FR 2 965 344 en allégeant la partie mobile, en combinant une détection de contact et une commande dynamique du mouvement vertical, rend la solution nettement plus rapide, mais toutefois les mouvements mécaniques de manutention des récipients, les équipements variables et le contact des calibres avec les récipients restent des inconvénients majeurs. EP-2.622.305 décrit aussi une machine mettant en oeuvre des calibres qui viennent en contact avec le récipient.

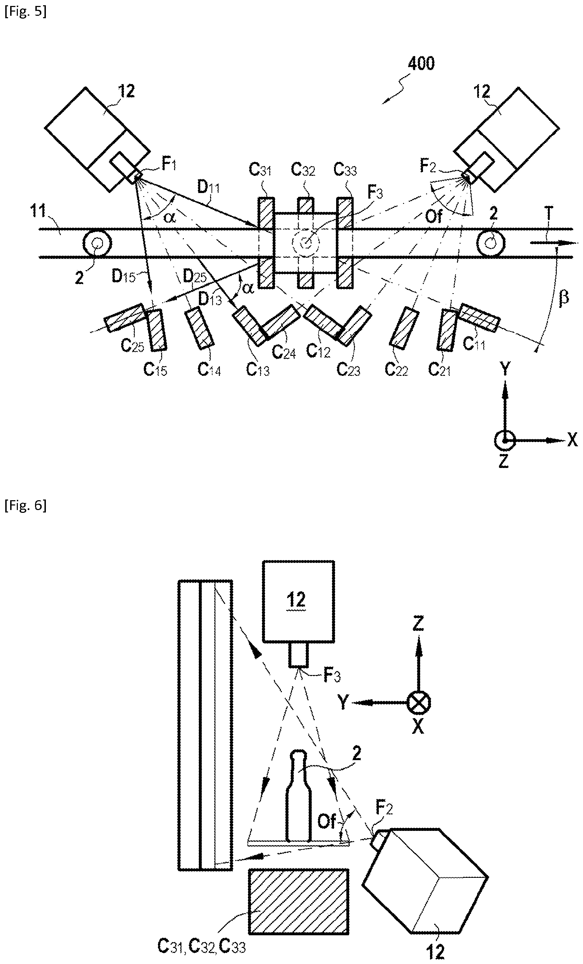

Dans le domaine de la détection d'un volume de liquide contenu dans un récipient, la demande de brevet WO 2010/025539 décrit un système et un procédé d'inspection par rayons X. Le principe de détection de ce document est de connaître l'épaisseur de liquide traversé à partir de l'image radiographique (repère **512** sur la **Fig. 5**a et **592** sur la **Fig. 5**b) afin d'en déduire le niveau de remplissage (ménisque **520**) et donc le volume total de liquide à l'intérieur du récipient. A cet effet, le procédé propose de soustraire de l'image radiographique, l'atténuation due aux épaisseurs de verre traversées **508** et **506.**

Or il n'est pas possible dans la radiographie projetée selon la direction **502-504** de connaître l'atténuation due au verre et celle due au liquide contenu. Pour remédier à ce problème, ce document propose de créer un modèle théorique tridimensionnel du récipient à partir de son image radiographique bidimensionnelle. De l'image radiographique, est soustrait l'atténuation du modèle théorique tridimensionnel du récipient pour déduire des atténuations mesurées, uniquement les atténuations du liquide permettant d'en déduire approximativement le volume de liquide.

Selon l'exemple de réalisation décrit par ce document, le modèle théorique tridimensionnel est obtenu à partir d'une radiographie réalisée selon une seule direction de projection. La radiographie est analysée pour connaître le profil bidimensionnel du récipient projeté selon une direction de projection. Le profil bidimensionnel du récipient sert à obtenir la forme théorique tridimensionnelle du récipient soit à partir d'une bibliothèque de modèles enregistrés soit par révolution du profil bidimensionnel compte tenu de la forme de symétrie axiale supposée des récipients.

Selon un autre exemple de réalisation, ce document suggère de prendre des images radiographiques selon des directions différentes pour améliorer la précision de la détermination de la position du ménisque du liquide. Selon cet exemple, le procédé vise à déterminer la position du ménisque du liquide selon une première direction radiographique, la position du ménisque du liquide selon une deuxième direction radiographique et à retenir la position du ménisque du liquide pour la position moyenne du ménisque du liquide.

Quel que soit l'exemple de réalisation, le modèle théorique tridimensionnel construit selon l'enseignement de ce document ne correspond pas au récipient réel objet de la radiographie. Des mesures notamment d'épaisseurs réalisées sur un tel modèle théorique tridimensionnelle sont donc fausses. Par ailleurs, il est à noter que les seules mesures d'épaisseur éventuellement possibles sont celles selon une direction orthogonale à la direction de projection radiographique. Ainsi, les dimensions comme l'épaisseur de verre dans les directions non orthogonales à la direction de projection radiographiques sont exactement les mêmes que les épaisseurs dans le profil bidimensionnel, donc dans les directions orthogonales aux projections radiographiques. Cette hypothèse qui est vérifiée uniquement pour un récipient parfait ou théorique comme supposé dans ce document, est bien entendue fausse pour un récipient sur lequel des mesures précises sont à réaliser.

La demande de brevet JP S60 260807 propose de mesurer l'épaisseur des parois d'un tube se déplaçant en translation selon l'axe du tube, à l'aide de mesures par rayons X issus d'un ou de plusieurs foyers à chacun desquels sont associés des capteurs. Les foyers et les capteurs sont positionnés pour réaliser des projections radiographiques selon un plan orthogonal à la direction de déplacement du tube. Les projections radiographiques sont donc coplanaires dans un plan de projection qui est orthogonal à l'axe de symétrie du tube. La direction de ces projections radiographiques fait un angle droit (90°) par rapport à la direction de déplacement. Cette technique ne permet pas de connaître complètement les surfaces interne et externe du tube. Le procédé décrit par cette demande de brevet permet de mesurer uniquement l'épaisseur cumulée des deux parois du tube dans la direction de projection, sans reconstruction d'un modèle tridimensionnel d'un tube qui permettrait de réaliser des mesures précises dans les autres directions.

De même, le brevet US 5 864 600 décrit un procédé pour déterminer le niveau de remplissage d'un récipient à l'aide d'une source de rayons X et d'un capteur disposés transversalement de part et d'autre du convoyeur de transport des récipients. Ce procédé permet de mesurer l'épaisseur cumulée du matériau. Ce système ne permet pas d'effectuer des mesures pour une surface orientée non transversalement car ce document ne prévoit pas une modélisation tridimensionnelle des récipients.

La demande de brevet US 2009/0262891 décrit un système pour détecter par rayons X, des objets placés dans des bagages déplacés en translation par un convoyeur. Ce système comporte des tubes générateurs pulsés ou un capteur ayant une grande dimension parallèlement au sens de défilement. Ce document prévoit une méthode de reconstruction de l'objet qui ne donne pas satisfaction car l'absence de projections dans la direction de déplacement ne permet pas la mesure de dimensions dans la direction orthogonale au sens de déplacement. Le manque de projections radiographiques dans un secteur angulaire ne permet pas de réaliser un modèle numérique adapté pour assurer des mesures précises.

La demande de brevet DE 197 56 697 décrit un dispositif présentant les mêmes inconvénients que la demande de brevet US 2009/0262891.

La demande de brevet WO 2010/092368 décrit un dispositif de visualisation d'un objet se déplaçant en translation par rayons X à l'aide d'une source de radiation et de trois capteurs linéaires.

La demande de brevet US 2006/0058974 décrit un système d'imagerie de radiographie numérique permettant d'acquérir des images numériques en particulier de réservoirs ou de canalisation et de transformer ces images numériques en une carte d'épaisseur absolue caractérisant l'objet inspecté. Les données numériques générées à partir de chaque élément sensible sont calibrées, par exemple, en corrigeant les variations des chemins de rayons X entre la source de rayons X et le détecteur, en corrigeant les variations de la réponse en fréquence spatiale, en corrigeant les variations du profil géométrique de l'objet soumis à l'inspection et en corrigeant le matériau contenu dans et/ou autour de l'objet. Cette technique ne peut pas être mise en oeuvre pour le contrôle dimensionnel de récipients défilant en ligne.

L'analyse des solutions techniques antérieures conduit à constater qu'il apparaît le besoin de disposer d'une nouvelle technique permettant d'effectuer des mesures dimensionnelles sur des récipients sans altérer leur intégrité tout en conservant une grande vitesse de convoyage à ces récipients.

La présente invention vise à satisfaire ce besoin en proposant une nouvelle technique de mesure sans contact permettant de réaliser des mesures dimensionnelles précises sur des récipients défilant en ligne à haute cadence.

Les glaçures sont des défauts dans l'épaisseur de la paroi des récipients qui réfléchissent la lumière. Ils sont généralement inspectés en réflexion de lumière sur le défaut. Pour détecter les glaçures, on illumine une région de l'article, sous des incidences précises, au moyen de projecteurs émettant, en direction de la dite région, des faisceaux lumineux dirigés (convergents ou peu divergents). On observe la région illuminée au moyen de capteurs de lumière, par exemple des photodiodes comme dans EP0053151, des réseaux de photodiodes, ou des capteurs d'images tels que des caméras linéaires ou matricielles comme dans EP1147405 et EP2082217. Cette observation est effectuée sous des angles d'observation précis tels que la lumière incidente réfléchie par un défaut de type glaçure sera collectée/ observée par les capteurs de lumière, qui ne recevrons de la lumière qu'au passage d'une glaçure durant la rotation de l'article autour de son axe vertical. En effet, les détections connues impliquent généralement de faire tourner l'article à inspecter autour d'un axe central, sur au moins 360 degrés d'angle.

Il existe cependant des dispositifs qui permettent une détection de certaines glaçures lorsque l'article est en translation. Le document US4293219 donne une solution sans caméra. Dans cette solution, les capteurs contiennent chacun un seul élément photosensible collectant toute la lumière réfléchie perçue dans un cône de réception défini par la focale de sa lentille et son ouverture. Il est impossible de distinguer la forme des objets réfléchissants observés, ni leur localisation précise dans le champ des capteurs, si bien qu'il n'est pas possible de discriminer les petits objets, c'est-à-dire faire la différence entre une petite glaçure et un petit parasite.

La machine ARGOS, commercialisée par la demanderesse, est une machine de détection de glaçures en translation avec caméras qui ne nécessite pas la rotation de l'article autour de son axe central. Les caméras améliorent la détection, puisque des images sont réalisées de chaque région éclairée. Elle est prévue pour détecter les glaçures sur la bague et sur une partie de l'épaule d'un récipient. Elle met en oeuvre une tête d'éclairage et d'observation, dans laquelle les émetteurs de lumière dirigée et les têtes d'endoscopes sont organisés en fonction du diamètre de bague de l'article. La tête d'éclairage et d'observation forme un tunnel au travers duquel circule le goulot des récipients lors de leur translation au travers de l'installation pour l'inspection. Des endoscopes sont utilisés pour ramener un nombre d'images, acquises selon des directions de visions variées, sur un nombre réduit de capteurs. Par exemple tous les endoscopes destinés à la détection des glaçures verticales (par une illumination tangentielle horaire ou antihoraire), sont connectés à une seule caméra. Une seule acquisition d'image est faite par article pour un type de glaçures données.

Le document EP2434276 décrit une machine qui détecte les glaçures sur le goulot d'un récipient en combinant 2 translations orthogonales, puisqu'une translation verticale se combine à la translation horizontale de défilement, donc pas en translation simple. Un dispositif de manutention doit être prévu pour permettre un déplacement vertical. Mais ce dispositif est encombrant et occupe de la place autour des récipients, cachant des parties de récipient qui ne pourront pas être inspectées, au moins dans le cas de récipients de faible hauteur.

US 2013/0222575 A1 décrit une ligne de contrôle de récipients vides comportant un dispositif de transport par contact des récipients, un poste de contrôle de bague ou de fond pour la détection optique de défaut de glaçures dans le goulot ou le fond des récipients.

Un des objectifs de l'invention est de proposer une ligne de contrôle qui soit capable de détecter d'éventuelles glaçures dans le goulot et le fond du récipient et qui soit capable de mesurer au moins un diamètre interne du goulot et/ou au moins une épaisseur de la paroi du corps du récipient dans un contexte du contrôle de récipient à grande cadence.

**Exposé de l'invention**

L'invention propose une ligne de contrôle de récipients vides en verre d'une série.

Chaque récipient de la série présentant une paroi qui est délimitée par une surface interne et une surface externe, qui présente un axe central, et qui forme, de haut en bas le long de l'axe central : un goulot terminé par une bague dont une face supérieure définit un plan supérieur du récipient, perpendiculaire à l'axe central, une épaule, un corps , et un fond de récipient qui définit un plan inférieur du récipient, perpendiculaire à l'axe central.

La ligne de contrôle comporte un dispositif de transport qui assure, par contact avec au moins une région de contact des récipients, le transport des récipients selon une trajectoire de déplacement, les récipients parcourant un volume de convoyage étendu selon la trajectoire de déplacement.

La ligne de contrôle comprend, agencées chacune à des postes distincts les uns des autres le long de la trajectoire de déplacement, plusieurs installations.

A un poste de contrôle de bague, une installation de contrôle de bague est capable de détecter sans contact, par rayons lumineux, de défauts de type glaçures dans le goulot (5) des récipients. L'installation (200) comporte :

a1) une zone d'inspection de l'installation de contrôle de bague, dans laquelle doit être située le goulot d'un récipient pour être inspecté, ladite zone comportant un plan de référence haut destiné à coïncider avec le plan supérieur du récipient en cours d'inspection et comportant un axe de référence destiné à coïncider avec l'axe central du récipient pour une position du récipient en cours d'inspection ;

a2) un tronçon du dispositif de transport qui assure, dans la zone d'inspection de l'installation, le transport des récipients selon une portion rectiligne de la trajectoire de déplacement, dans un plan de convoyage horizontal perpendiculaire à l'axe central des récipients ;

a3) ▪ une série de plusieurs émetteurs lumineux directifs qui sont répartis angulairement autour de l'axe de référence de l'installation et qui délivrent, en direction de la zone d'inspection de l'installation, chacun un faisceau lumineux directif selon un axe de faisceau qui lui est propre, de manière que la zone d'inspection soit éclairée par les faisceaux lumineux directifs selon une multitude d'angles d'azimut distincts en projection dans le plan de référence haut ;

a4) plusieurs récepteurs lumineux qui sont répartis angulairement autour de l'axe de référence de l'installation et qui ont chacun un axe de vision et un angle de champ de vision autour de cet axe de vision ;

a5) avec des éléments optiques agencés de part et d'autre du plan de référence associé, ces éléments optiques appartenant soit à des émetteur lumineux de l'installation soit à des récepteurs lumineux de l'installation, mais tous en dehors du volume de convoyage.

A un poste de contrôle de fond, une installation de contrôle de fond est capable de détecter sans contact, par rayons lumineux, de défauts de type glaçures dans le fond des récipients. L'installation comporte :

b1) une zone d'inspection de l'installation de contrôle de fond dans laquelle doit être située le fond d'un récipient pour être inspecté, ladite zone comportant un plan de référence bas destiné à coïncider avec le plan inférieur du récipient en cours d'inspection et comportant un axe de référence destiné à coïncider avec l'axe central du récipient pour une position du récipient en cours d'inspection ;

b2) un tronçon du dispositif de transport qui assure, dans la zone d'inspection de l'installation, le transport des récipients selon une portion rectiligne de la trajectoire de déplacement, dans un plan de convoyage horizontal perpendiculaire à l'axe central des récipients ;

b3) une série de plusieurs émetteurs lumineux directifs qui sont répartis angulairement autour de l'axe de référence de l'installation et qui délivrent, en direction de la zone d'inspection de l'installation, chacun un faisceau lumineux directif selon un axe de faisceau qui lui est propre, de manière que la zone d'inspection soit éclairée par les faisceaux lumineux directifs selon une multitude d'angles d'azimut distincts en projection dans le plan de référence bas ;

b4) plusieurs récepteurs photosensibles qui sont répartis angulairement autour de l'axe de référence de l'installation et qui ont chacun un axe de vision et un angle de champ de vision autour de cet axe de vision ;

b5) avec des éléments optiques agencés de part et d'autre du plan de référence bas associé, ces éléments optiques appartenant soit à des émetteur lumineux de l'installation soit à des récepteurs lumineux de l'installation, mais tous en dehors du volume de convoyage.

A un poste de mesure radiographique, une installation radiographique capable de mesurer automatique des dimensions linéaires d'au moins une région à inspecter de récipients, cette installation ayant :

c1) au moins un foyer d'un tube générateur de rayons X situé en dehors du volume traversé, et créant un faisceau divergent de rayons X dirigé pour traverser au moins une région à inspecter comprenant au moins une partie du goulot et/ou une partie du corps du récipient ;

c2) un tronçon du dispositif de transport qui assure, dans la zone d'inspection de l'installation, le transport des récipients selon une portion rectiligne de la trajectoire de déplacement, dans un plan de convoyage horizontal perpendiculaire à l'axe central des récipients,

c3) un ou plusieurs capteurs d'images radiographiques, situés en dehors du volume de convoyage, de manière à recevoir des rayons X issus d'un foyer, le ou les foyers et les capteurs d'images radiographiques (Ci) étant disposés de manière que chaque capteur d'images reçoive la projection radiographique de la région à inspecter par les rayons issus du foyer lorsque le récipient traverse ces rayons, les directions de projection radiographique de ces projections radiographiques étant différentes entre elles ;

c4) un système d'acquisition relié aux capteurs d'images radiographiques, de manière à acquérir pour chaque récipient au cours de son déplacement, au moins trois images radiographiques de la région à inspecter, obtenues d'au moins trois projections radiographiques de la région à inspecter, avec des directions de projection radiographique différentes ;

c5) un système informatique analysant les au moins trois images radiographiques, issues d'au moins les trois projections radiographiques différentes, de manière à déterminer au moins un diamètre interne du goulot dans un plan non orthogonal à une direction de projection radiographique, et/ou au moins une épaisseur de la paroi du corps dans un plan non orthogonal à une direction de projection radiographique.

D'autres caractéristiques d'une ligne de contrôle selon l'invention, qui sont optionnelles mais qui peuvent être combinées entre elles, sont développées dans les paragraphes qui suivent.

Elle peut comporter, à un poste de contrôle d'épaule et/ou de corps, distinct des postes de contrôle de bague, de contrôle de fond et de mesure radiographique, une installation de contrôle d'épaule et/ou de corps capable de détecter sans contact, par rayons lumineux, de défauts de type glaçures dans l'épaule et/ou le corps des récipients, l'installation comportant :

d1) une zone d'inspection de l'installation de contrôle d'épaule et/ou de corps dans laquelle doit être située l'épaule et/ou le corps d'un récipient pour être inspecté, ladite zone comportant un plan de référence intermédiaire destiné à couper l'épaule et/ou le corps du récipient en cours d'inspection et comportant un axe de référence destiné à coïncider avec l'axe central du récipient pour une position du récipient en cours d'inspection ;

d2) un tronçon du dispositif de transport qui assure, dans la zone d'inspection de l'installation, le transport des récipients selon une portion rectiligne de la trajectoire de déplacement, dans un plan de convoyage horizontal perpendiculaire à l'axe central des récipients ;

d3) ▪ une série de plusieurs émetteurs lumineux directif qui sont répartis angulairement autour de l'axe de référence de l'installation et qui délivrent, en direction de la zone d'inspection de l'installation, chacun un faisceau lumineux directif selon un axe de faisceau qui lui est propre, de manière que la zone d'inspection soit éclairée par les faisceaux lumineux directifs selon une multitude d'angles d'azimut distincts en projection dans le plan de référence intermédiaire ;

d4) plusieurs récepteurs lumineux qui sont répartis angulairement autour de l'axe de référence de l'installation et qui ont chacun un axe de vision et un angle de champ de vision autour de cet axe de vision ;

d5) avec des éléments optiques agencés de part et d'autre du plan de référence intermédiaire, ces éléments optiques appartenant soit à des émetteur lumineux de l'installation soit à des récepteurs lumineux de l'installation, mais tous en dehors du volume de convoyage.

Dans chacune des zones d'inspection des installations de contrôle de bague, de contrôle de fond et radiographique de mesure, le dispositif de transport assure de préférence, dans la zone d'inspection de l'installation, le transport des récipients le long de la trajectoire de déplacement sans rotation contrôlée autour de leur axe central.

Dans chacune des zones d'inspection des installations de contrôle de bague, de contrôle de fond et radiographique de mesure, le dispositif de transport assure de préférence, dans la zone d'inspection de l'installation, le transport des récipients le long de la trajectoire de déplacement de telle sorte qu'ils sont immobiles en rotation autour de leur axe central.

Entre chacune des installations de contrôle de bague, de contrôle de fond et radiographique de mesure, le dispositif de transport assure de préférence le transport des récipients le long de la trajectoire de déplacement sans rotation contrôlée autour de leur axe central.

Le dispositif transport peut être formé, à chacun des postes, par un tronçon de convoyage associé du dispositif de transport qui assure le transport de chaque récipient à travers le poste en étant en contact avec récipient, et un des tronçons de convoyage associés respectivement aux postes de contrôle de bague, de contrôle de fond et de mesure radiographique assure un contact avec une première région de contact des récipients, tandis qu'un autre des tronçons de convoyage associés respectivement aux postes de contrôle de bague, de contrôle de fond et de mesure radiographique assure un contact avec une deuxième région de contact des récipients qui est distincte de la première région de contact.

Dans chaque poste, la zone de contact des récipients avec le tronçon du dispositif de transport qui est de préférence associé à ce poste est distincte de la zone à inspecter des récipients à ce poste.

Dans chacune des installations de contrôle de bague, de contrôle de fond et radiographique de mesure, le dispositif de transport assure le transport des récipients de préférence sans déplacement vertical.

Le dispositif de transport assure le transport des récipients de préférence sans déplacement vertical dans la ligne de contrôle, ni dans les trois postes de contrôle bague, de contrôle de fond et de mesure radiographique, ni entre les postes de contrôle de bague, de contrôle fond et de mesure radiographique.

Les récipients sont de préférence convoyés sans rotation contrôlée autour de leur axe central, ni dans les trois postes de contrôle de bague, de contrôle fond et de mesure radiographique, ni entre les postes de contrôle de bague, de contrôle de fond et de mesure radiographique.

L'installation de contrôle de bague peut comporter des éléments optiques d'émetteurs lumineux directifs agencés au-dessus du plan de référence haut et des éléments optiques d'émetteurs lumineux agencés en-dessous du plan de référence haut, mais en dehors du volume de convoyage.

L'installation de contrôle de bague peut comporter des éléments optiques de récepteurs lumineux agencés au-dessus du plan de référence haut et des éléments optiques de récepteurs lumineux agencés au-dessous du plan de référence haut, mais en dehors du volume de convoyage.

L'installation de contrôle de fond peut comporter des éléments optiques d'émetteurs lumineux directifs agencés au-dessous du plan de référence bas et des éléments optiques d'émetteurs lumineux directifs agencés au-dessus du plan de référence bas, mais en dehors du volume de convoyage

L'installation de contrôle de fond peut comporter des éléments optiques de récepteurs lumineux agencés au-dessous du plan de référence bas et des éléments optiques de récepteurs lumineux agencés au-dessus du plan de référence bas, mais en dehors du volume de convoyage.

L'installation de contrôle peut comporter des émetteurs lumineux directifs qui sont répartis de manière que la zone d'inspection soit éclairée par les faisceaux lumineux directifs selon une multitude d'angles d'élévation distincts par rapport au plan de référence.

Selon un exemple non revendiqué, chaque récipient de la série de récipients peut porter un identifiant unique. La ligne de contrôle peut alors comporter au moins un lecteur de l'identifiant unique des récipients inspectés par la ligne de contrôle, et peut comporter un système informatique qui reçoit :

- en provenance de l'installation de contrôle bague, au moins une information de contrôle de bague pour le récipient inspecté ;
- en provenance de l'installation de contrôle fond, au moins une information de contrôle de fond pour le récipient inspecté ;
- en provenance de l'installation radiographique de mesure, au moins une mesure de dimension linéaire pour le récipient inspecté.

Dans ce cas, le système informatique de la ligne de contrôle peut être configuré pour créer un rapport informatique liant l'identifiant unique d'un récipient, l'au moins une information de contrôle de bague, l'au moins une information de contrôle de fond et l'au moins une mesure pour ce récipient inspecté, et pour stocker ce rapport informatique dans une mémoire électronique.

Selon un exemple non revendiqué, le système informatique de la ligne de contrôle peut recevoir, en provenance de l'installation de contrôle d'épaule et/ou de corps, au moins une information de contrôle d'épaule et/ou de corps pour le récipient inspecté qui est liée aux autres informations dans le rapport informatique.

Selon un exemple non revendiqué, le système informatique de la ligne de contrôle peut être configuré pour effectuer un traitement informatique sur les rapports informatiques d'un groupe de récipients de la série.

Selon un exemple non revendiqué, le système informatique de la ligne de contrôle peut être configuré pour commander une action correctrice sur un paramètre de production des récipients, sur la base d'un traitement informatique sur les rapports informatiques d'un groupe de récipients de la série.

La détermination d'au moins un diamètre interne du goulot et/ou d'au moins une épaisseur de la paroi du corps peut comporter la construction, pour chaque récipient, un modèle géométrique numérique de la région à inspecter du récipient.

Ledit modèle géométrique numérique peut contenir les coordonnées tridimensionnelles d'un ensemble de points, calculées à partir des au moins trois images radiographiques, cet ensemble de points appartenant à la surface interne et/ou externe de la paroi du récipient, avec au moins deux points situés dans un plan non orthogonal à une direction de projection radiographique, et l'au moins un diamètre interne du goulot, et/ou l'au moins une épaisseur de la paroi du corps mesurée peuvent être mesurés sur le modèle géométrique numérique dans un plan non orthogonal à une direction de projection radiographique.

**Brève description des dessins**

[**Fig. 1**] La **Figure 1** est une vue schématique de dessus montrant une installation radiographique permettant la mesure par rayons X, de dimensions sur des récipients défilant en ligne.

[**Fig. 2**] La **Figure 2** est une vue schématique en perspective de côté montrant une installation radiographique permettant la mesure par rayons X de dimensions sur un récipient

[**Fig. 3**] La **Figure 3** est une vue schématique en coupe montrant une partie d'un récipient inspecté.

[**Fig. 4**] La **Figure 4** est une vue schématique en perspective montrant le volume traversé ou engendré par les récipients au cours de leur déplacement linéaire.

[**Fig. 5**] La **Figure 5** est une vue schématique de dessus montrant un exemple de réalisation d'une installation conforme à l'invention comportant trois foyers générateurs de rayons X.

[**Fig. 6**] La **Figure 6** est une vue schématique en élévation transversale de l'installation illustrée à la **Fig. 5**.

[**Fig. 7**] La **Figure 7** est une vue schématique en élévation latérale de l'installation illustrée à la **Fig. 5.**

[**Fig. 8**] La **Figure 8** est une vue schématique explicitant la définition de l'angle utile entre deux directions de projection.

[**Fig. 9**] La **Figure 9** est une vue schématique explicitant la définition de l'angle utile entre deux directions de projection.

[**Fig. 10**] La **Figure 10** est une vue schématique en perspective montrant le positionnement de capteurs d'images par rapport au déplacement des récipients à inspecter.

[**Fig. 11**] La **Figure 11** est une vue schématique en perspective montrant le positionnement de capteurs d'images par rapport au déplacement des récipients à inspecter.

[**Fig. 12**] La **Figure 12** est une vue d'un exemple de réalisation d'une installation conforme à l'invention mettant en oeuvre des capteurs d'images matricielles.

[**Fig. 13**] La **Figure 13** est une vue d'une matrice d'éléments sensibles aux rayons X sur laquelle apparaît deux zones distinctes correspondant à deux capteurs d'images matricielles.

[**Fig. 14**] La **Figure 14** est une vue d'un modèle géométrique numérique d'un récipient obtenu selon le procédé conforme à l'invention, lorsque la région d'inspection comprend le goulot.

[**Fig. 15**] La **Figure 15** présente une section verticale et quatre sections horizontales du modèle géométrique numérique d'un récipient obtenu selon le procédé conforme à l'invention et sur lequel sont représentées des mesures de dimensions.

[**Fig. 16**] La **Figure 16** est une vue schématique en perspective montrant un exemple de réalisation d'une ligne de contrôle selon l'invention.

[**Fig. 17**] La **Figure 17** est une vue schématique montrant un exemple de réalisation d'une partie d'une ligne de contrôle selon l'invention, transversalement par rapport à une direction de déplacement des récipients.

[**Fig. 18**] La **Figure 18** est une vue schématique montrant un autre exemple de réalisation d'une partie d'une ligne de contrôle selon l'invention, transversalement par rapport à une direction de déplacement des récipients.

[**Fig. 19**] La **Figure 19** est une vue schématique montrant un exemple de réalisation d'une installation de contrôle de bague, transversalement par rapport à une direction de déplacement des récipients.

[**Fig. 20**] La **Figure 20** est une vue schématique montrant un exemple de réalisation d'une installation de contrôle de bague, dans le sens de la direction de déplacement des récipients.

[**Fig. 21**] La **Figure 21** est une vue schématique de dessus montrant un exemple de réalisation d'une installation de contrôle de bague.

**Description des modes de réalisation**

En préliminaire, quelques définitions des termes utilisés dans le cadre de l'invention sont données ci-après.

Un foyer **Fj** d'un tube générateur de rayons X est une source de rayons X ponctuelle, de préférence un « micro foyer », de diamètre par exemple entre 0.01 mm et 1 mm, créant un faisceau divergent de rayons X. Il est possible d'utiliser tout type de source de rayons X ponctuelle ou quasi ponctuelle.

Un élément sensible photographique, respectivement radiographique, d'un capteur d'images photographiques, respectivement radiographiques, est un élément sensible aux rayons lumineux, respectivement aux rayons X, autrement dit une surface élémentaire, de dimensions par exemple 0,2 x 0,2 mm ou 0,02 x 0,02 mm dans le cas spécifique des éléments sensibles radiographique, convertissant les rayons lumineux, respectivement les rayons X, qu'elle reçoit en un signal électrique. Généralement, un élément sensible radiographique comprend un scintillateur qui convertit les rayons X en lumière visible puis un élément sensible photographique, c'est-à-dire un capteur photo-électrique ou capteur lumineux, qui convertit la lumière visible en signal électrique. Des techniques de conversion directe des rayons X en signal électrique existent également. Un pixel désigne une valeur élémentaire d'un point d'une image échantillonnée, caractérisé par son niveau de gris entre 0 et une valeur maximale. Par exemple pour une image numérique 12 bits, un pixel prend des valeurs numériques entre 0 et 4 095.

Un système de lecture ou d'acquisition d'images photographiques, respectivement radiographiques comporte une ou plusieurs surfaces sensibles aux rayons lumineux, respectivement aux rayons X, c'est-à-dire des surfaces comprenant un ou plusieurs éléments sensibles convertissant les rayons lumineux, respectivement les rayons X, en un signal électrique pour être transmis à un système d'analyse mis en oeuvre classiquement par un ordinateur et désigné par système informatique **600** dans la suite de la description. Les signaux issus d'un ensemble d'éléments sensibles appartenant à une même zone de surface sensible, acquis par le dispositif d'acquisition et transmis ensemble au système informatique, constituent une image photographique, respectivement radiographique. Pour être analysées par le système informatique, les images photographiques, respectivement radiographiques, sont de préférence converties en images photographiques, respectivement radiographiques, numériques, soit au plus près de la surface sensible, par exemple dans un circuit électronique intégré à un composant capteur physique comportant la zone sensible, soit à distance, par exemple au plus près du système informatique **600**, voire par le système informatique **600**.

Dans la suite, le domaine photographique recouvre les ondes électromagnétiques lumineuses, plus loin appelés rayons lumineux, dans les domaines de l'ultraviolet, du visible et de l'infrarouge, avec une longueur d'onde comprise entre 10 nm et 5 mm, de préférence comprise entre 100 nanomètres et 20 microns. De préférence, le domaine photographique visible sera exploité, avec des longueurs d'ondes comprises entre 380 et 800 nanomètres. Le domaine radiographique ou des rayons X correspond aux ondes électromagnétiques à haute fréquence dont la longueur d'onde est comprise approximativement entre 0,001 nanomètre et moins de 10 nanomètres.

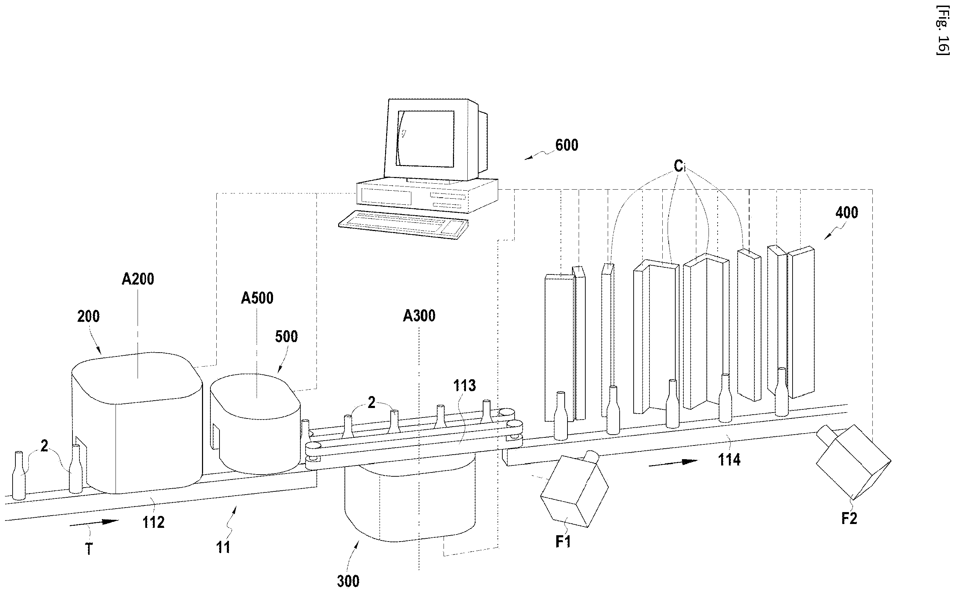

Le système informatique **600**, dont un exemple illustré de manière symbolique à la **Fig. 16**, peut être réalisé sous la forme d'au moins un ordinateur standard, comportant donc au moins un microprocesseur, une ou plusieurs unités de mémoire électronique et une ou plusieurs interfaces d'affichage (écran, projecteur, affichage holographique...), de saisie (clavier, souris, pavé tactile, écran tactile, ...), et / ou de communication (USB, Ethernet®, Wi-Fi®, Bluetooth®, Zigbee®, ...). Le système informatique peut comprendre un réseau informatique partageant des données avec un ou plusieurs autres ordinateurs du réseau, ou avec d'autres réseaux, par exemple par un protocole internet ou Ethernet®. En plus de son évidente liaison aux capteurs d'images, le système informatique peut être relié à des capteurs donnant des informations d'état de l'installation, et / ou à des actionneurs de l'installation (convoyeurs, éjecteurs, ...). Le système informatique peut avantageusement être relié au(x) tube(s) à rayons X, pour en acquérir des données de fonctionnement, et / ou pour en assurer le contrôle. Le système informatique met en oeuvre un ou plusieurs logiciels, stockés(s) et / ou exécuté(s) en local ou à distance, y compris sur un ou plusieurs serveurs informatiques distants. Ce ou ces logiciel(s) comprennent de préférence un ou plusieurs logiciel(s) programmés pour mettre en oeuvre la méthode selon l'invention.

Les faisceaux de rayons X issus d'un foyer **Fj** traversent au moins une région inspectée, et forment, sur une surface sensible radiographique, la projection radiographique de la région inspectée, qu'on appelle parfois l'image radiante et qui contient l'information d'atténuation des rayons X par le matériau traversé.

On appelle capteur d'images radiographique **Ci,** une zone de surface sensible aux rayons X qui reçoit la projection radiographique de la région inspectée. Un capteur d'images radiographique **Ci** est exposé aux rayons X issus d'un foyer **Fj** associé. Le capteur d'images radiographique convertit cette projection radiographique en une image radiographique de la région inspectée.

Lorsque la zone de surface sensible contient une ligne d'éléments sensibles, l'image radiographique transmise est linéaire, composée d'une ligne de pixels formant un tableau à une dimension de valeurs. Lorsque la zone de surface sensible contient une matrice d'éléments sensibles, l'image radiographique transmise est matricielle, composée d'une matrice de pixels formant un tableau à deux dimensions de valeurs. Lorsque la zone de surface sensible contient un seul élément sensible, l'image radiographique transmise est ponctuelle, composée d'un pixel ayant une valeur.

On appelle capteur lumineux une zone de surface sensible aux rayons lumineux qui convertit ces rayons en une image photographique. Lorsque la zone de surface sensible contient une ligne d'éléments sensibles, l'image photographique est linéaire, composée d'une ligne de pixels formant un tableau à une dimension de valeurs. Lorsque la zone de surface sensible contient une matrice d'éléments sensibles, l'image photographique est matricielle, composée d'une matrice de pixels formant un tableau à deux dimensions de valeurs. Lorsque la zone de surface sensible contient un seul élément sensible, l'image photographique est ponctuelle, composée d'un pixel ayant une valeur.

Une caméra photographique, respectivement radiographique, comporte un capteur lumineux, respectivement un capteur d'images radiographiques, dont le signal image est acquis successivement pour donner des images photographiques, respectivement radiographiques, successives

La direction de projection **Dji** radiographique est la direction orientée ou le vecteur partant du foyer **Fj** pour passer par le centre du capteur d'images radiographiques **Ci,** c'est à dire par le centre d'une zone sensible aux rayons X qui reçoit la projection radiographique de la région inspectée au moment de l'acquisition durant le déplacement du récipient entre le foyer et le capteur d'images radiographiques. Pour un couple capteur d'images radiographiques - foyer associé, la direction de projection radiographique est le vecteur issu du foyer atteignant le milieu du capteur d'images. Le positionnement des capteurs d'images radiographiques est tel que la surface sensible n'est pas parallèle à la direction de projection radiographique. Il peut être avantageux dans certains cas que la surface sensible du capteur d'images radiographiques soit orthogonale à la direction de projection radiographique définie avec le foyer associé. Mais ce n'est pas obligatoire, par exemple si une surface sensible contient plusieurs zones sensibles radiographiques qui coopèrent pour chaque prise d'image, avec plusieurs foyers différents, donc selon des directions de projection différentes.

Les directions de projection **Dji** radiographiques sont différentes si les directions de projection **Dji** prises deux à deux font entre elles un angle minimum au moins égal à 5°.

Une zone de surface sensible contenant une seule ligne d'éléments sensibles constitue un capteur d'images linéaires, qui comporte un réseau linéaire d'éléments sensibles, distribués selon un segment de droite de support. Selon cette définition, une colonne ou une ligne appartenant à une surface sensible matricielle, acquise et transmise séparément par le dispositif d'acquisition est considérée comme un capteur d'images linéaires. Plusieurs zones de surface sensibles d'une même surface et contenant chacune une seule ligne de pixels différentes constituent donc plusieurs capteurs d'images linéaires. Dans le cas d'un capteur d'images radiographiques, la direction de projection radiographique associée à l'image radiographique linéaire obtenue est donc la direction partant du foyer et passant par le milieu du segment de droite de support à l'instant de l'acquisition de l'image.

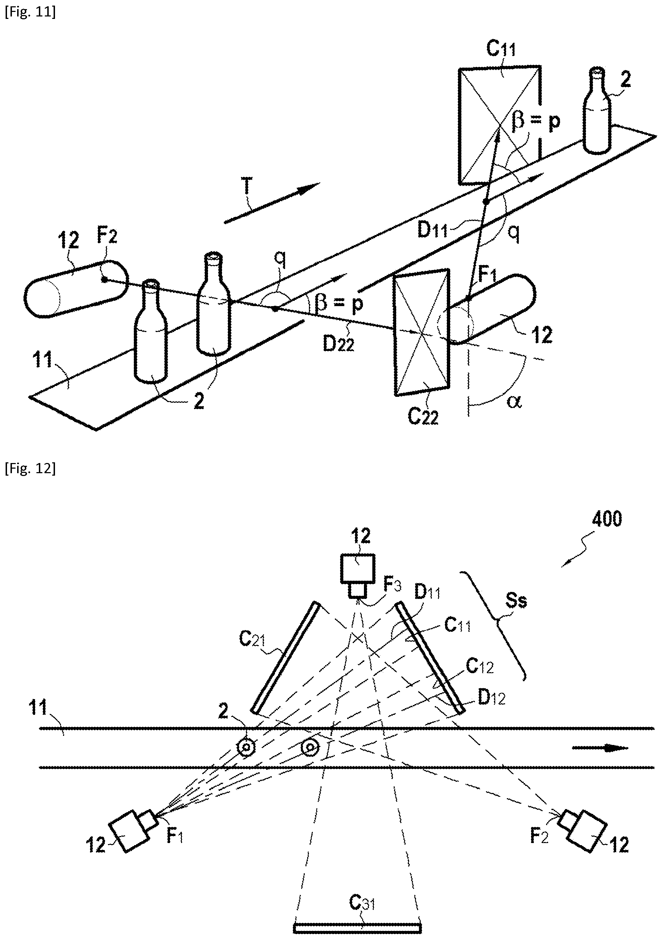

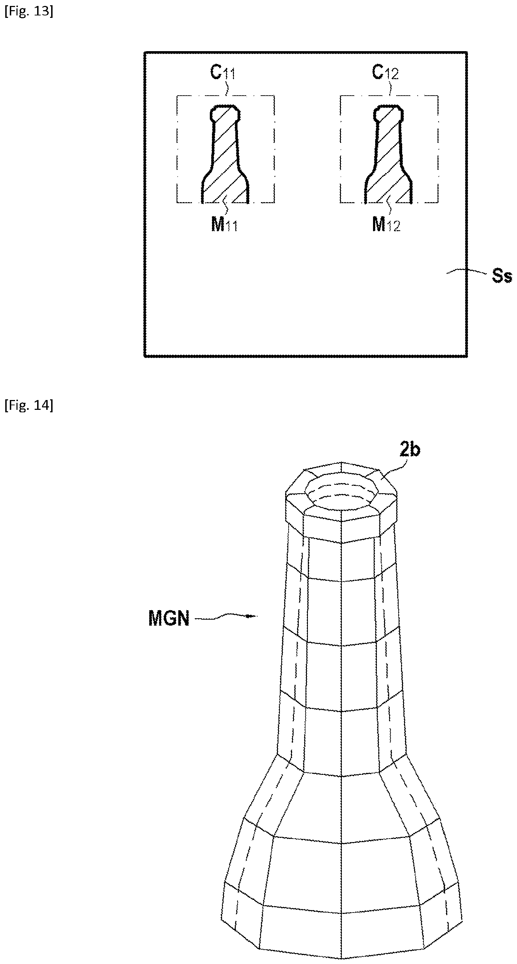

Une zone de surface sensible qui contient une matrice d'éléments sensibles constitue un capteur d'images matricielles, qui comporte un réseau matriciel d'éléments sensibles, distribués selon une matrice. Comme illustré à la **Fig. 12,** selon cette définition, une zone de surface sensible matricielle **C11, C12,** qui appartient à une plus grande surface sensible **Ss,** et qui est acquise et transmise séparément par le dispositif d'acquisition est un capteur d'images matricielles. Plusieurs zones de surface sensible matricielles **C11, C12** d'une même surface, acquises et transmises séparément par le dispositif d'acquisition constituent donc plusieurs capteurs d'images matricielles fournissant des images radiographiques différentes respectivement **M11, M12** (**Fig. 13**). Dans le cas d'une image radiographique, la direction **D11, D12** de projection associée à l'image radiographique matricielle respectivement **M11, M12** est la direction partant du foyer **F1** et passant par le milieu de la zone **C11, C12** de surface sensible matricielle, à l'instant de l'acquisition de l'image. Il est possible donc que les capteurs d'images **C11, C12** soient des régions non disjointes activées successivement dans le temps.

Bien entendu, dans le cas d'un capteur d'images radiographiques, l'homme du métier peut utiliser une technologie de capteur matriciel basé sur un amplificateur de brillance ou bien une « caméra à reprise d'écran » dans laquelle une plaque de scintillateur reçoit l'image radiante, la convertit en lumière visible, l'image visible à l'arrière du scintillateur étant photographiée par une caméra sensible dans le domaine d'émission du scintillateur, généralement le domaine visible, et munie si besoin d'un objectif.

Tel que cela ressort des Figures, l'objet de l'invention est une ligne de contrôle **100** de récipients vides, en verre, appartenant à une série.

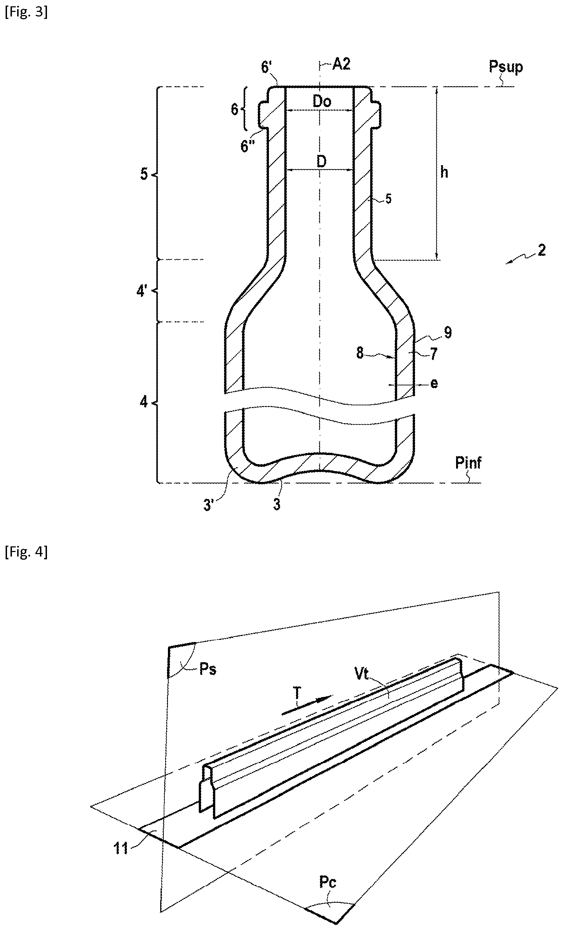

De manière générale, un récipient **2** présente un axe central **A2,** qui peut être un axe de symétrie, voir un axe de symétrie de révolution. Ainsi comme illustré à la Fig. 3, un récipient **2** présente une paroi de verre **7** délimitée intérieurement par une surface interne **8** et extérieurement par une surface externe **9**. La paroi **7** possède entre la surface interne **8** et la surface externe **9** une épaisseur « **e** ». De manière classique, un récipient **2** est un objet creux dont la paroi **7** forme, de bas en haut le long de l'axe central **A2,** un fond **3** raccordé à un talon **3'** à partir duquel s'élève un corps **4** se prolongeant par une épaule **4'** raccordée à un goulot ou col **5** terminé par une bague **6** délimitant l'embouchure permettant de remplir ou de vider le récipient. Dans le cas des bouteilles et de certains flacons, par opposition aux pots, le goulot **5** correspond à une portion de diamètre rétrécit du récipient par rapport au corps **4**. L'épaule **4'** est une portion de raccordement entre le corps **4** et le goulot **5**. Pour certains pots et certains autres flacons, l'épaule **4'** raccorde directement le corps **4** à la bague **6**. La partie supérieure du goulot **5** est formée par la bague qui comprend la surface de bague **6',** qui est une face transversale, perpendiculaire à l'axe central **A2** du récipient, à l'extrémité supérieure de la bague **6**. La bague **6** comprend généralement une collerette **6"** qui est en saillie radialement vers l'extérieur par rapport au goulot **5.** L'extrémité inférieure d'une telle collerette **6"** forme une surface annulaire transversale tournée axialement vers le bas, appelée contre-bague, et qui délimite l'extrémité inférieure de la bague **6.** Dans le présent texte, le goulot **5** comporte la bague **6,** donc aussi la surface de bague **6'** et la collerette **6"** et sa contre bague. Le goulot **5** présente un diamètre interne D défini par la surface interne **8** de la paroi. Dans le présent texte, les notions de haut et de bas sont arbitraires et correspondent à l'orientation habituelle d'un récipient de type pot ou bouteille qui repose par son fond **3** sur une surface horizontale. La surface de bague **6'** définit un plan supérieur **Psup** du récipient **2,** perpendiculaire à l'axe central **A2.** Le fond **3** du récipient **2** définit un plan inférieur **Pinf** du récipient, perpendiculaire à l'axe central **A2.** Dans la suite il est considéré que le contrôle du fond inclus le contrôle également du talon, voire également du bas du corps du récipient. On note d'ailleurs que, souvent, les glaçures situées dans le fond **3** sont des fentes qui remontent au talon **3',** et réciproquement.

La ligne de contrôle **100** comprend au moins trois installations **200, 300, 400** qui sont agencées chacune à des postes distincts les uns des autres le long d'une trajectoire de circulation des récipients.

Comme on peut le voir à la **Fig. 16,** la ligne de contrôle **100** comprend ainsi, au moins :

a) à un poste de contrôle de bague, une installation de contrôle de bague **200** capable de détecter sans contact, par rayons lumineux, des défauts de type glaçures dans le goulot des récipients ;
b) à un poste de contrôle de fond, une installation de contrôle de fond **300** capable de détecter sans contact, par rayons lumineux, des défauts de type glaçures dans le fond des récipients ; et
c) à un poste de mesure radiographique, une installation radiographique **400** de mesure automatique de dimensions linéaires d'au moins une région à inspecter de récipients.

Bien entendu, la ligne de contrôle **100** peut comporter d'autres postes et d'autres installations de contrôle ou de mesure des récipients. De même, l'une ou l'autre des installations peut, en plus du contrôle de glaçure ou de la mesure de dimensions linéaires, assurer d'autres contrôles ou d'autres mesures. Notamment, on a vu plus haut que l'installation de contrôle de fond **300** sera aussi de préférence capable de détecter sans contact, par rayons lumineux, de défauts de type glaçures dans le talon **3'** des récipients, voire encore plus préférentiellement dans une partie au moins du corps **4** des récipients, par exemple une partie inférieure du corps **4** des récipients.

La ligne de contrôle **100** comporte également un dispositif **11** de transport des récipients **2** selon la trajectoire de déplacement des récipients, avec une direction matérialisée par un vecteur **T** de déplacement.

Entre et dans lesdites installations, la trajectoire est de préférence contenue dans un plan de convoyage **Pc,** ici considéré comme étant horizontal et perpendiculaire à l'axe central **A2** des récipients.

Les trois postes de contrôle de bague, de contrôle de fond et de mesure radiographique, et donc les installations correspondantes sont agencées successivement l'un après l'autre sur la trajectoire des récipients dans la ligne de contrôle, donc le long du dispositif de transport **11,** soit dans l'ordre cité, comme illustré par exemple sur la **Fig. 16,** soit dans n'importe quel autre ordre.

Dans chacun des trois postes de contrôle de bague, de contrôle de fond et de mesure radiographique, et donc dans les installations correspondantes de contrôle de bague **100,** de contrôle de fond **200** et de mesure radiographique **400,** la trajectoire de déplacement est rectiligne et contenue dans un plan de convoyage.

De préférence, la trajectoire est contenue, entre lesdites installations et dans lesdites installations, donc le long de toute la ligne de contrôle **100,** dans un même plan de convoyage horizontal **Pc** perpendiculaire à l'axe central **A2** des récipients.

De préférence, la trajectoire déterminée par le dispositif **11** de transport est aussi rectiligne entre lesdites installations et dans lesdites installations, donc rectiligne le long de toute la ligne de contrôle **100.** Cependant, l'invention n'exclut pas la présence d'un changement de trajectoire ou de direction de trajectoire entre deux postes, donc entre deux installations. De même, l'invention n'exclut pas la présence d'un dispositif de type table de stockage entre deux postes, donc entre deux installations, où des récipients peuvent être accumulés.

Dans chacun des trois postes de contrôle de bague, de contrôle de fond et de mesure radiographique, et donc dans les installations correspondantes, les récipients ne sont pas soumis à une rotation contrôlée autour de leur axe central **A2.** On entend par là qu'il est possible qu'une rotation des récipients autour de leur axe central **A2** puisse survenir, mais de manière non contrôlée, par exemple par la faute d'un contact avec des guides stationnaires du dispositif de transport **11.** De préférence, dans chacun des trois postes de contrôle de bague, de contrôle de fond et de mesure radiographique, et donc dans les installations correspondantes, et surtout dans les zones d'inspection de ces installations, les récipients sont immobiles en rotation autour de leur axe central **A2,** tout en se déplaçant le long de la trajectoire de déplacement. De préférence, dans chacun des trois postes de contrôle de bague, de contrôle de fond et de mesure radiographique, et donc dans les installations correspondantes, et surtout dans les zones d'inspection de ces installations, les récipients ne subissent pas, en fonctionnement, d'arrêt de leur déplacement selon la trajectoire de déplacement. Cependant, il est généralement utile, voire nécessaire, de maîtriser l'espacement entre les articles, autrement dit l'intervalle libre entre deux récipients **2** successifs en défilement dans ligne de contrôle **100.**

Pour ce faire, si l'espacement des récipients en amont de la ligne de contrôle **100** est insuffisant, on peut utiliser un dispositif espaceur installé sur la trajectoire de déplacement des articles. Un tel dispositif espaceur, qui est connu par ailleurs et non décrit ici, fonctionne en créant une accélération des articles en aval par rapport à l'amont. De préférence selon une variante de l'invention, l'espacement des articles est créé le plus en amont possible dans la ligne de contrôle **100**. Lorsqu'un dispositif espaceur est nécessaire, il est installé de préférence le plus en amont possible de la ligne de contrôle **100**, et notamment en amont des installations **200**, **500**, **300** et **400**. Ainsi, une fois espacés en amont de la ligne de contrôle **100**, ou en amont dans la ligne de contrôle **100**, les récipients ne subissent pas, en fonctionnement, d'accélération ou de décélération de leur déplacement selon la trajectoire de déplacement. Le déplacement des récipients est alors stable et évite les incidents, collisions, chutes et accumulations, ce qui assure une cadence de production stable avec un débit optimal. Toutefois, si une des installations **200, 500, 300, 400** nécessitait un espacement supplémentaire, il est possible d'installer un dispositif espaceur en amont de cette installation, donc entre deux installations **200, 500, 300** ou **400**.

Le dispositif de transport **11** est formé, à chacun des postes, par un tronçon associé **112, 113, 114** du dispositif de transport qui assure le transport de chaque récipient à travers le poste en étant en contact avec récipient.

Comme on le verra plus précisément par la suite, un parmi les tronçons de convoyage associés respectivement aux postes de contrôle de bague, de contrôle de fond et de mesure radiographique, assure un contact avec une première région de contact des récipients, tandis qu'un autre parmi le tronçons de convoyage associés respectivement aux postes de contrôle de bague, de contrôle de fond et de mesure radiographique, assure un contact avec une deuxième région de contact des récipients qui est distincte de la première région de contact.

Dans l'exemple de la **Fig. 16**, on note ainsi qu'au moins un des tronçons de convoyage, en l'occurrence les deux tronçons de convoyage **112, 114** associés respectivement aux postes de contrôle de bague **200** et de mesure radiographique **400,** assure un contact avec une première région de contact des récipients. Un tel tronçon est ici sous la forme d'un convoyeur à tapis **112, 114** en contact avec le fond **3** de récipients **2**, tandis que le tronçon de convoyage **113** associé au poste de contrôle de fond **300** est réalisé sous la forme d'un convoyeur à courroies latérales qui assure un contact avec le corps **4** des récipients **2.**

On note que, dans ce mode de réalisation, deux des tronçons de convoyage associés respectivement à des postes différents, ici les postes de contrôle de bague **200** et de mesure radiographique **400**, assurent un contact avec une même région de contact des récipients, ici le fond **3** des récipients. Cependant, on pourrait avoir des configurations de ligne de contrôle dans lesquelles les trois tronçons de convoyage associés respectivement aux postes de contrôle de bague **200,** de contrôle de fond **300** et de mesure radiographique **400** assureraient un contact avec trois régions de contact différentes des récipients **2**.

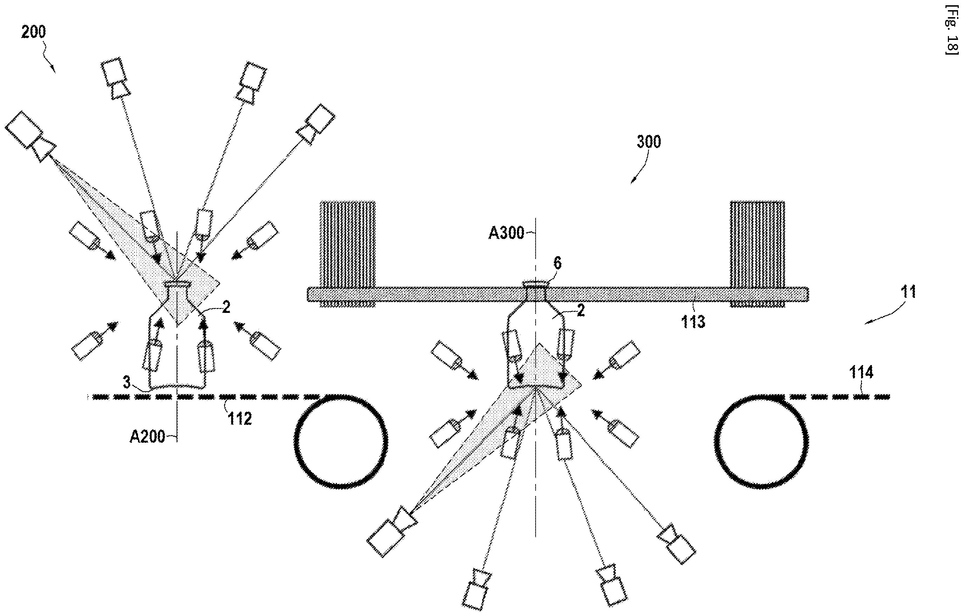

Dans l'exemple de la **Fig. 18**, le tronçon de convoyage **112** associé au poste de contrôle de bague **200** est sous la forme d'un convoyeur à tapis ou à chaîne, en contact avec le fond **3** de récipients **2**, tandis que le tronçon de convoyage **113** associé au poste de contrôle de fond **300** est réalisé sous la forme d'un convoyeur qui assure un contact avec le goulot des récipients, par exemple avec la partie de la bague **6** du récipient qui est appelée contre-bague. Selon d'autres variantes, l'un ou l'autre des tronçons de convoyage pourrait assurer un contact avec le goulot, ou avec la bague.

Sur la **Fig. 16** on a illustré une ligne de contrôle **100** qui comporte, à un poste de contrôle d'épaule et/ou de corps, distinct des postes de contrôle de bague, de contrôle de fond et de mesure radiographique, une installation **500** de contrôle d'épaule et/ou de corps capable de détecter sans contact, par rayons lumineux, de défauts de type glaçures dans l'épaule et/ou le corps des récipients. Dans cet exemple, le poste de contrôle d'épaule et/ou de corps **500** est agencé entre des postes de contrôle de bague **200** et de contrôle de fond **300**, mais d'autres ordonnancements sont possibles. Dans cet exemple, le poste de contrôle d'épaule et/ou de corps est associé à un tronçon de convoyage qui est en fait la continuité d'un tronçon de convoyage associé à un poste adjacent, ici le poste immédiatement précédent, à savoir dans l'exemple un tapis de convoyage sur lequel les récipients reposent par leur fond **3**. Cependant, le poste de contrôle d'épaule et/ou de corps pourrait avoir un tronçon de convoyage associé différent des deux tronçons de convoyage associés aux deux postes adjacents, voir différent de tous les autres tronçons de convoyage associés aux autres postes de la ligne de contrôle **100**.

Dans une ligne de contrôle **100** selon l'invention, les installations de contrôle de bague **200**, de contrôle de fond **300** et l'éventuelle installation de contrôle de corps et/ou d'épaules **500** présentent des points communs qui seront décrits conjointement, en mettant en lumière d'éventuels aspects différenciants entre elles. Ces trois installations sont des installations qui sont capables de détecter sans contact, par rayons lumineux, de défauts de type glaçures dans régions à inspecter correspondante des récipients, à savoir respectivement la bague **6**, le fond **3,** et le corps **4** et / ou l'épaule **4'** du récipient. Les rayons lumineux mis en oeuvre pour la détection sont dans le domaine photographique, de préférence avec une longueur d'onde comprise entre 100 nanomètres et 20 microns, plus préférentiellement dans le domaine photographique visible avec des longueurs d'ondes comprises entre 380 et 800 nanomètres.

Les glaçures sont des défauts qui ont la forme de crevasses dans l'épaisseur de la paroi du récipient. Une glaçure peut être une crevasse traversante sur l'épaisseur de la paroi, allant alors de la surface interne **8** à la surface externe **9** de la paroi. Cependant, elle est généralement une crevasse non-traversante qui débouche généralement dans au moins une des deux surfaces interne **8** ou externe **9**. Une glaçure étant une crevasse, on peut la considérer comme étant délimitée par deux éléments de surfaces du matériau de la paroi du récipient. Ces deux éléments de surface se font face et peuvent être généralement considérés comme étant parallèles l'un à l'autre, séparés par une couche fine, voire infinitésimale, d'air. Ces éléments de surface, qui sont généralement non-plans, donc gauches, peuvent avoir des configurations et des orientations très variées par rapport à la zone de paroi de récipient dans laquelle la glaçure s'est formée. Pour définir l'orientation d'une glaçure, on doit d'abord faire une approximation en considérant que ces éléments de surface peuvent être approximés par un plan d'approximation ou par une série de plans d'approximation.

Dans le domaine des récipients en verre, l'homme du métier a pour habitude de distinguer des glaçures dites verticales et des glaçures dites horizontales, en fonction de leur orientation par rapport à l'axe central **A2** du récipient **2** qui est considéré comme vertical. Les glaçures dites verticales ont donc des éléments de surfaces ayant un plan d'approximation vertical ou présentant une inclinaison par rapport à verticale qui est inférieure à 45 degrés d'angle, de préférence inférieure à 30 degrés d'angle. L'inclinaison d'un plan par rapport à la verticale est définie comme l'angle aigu entre une normale à ce plan et un plan horizontal. On note qu'un plan vertical peut être un plan radial contenant l'axe central du récipient ou plan formant un angle avec un tel plan radial. Les glaçures dites horizontales ont donc des éléments de surfaces ayant un plan d'approximation horizontal ou présentant une inclinaison par rapport à l'horizontale qui est inférieure à 45 degrés d'angle, de préférence inférieure à 30 degrés d'angle. L'inclinaison d'un plan par rapport à l'horizontale est définie comme l'angle aigu entre une normale à ce plan et la direction verticale.

Le principe bien connu de détection des défauts de type glaçure qui est mis en oeuvre par les installations **200, 300** et **500** repose sur la détection de la réflexion spéculaire d'un faisceau incident.

Au moins pour la détection des glaçures verticales, il est généralement utilisé des émetteurs lumineux directifs émettant chacun un faisceau lumineux directif. Un faisceau incident directif est un faisceau de rayons lumineux ayant un axe de faisceau et dont les rayons sont contenus dans un angle solide d'éclairage autour de cet axe de faisceau, l'angle solide étant faible. L'angle solide du faisceau est l'angle solide d'un cône de section circulaire qui contient tous les rayons lumineux du faisceau. Pour simplifier, on convient de définir non pas l'angle solide en stéradian, mais l'angle de divergence du faisceau incident, dans un plan de mesure de divergence qui est un plan de section de l'angle solide contenant l'axe de l'angle solide. Généralement, on utilise un faisceau incident ayant, dans la zone d'inspection, un angle de divergence qui est inférieur à 30 degrés d'angle, de préférence inférieur à 25 degrés d'angle, encore plus préférentiellement inférieur à 20 degrés d'angle. Un faisceau incident directif peut être un faisceau laser ou autre faisceau à rayons parallèles défini par un axe de faisceau et un diamètre de faisceau. Un faisceau incident étroit peut être un faisceau de rayons divergents, ou un faisceau de rayons convergents dans la zone d'inspection.

De la sorte, un élément de surface du récipient qui est éclairé par un émetteur lumineux directif, en reçoit un faisceau comprenant des rayons lumineux selon des angles incidents proches, autrement dont dit des angles incidents dont la différence est inférieure à 30 degrés, voire 25 degrés, voire 20 degrés : c'est en ce sens qu'ils sont dits directifs. Plusieurs émetteurs lumineux directifs qui illumineraient une même surface portion de la surface externe du récipient permettent d'obtenir des angles incidents différents et éventuellement distincts de ceux issus d'un autre émetteur lumineux directif, les angles incidents étant adaptés à la mise en évidence de glaçures d'orientation variables par rapport à la surface externe du récipient.

La région de récipient qui est située dans la zone d'inspection et qui se trouve ainsi éclairée, par un émetteur lumineux directif donné, peut être comprise dans un cercle ayant un diamètre allant de 5 millimètres à 14. millimètres. LA région éclairée peut être rectangulaire, ayant par exemple une largeur horizontale allant jusqu'à 100 ou 120 millimètres pour couvrir une bague entière, et par exemple 60 millimètres de hauteur pour couvrir la hauteur d'une bague. Bien entendu, les bagues sont des généralement cylindres et l'on ne peut constater la forme rectangulaire du faisceau qu'en imaginant un plan éclairé orthogonal à l'axe du faisceau, positionné au voisinage de la surface de bague ou de l'axe central de du récipient dans la zone d'inspection.

La surface d'émission des émetteurs lumineux directifs est de préférence inscrite dans un cercle de diamètre comprise entre 4 millimètres et 30 millimètres.

Au moins un récepteur lumineux, mais généralement plusieurs récepteurs lumineux sont prévus pour recueillir la réflexion spéculaire d'un faisceau incident.

Du fait du caractère varié et largement aléatoire de l'orientation des glaçures, et du fait de l'utilisation de faisceaux incidents directifs au moins pour les glaçures verticales, il est nécessaire de prévoir plusieurs faisceaux incidents directifs et / ou plusieurs récepteurs pour pouvoir détecter une éventuelle glaçure dans la région à inspecter du récipient.

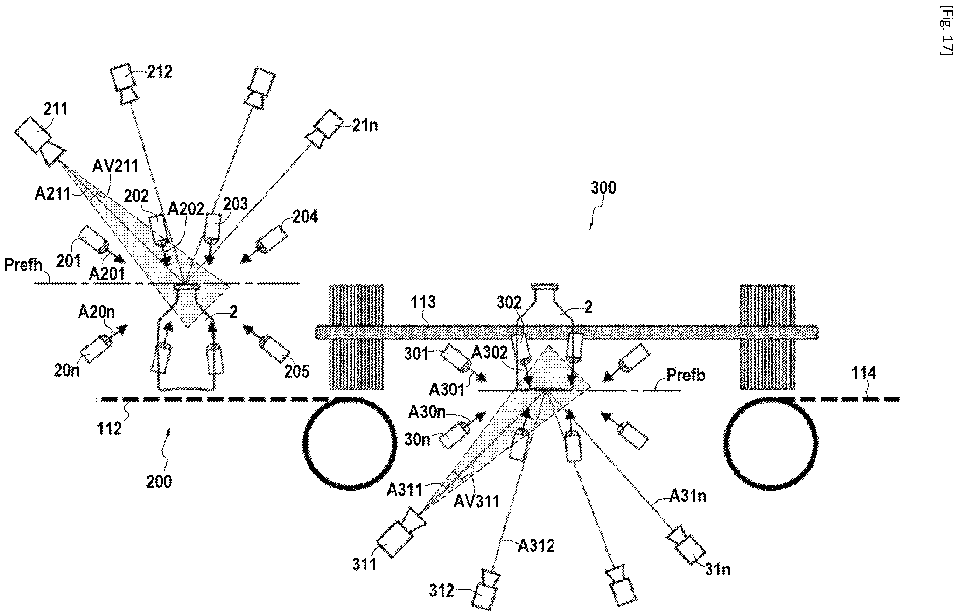

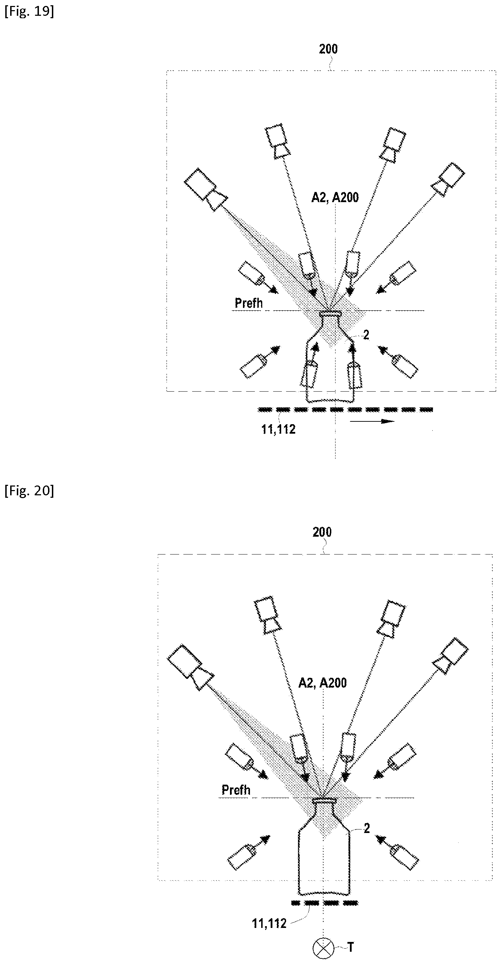

Des exemples de réalisation d'une installation de contrôle de bague **200** et d'une installation de contrôle **300** de fond sont illustrés schématiquement aux **Figs. 17** et **18**. Les **Figs. 19** et **20** sont des vues schématiques d'une installation de contrôle de bague **200**, respectivement en vue de côté par rapport à la trajectoire de déplacement des récipients, et selon une vue dans l'axe de la trajectoire de déplacement.

Chacune des installations de contrôle de bague **200**, de contrôle de fond **300** et de l'éventuelle installation de contrôle de corps et/ou d'épaule **500** comporte une zone d'inspection de l'installation dans laquelle doit être située la région à inspecter d'un récipient pour être inspecté. La zone d'inspection peut être allongée selon la direction de la trajectoire de déplacement. Dans chaque installation **200**, **300**, **500**, on peut définir un axe de référence **A200**, **A300**, **A500** destiné à coïncider avec l'axe central **A2** du récipient **A2** pour une position du récipient en cours d'inspection. Par exemple, on peut définir arbitrairement que cet axe de référence est agencé au milieu de la zone d'inspection le long de la trajectoire de déplacement des récipients. Cet axe de référence **A200**, **A300**, **A500** de l'installation peut servir comme étant l'indicateur de position du poste correspondant.

Dans chaque zone d'inspection, on peut définir un plan de référence, parallèle au plan de convoyage dans l'installation. Pour l'installation de contrôle de bague **200**, le plan de référence est un plan de référence haut **Prefh** destiné à coïncider avec le plan supérieur Psup du récipient **2** en cours d'inspection. Pour l'installation de contrôle de fond **300**, le plan de référence est un plan de référence bas **Prefb** destiné à coïncider avec le plan inférieur Pinf du récipient **2** en cours d'inspection. Pour l'installation de contrôle d'épaule et/ou de corps **500**, le plan de référence peut être un plan de référence intermédiaire, perpendiculaire à l'axe de référence **A500** de l'installation et destiné à couper l'épaule **4'** et/ou le corps **4** du récipient **2** en cours d'inspection.

Les zones d'inspections des installations de contrôle de bague **200**, de contrôle de fond **300** et de l'éventuelle installation de contrôle de corps et/ou d'épaule **500** sont de préférences disjointes selon la trajectoire de déplacement, donc sans chevauchement ou recoupement.

Chacune des installations de contrôle de bague **200**, de contrôle de fond **300** et de l'éventuelle installation de contrôle de corps et/ou d'épaules **500** comporte une série de plusieurs émetteurs lumineux directifs **201**, **202**, ..., **20n, 301, 302**, ..., **30n,** qui sont répartis angulairement autour de l'axe de référence **A200**, **A300**, **A500**, de l'installation et qui délivrent, en direction de la zone d'inspection de l'installation, chacun un faisceau lumineux directif selon un axe de faisceau **A201**, **A202**, ..., **A20n, A301, A302**, ..., **A30n,** qui lui est propre de manière que la zone d'inspection soit éclairée par les faisceaux lumineux directifs selon une multitude d'angles d'azimut distincts, en projection dans le plan de référence, autour de l'axe de référence de l'installation, et de préférence aussi selon une multitude d'angles d'élévation distincts par rapport au plan de référence. Chaque faisceau lumineux directif détermine donc un champ d'éclairage dans la zone d'inspection. Dans certains modes de réalisation, le champ d'éclairage d'un faisceau directif dans la zone d'inspection recouvre l'intégralité de la région à inspecter d'un objet situé dans cette zone d'inspection. Dans certains modes de réalisation, le champ d'éclairage d'un faisceau directif dans la zone d'inspection recouvre seulement une partie de la région à inspecter d'un objet situé dans cette zone d'inspection. De préférence plusieurs émetteurs lumineux **201**, **202**, ..., **20n, 301, 302**, ..., **30n** ont leurs champs d'éclairage qui se recoupent dans la zone d'inspection de l'installation, donc sur la région à inspecter du récipient à contrôler, tout en ayant des axes de faisceaux qui ont des orientations différentes en azimut autour de l'axe de référence, et possiblement aussi en élévation par rapport au plan de référence. De la sorte, un point donné de la zone d'inspection de l'installation, donc un point donné de la région à inspecter d'un objet situé dans la zone d'inspection, se trouve en position d'être éclairé par plusieurs émetteurs lumineux selon plusieurs directions d'axe de faisceaux, notamment différentes en azimut autour de l'axe de référence. De préférence, tous les points de la région à inspecter d'un objet situé dans la zone d'inspection se trouvent en position d'être éclairés par plusieurs émetteurs lumineux selon plusieurs directions d'axe de faisceau.

Un émetteur lumineux comporte une source lumineuse et généralement un dispositif de conditionnement optique qui se termine par une surface d'émission de lumière par laquelle le faisceau lumineux est émis en direction de la zone à inspecter. La source de lumière est par exemple une diode électroluminescente, un filament à incandescence, une source à arc électrique, ou une source electrofluorescente (néon, plasma, ...). Un dispositif de conditionnement peut comporter un ou plusieurs composants optiques parmi des lentilles optiques, des condenseurs optiques, des miroirs, des guides de lumière (notamment des fibres optiques), des iris, des masques, etc.... .... Par masque on entend une pièce opaque portant une découpe en son centre et destinée, par obstruction, à donner forme à un faisceau lumineux la traversant. Généralement, un émetteur lumineux directif comporte un dispositif de conditionnement qui comporte au moins une lentille optique ou au moins un condenseur optique. Un émetteur lumineux directif peut comporter un dispositif de conditionnement comportant un masque situé de manière à être projeté en étant conjugué optiquement avec la surface ou une portion de surface du récipient, afin que la zone éclairée soit délimitée. Un masque rectangulaire permet que la zone éclairée soit rectangulaire. La source de lumière et les composants optiques du dispositif de conditionnement optique sont des éléments optiques de l'émetteur lumineux. On pourra prévoir qu'un, ou plusieurs, ou tous les émetteur lumineux d'une installation aient leur propre source lumineuse individuelle, Cependant, on peut prévoir que plusieurs émetteurs lumineux partagent une source lumineuse commune. Dans ce cas, ils pourront avoir chacun leur propre dispositif de conditionnement, se terminant par une surface d'émission de lumière individuelle, même si les dispositifs de conditionnement de plusieurs émetteurs peuvent comporter un ou plusieurs composants optiques communs en amont de leur surface d'émission de lumière individuelle. Typiquement, une source commune peut être associée à un faisceau de fibres optiques comportant plusieurs fibres optiques, parmi lesquelles chaque fibre optique, ou chacun de plusieurs groupes de fibres optiques, appartient au dispositif de conditionnement d'un émetteur lumineux distinct. Un émetteur lumineux directif comporte généralement une surface d'émission de lumière de petite taille. La surface d'émission des émetteurs lumineux directifs est de préférence inscrite dans un cercle de diamètre comprise entre 4 millimètres et 30 millimètres.

Dans certains modes de réalisation, l'installation de contrôle peut comporter des émetteurs lumineux directifs **201, 202, ..., 20n, 301, 302, ..., 30n** qui sont répartis de manière que la zone d'inspection soit éclairée par les faisceaux lumineux directifs selon une multitude d'angles d'élévation distincts par rapport au plan de référence tout en étant du même côté du plan de référence de l'installation, c'est-à-dire en veillant que des faisceaux lumineux directifs ont leur axe de faisceau respectifs **A201, A202, ..., A20n, A301, A302, ..., A30n** répartis selon une multitude d'angles d'élévation distincts par rapport au plan de référence. L'angle d'élévation d'un faisceau lumineux directif est l'angle aigu formé par l'axe de faisceau avec le plan de référence. Deux faisceaux sont considérés du même côté du plan de référence si les surfaces d'émission des émetteurs lumineux directifs desquels ils émergent sont agencées du même côté du plan de référence.

De même, chacune des installations de contrôle de bague **200,** de contrôle de fond **300** et de l'éventuelle installation de contrôle de corps et/ou d'épaules **500** comporte plusieurs récepteurs lumineux **211, 212, ..., 21n, 311, 312, ..., 31n** qui sont répartis angulairement autour de l'axe de référence de l'installation et qui ont chacun un axe de vision **A211, A211, ..., A21n, A311, A312, ..., A31n** et un angle de champ de vision **AV211, AV311, ...,** autour de cet axe de vision. De préférence, plusieurs récepteurs lumineux ont leurs champs de vision qui se recoupent dans la région à inspecter, tout en ayant des axes de vision qui ont des orientations différentes. Typiquement, le champ de vision d'un récepteur lumineux couvre une partie de la région à inspecter de l'objet, ou l'intégralité de la région à inspecter de l'objet, selon un axe de vision. Par exemple, afin d'inspecter des bagues de diamètre 100 millimètres, le champ de vision d'un récepteur lumineux et de son dispositif de conditionnement présente de préférence une largeur horizontale supérieure à 100 millimètres dans la zone d'inspection, mesurée dans un plan vertical contenant l'axe de référence de l'installation et perpendiculaire à l'axe de vision. De la sorte, un point donné de la zone d'inspection de l'installation, donc un point donné de la région à inspecter d'un objet situé dans la zone d'inspection, se trouve en position d'être observé par plusieurs récepteurs lumineux selon plusieurs directions d'axe de vision. De préférence, tous les points de la région à inspecter d'un objet situé dans la zone d'inspection se trouvent en position d'être observés par plusieurs récepteurs lumineux selon plusieurs directions d'axe de vision.

Un récepteur lumineux **211, 212, ..., 21n, 311, 312, ..., 31n** comporte un capteur lumineux et généralement un dispositif de conditionnement optique associé qui se termine par une surface d'entrée de lumière par laquelle les rayons lumineux collectés entrent dans le récepteur lumineux en direction du capteur lumineux. Le capteur lumineux est par exemple un capteur photoélectrique, qui peut être par exemple de type CCD ou de type CMOS. Un dispositif de conditionnement optique peut comporter un ou plusieurs composants optiques parmi des lentilles optiques, des miroirs, des guides de lumière (notamment des fibres optiques), des iris, des masques, etc.... En d'autres termes, la zone sensible du capteur lumineux peut être agencée à distance de la surface d'entrée de lumière du récepteur lumineux, et peut de plus présenter une orientation différente. Le dispositif de conditionnement forme une image de la région à inspecter du récipient, ou une partie de la région à inspecter, sur le capteur lumineux, généralement une image linéaire ou bidimensionnelle. Il conjugue optiquement au moins une partie de surface externe du récipient avec la surface sensible du capteur. Il définit aussi l'axe de vision du récepteur lumineux. Le capteur lumineux et les composants optiques du dispositif de conditionnement optique sont des éléments optiques du récepteur lumineux **211, 212, ..., 21n, 311, 312, ..., 31n**. On pourra prévoir qu'un, ou plusieurs, ou tous les récepteurs lumineux **211, 212, ..., 21n, 311, 312, ..., 31n** d'une installation aient leur propre capteur lumineux individuel. Cependant, on peut prévoir que plusieurs récepteurs lumineux partagent un capteur lumineux commun. Dans ce cas, les récepteurs lumineux à capteur lumineux commun pourront avoir chacun leur propre dispositif de conditionnement optique, se terminant par une surface d'émission d'entrée individuelle, même si les dispositifs de conditionnement de plusieurs émetteurs peuvent comporter un ou plusieurs composants optiques communs en aval de leur surface d'entrée de lumière individuelle.

Pour assurer la détection des glaçures verticales dans une région à inspecter qui est associée à un plan de référence de l'installation, il est nécessaire de prévoir qu'au moins une partie des émetteurs lumineux directifs, tout au moins leur surface d'émission de lumière, soit agencés de l'autre côté du plan de référence par rapport aux récepteurs lumineux, tout du moins leur surface d'entrée, qui sont prévus pour recueillir, après réflexion spéculaire sur la glaçure, la lumière émise par les émetteurs lumineux directifs. Aussi, chacune des installations de contrôle de bague **200**, de contrôle de fond **300** et de l'éventuelle installation de contrôle de corps et/ou d'épaules **500** comporte des éléments optiques de part et d'autre du plan de référence associé, ces éléments optiques appartenant soit à des émetteur lumineux de l'installation soit à des récepteurs lumineux **211, 212, ..., 21n, 311, 312, ..., 31n** de l'installation.

Pour assurer la détection des glaçures horizontales dans une région à inspecter qui est associée à un plan de référence à l'installation, il est nécessaire de prévoir qu'au moins une partie des récepteurs lumineux soit agencés du même côté du plan de référence que le ou les émetteurs. On notera, que, pour assurer la détection des glaçures horizontale, il est possible d'utiliser un éclairage, diffus, donc non directif. On pourra prévoir un éclairage diffus par la présence d'un ou plusieurs émetteurs lumineux. On peut utiliser un ou plusieurs émetteurs lumineux ayant une surface d'émission de lumière de grande taille, non ponctuelle. Pour assurer la détection des glaçures horizontales, l'installation peut comporter un diffuseur de grande taille derrière lequel sont agencées une ou plusieurs sources lumineuses.

Pour assurer à la fois la détection des glaçures verticales et des glaçures horizontales, une installation devra donc avoir au moins des éléments optiques de récepteurs lumineux de part et d'autre du plan de référence, ou au moins au moins des éléments optiques d'émetteurs lumineux de part et d'autre du plan de référence, ou les deux. Par exemple, une telle installation aura des émetteurs lumineux agencés d'un seul côté du plan de référence, mais des récepteurs lumineux agencés des deux côté du plan de référence, ou inversement.

Aussi, chacune des installations de contrôle de bague **200**, de contrôle de fond **300** et de l'éventuelle installation de contrôle de corps et/ou d'épaules **500** comporte des éléments optiques agencés de part et d'autre du plan de référence associé, ces éléments optiques appartenant soit à des émetteur lumineux de l'installation soit à des récepteurs lumineux de l'installation, soit à des émetteurs et à des récepteurs.

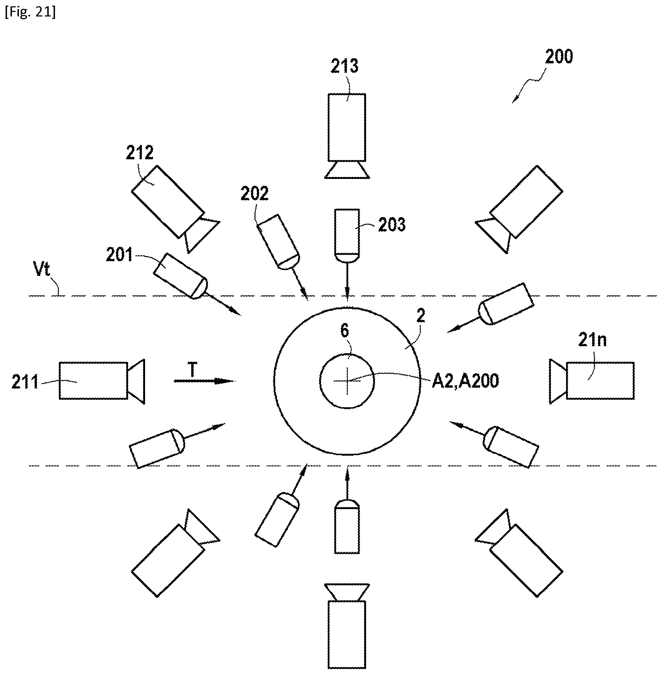

Dans les exemples des **Figs. 16** à **21**, l'installation de contrôle de bague **200** comporte des éléments optiques d'émetteurs lumineux **201, 202, ..., 20n,** qui sont agencés de part et d'autre des deux côtés du plan de référence haut **Prefh**, mais des récepteurs lumineux **211, 212, ..., 21n** qui sont agencés tous au-dessus du plan de référence haut.

Dans les exemples des **Figs. 16** à **18**, l'installation de contrôle de fond **300** comporte des éléments d'émetteurs lumineux **301, 302, ..., 30n** qui sont agencés de part et d'autre des deux côtés du plan de référence bas **Prefb**, mais des récepteurs lumineux **311, 312, ..., 31n** qui sont agencés tous en-dessous du plan de référence bas.

En revanche, on voit clairement sur la **Fig. 20** que l'installation ne comporte aucun élément d'émetteur lumineux ou de récepteur lumineux qui soit agencé dans le volume de convoyage **Vt**. Dans le cas où la trajectoire des récipients au travers de l'installation est une trajectoire plane dans un plan parallèle au plan de référence, ce qui est le cas illustré, cela conduit nécessairement à limiter la possibilité de disposer des éléments d'émetteur lumineux ou de récepteur lumineux dans la partie que est située du même côté du plan de référence que le volume de convoyage. Cela conduit notamment à former un volume tunnel d'entrée et un volume tunnel de sortie de l'installation, volume dans lequel il n'est pas possible d'agencer d'élément d'émetteur lumineux ou de récepteur lumineux.

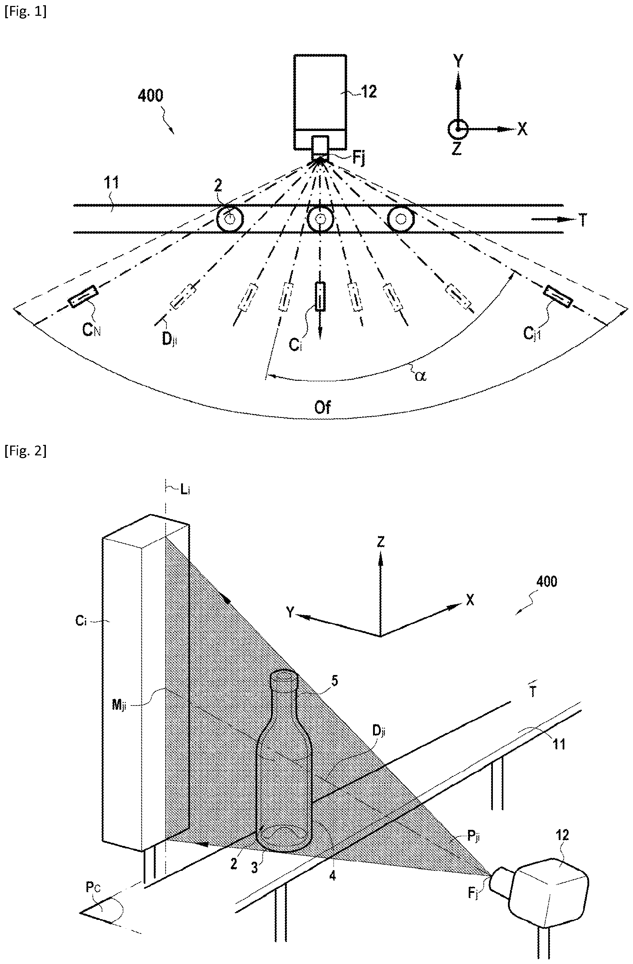

L'installation radiographique **400** de mesure automatique de dimensions linéaires d'au moins une région à inspecter de récipients, permettant la mise en oeuvre d'un procédé pour réaliser des mesures de dimensions sur des récipients vides en verre **2** sera maintenant décrite en relation avec les **Figs. 1** à **15.**

Selon une caractéristique avantageuse de réalisation, au moins une région du récipient est choisie pour être inspectée de manière à pouvoir réaliser des mesures de dimensions dans cette région du récipient, correspondant à une caractéristique dimensionnelle de la région à inspecter. Typiquement, la région à inspecter, pour cette installation radiographique **400** de mesure, peut comprendre au moins le goulot **5** du récipient et la mesure d'une caractéristique dimensionnelle de cette région à inspecter correspond au moins au diamètre interne D du goulot. De même, la région à inspecter peut comprendre au moins une portion de la paroi du corps **4** comprise entre le talon et l'épaule et délimitée par exemple par deux plans parallèles au plan de pose du récipient, et la mesure d'une caractéristique dimensionnelle de cette région à inspecter correspond à l'épaisseur e de la paroi de verre comprise entre les surfaces interne **8** et externe **9** délimitant cette paroi **7**. Cette installation radiographique **400** est donc tout particulièrement adaptée à mesurer des dimensions en relation avec la surface interne de la paroi au niveau du goulot et/ou du corps du récipient. Ainsi, le procédé selon l'invention permet de mesurer au moins soit un diamètre interne du goulot soit une épaisseur de la paroi de verre soit un diamètre interne du goulot et une épaisseur de la paroi de verre.

De même, la région à inspecter peut correspondre à une partie de la paroi **7** comprenant le corps, le talon ou le fond du récipient. La région à inspecter peut correspondre aussi à la totalité du récipient **2**. Les dimensions mesurées sont des épaisseurs de paroi de verre au corps, au fond, au talon, des hauteurs, des diamètres internes ou externes, des largeurs par exemple pour des filets sur le goulot. Ces mesures permettent aussi de déduire une caractéristique dimensionnelle de la région à inspecter comme par exemple l'ovalisation du récipient ou un récipient à col penché.

Le procédé de mesure mis en oeuvre sera décrit pour des récipients **2** en verre, c'est-à-dire pour des séries d'objets manufacturés creux composés d'un seul matériau à savoir le verre. Il est considéré dans ce cas que le coefficient d'atténuation $\mu$ du verre est unique, c'est-à-dire ayant la même valeur en tout point d'une région à inspecter des récipients et de préférence constant dans le temps et identique pour les récipients de la série. Ces conditions sont remplies car la composition du verre est stable dans des fours produisant plusieurs centaines de tonnes de verre par jour. Il est à noter que le coefficient d'atténuation $\mu$ du verre est en toute rigueur une propriété spectrale $\mu(\lambda)$ selon la longueur d'onde $\lambda$ ou l'énergie

des rayons X. Cette caractéristique n'est pas nécessairement prise en compte dans le procédé selon l'invention dans la mesure où la source de rayons X ayant une composition spectrale émise propre, il est possible de considérer que l'atténuation μ est une caractéristique du verre pour le spectre de la source choisie.

De préférence, la topologie de l'objet est connue. Ceci revient à dire que l'on peut considérer qu'un rayon X traversant le récipient a traversé un nombre fini de volumes présentant des coefficients d'atténuation connus, donc que le trajet est décomposable en segments, chaque segment joignant deux points appartenant à des surfaces frontières du récipient, en parcourant une région d'atténuation constante, même si la longueur de ces segments n'est pas connue a priori. Autrement dit, la géométrie du récipient peut être décrite informatiquement a priori (avant la mesure) par une représentation constituée d'un ensemble de surfaces fermées, que l'on peut appeler surfaces frontières du récipient. Les surfaces frontières d'un récipient sont les surfaces d'interface entre le matériau du récipient et l'air.

L'homme du métier saura par ailleurs réaliser l'invention en utilisant toute méthode de prise en compte de l'atténuation spectrale des faisceaux. Il saura aussi adapter le spectre émis, par exemple en le durcissant.

En conséquence, l'atténuation de l'air peut être considérée négligeable devant celle du verre. L'atténuation d'un faisceau de rayons X traversant le récipient ne dépendra que d'une part, de ladite atténuation constante pour le spectre de rayons X émis, et d'autre part, de l'épaisseur cumulée de verre traversée. Alternativement, il est considéré que l'épaisseur d'air traversée est grande et uniforme pour tous les rayons X, elle peut donc être considérée comme connue. L'atténuation des rayons X due à l'air peut être soustraite de l'atténuation totale mesurée. Ainsi, on peut par exemple considérer que le niveau de gris dans chaque image radiographique, éventuellement corrigé, dépend uniquement et directement de l'épaisseur de verre traversée cumulée totale. Il est alors possible de déterminer avec précision des surfaces frontières qui sont les transitions entre l'air et le verre.

Ainsi, le système informatique **600** prend en compte le coefficient d'atténuation du verre des récipients en cours d'inspection pour cette opération de calcul. Avantageusement, l'installation **400** comporte un dispositif de mise à disposition pour le système informatique, du coefficient d'atténuation du verre des récipients, par exemple connu par les analyses du verre dans le four. Ce dispositif de mise à disposition peut être réalisé par une mémoire de masse, une interface homme machine ou par un réseau informatique filaire ou hertzien.

Classiquement, pour cette installation de mesure de dimensions linéaires **400,** le tronçon associé dispositif de transport **11** est par exemple un convoyeur à bande transporteuse ou à chaînes assurant une translation linéaire des récipients en position dressée c'est-à-dire avec une région de contact des récipients qui est constituée par le fond **3** des récipients en appui sur le convoyeur pour s'établir dans le plan de convoyage **Pc**.

L'installation radiographique **400** de mesure de dimensions linéaires permet la mise en oeuvre d'un procédé pour réaliser de manière automatique, des mesures de dimensions linéaires sur des récipients **2** se déplaçant en défilement à haute cadence.

En effet, l'invention concerne un contrôle dit « en ligne » d'une série de récipients, après une étape de transformation ou fabrication, afin de contrôler la qualité des récipients ou du procédé de transformation ou de fabrication.

La ligne de contrôle **100** dont font parties les installations **200, 300, 400, 500** fonctionne pour une cadence de défilement d'un flux de récipients **2.** Idéalement, la ligne de contrôle **100**, y compris l'installation **400** de mesure de dimensions linéaires est capable de traiter la production à la cadence de production, par exemple à plus de 100 objets par minute, de préférence plus de 300 objets par minute, et par exemple à une cadence d'au moins 600 récipients par minute.

Toutefois, notamment pour ce qui concerne l'installation radiographique **400** de mesure de dimensions linéaires, la durée de calcul peut excéder l'intervalle entre deux récipients. De même, les temps d'exposition des capteurs d'images radiographiques et de lecture peuvent être trop longs. De manière générale, si le flux le plus rapide ne peut pas être traité par une seule installation radiographique **400,** alors plusieurs installations radiographiques **400** peuvent être mises en oeuvre en parallèle contrôlant chacune une partie de la production. Ainsi il est possible de diviser le flux de production par exemple en deux parallèles inspectés par deux installations radiographiques **400** identiques ou similaires. Evidemment, il est préférable que le nombre de flux et donc d'installations radiographiques **400** reste faible.

L'installation radiographique **400** apporte une amélioration considérable grâce à la mesure de la surface interne et de l'épaisseur des parois, sans contact et en défilement des récipients, les opérations complexes de mise en rotation des articles telles que mises en oeuvre dans des carrousels sont supprimées. Cela permet également une cartographie d'épaisseur sur toute la périphérie et sur toute la hauteur de la région inspectée. Pour le contrôle du goulot, l'installation radiographique **400** permet des mesures dans le goulot, pour tous les récipients de la production, tandis que l'art antérieur ne réalise qu'un test de conformité binaire par gabarit ou de mesures sur quelques échantillons prélevés. Ces mesures permettent donc une observation des dérives du procédé de fabrication.

Tel que cela ressort plus précisément des **Figs. 1** et **2,** on prend, pour la commodité de cette description, la convention selon laquelle la direction de déplacement des récipients **2** s'établit selon un axe horizontal **X** d'un repère **X, Y, Z** comportant un axe vertical **Z** perpendiculaire à l'axe horizontal **X** et un axe transversal **Y** perpendiculaire à l'axe vertical **Z** et à l'axe horizontal **X**, et **X** et **Y** étant dans un plan parallèle au plan de convoyage **Pc** qui est horizontal.

Tel que cela ressort plus précisément de la **Fig. 4,** au cours de leur déplacement en translation, les récipients **2** génèrent ou traversent un volume dit de convoyage **Vt.** Le plan Ps est le plan sécant du volume de convoyage **Vt,** orthogonal au plan de convoyage **Pc** et parallèle à la direction de déplacement **T.** Par exemple, un plan médian sépare le volume en deux sous-volumes égaux. Le plan **Ps** est un plan vertical dans la mesure où le plan de convoyage est généralement horizontal.

L'installation radiographique **400** comporte également, comme illustré aux **Figs. 1** et **2,** au moins un foyer **Fj** (avec j variant de 1 à k) d'un tube **12** générateur de rayons X créant un faisceau divergent de rayons X dirigé pour traverser le volume de convoyage **Vt** et plus précisément traverser au moins la région à inspecter du récipient **2**. Il est à noter que, pour la présente description, le récipient **2** est en verre de sorte que la région à inspecter du récipient est réalisée dans un matériau dont le coefficient d'absorption en transmission est homogène pour un rayonnement X donné.

L'installation **400** comporte également au moins trois capteurs d'images radiographiques **Ci** (avec i variant de 1 à N, N supérieur ou égal à 3) sensibles aux rayons X et situés de manière à être exposés aux rayons X issus d'un foyer **Fj** associé et ayant traversé le volume de convoyage **Vt** et plus précisément, au moins la région à inspecter du récipient **2**. Bien entendu, le tube **12** et les capteurs d'images **Ci** sont situés en dehors du volume de convoyage **Vt** pour permettre le libre déplacement des récipients dans ce volume. Classiquement, les tubes **12** générateurs de rayons X et les capteurs d'images **Ci** sont placés dans une enceinte étanche aux rayons X, laquelle englobe de préférence l'ensemble du poste de mesure radiographique. Cette enceinte est donc disposée le long de la trajectoire de déplacement **T** de manière disjointe par rapport aux installations de contrôle de bague **200**, de contrôle de fond **300** et de l'éventuelle installation de contrôle de corps et/ou d'épaule **500**, et notamment disjointe de la zone d'inspection respective de ces installations.

Dans certains modes de réalisation, un capteur d'images **Ci** est associé à un unique foyer **Fj** dans le sens que, dans la mise en oeuvre de la méthode, ce capteur d'images **Ci** est prévu pour que les images qu'il délivre et qui sont prises en compte dans la méthode ne sont formées que de rayons issus du foyer **Fj** associé. Par exemple, l'installation peut être prévue pour que seuls des rayons issus d'un foyer donné puisse atteindre le capteur d'images associé, par exemple par la disposition de masques absorbants de manière adéquate. Selon un autre exemple, qui peut être combiné au précédent, il peut être prévu que l'acquisition d'images par un capteur d'image soit déclenchée uniquement lorsque seul le foyer associé unique est activé.

Les faisceaux de rayons X issus d'un foyer **Fj** associé à un capteur d'images radiographiques **Ci,** traversent au moins la région inspectée, et forment sur ledit capteur d'images radiographiques **Ci,** la projection radiographique de la région inspectée, selon une direction de projection radiographique **Dji** (**Figs. 1** et **2**). La direction de projection radiographique **Dji** est par convention la direction orientée du vecteur partant du foyer **Fj** pour passer par le centre Mi du capteur d'images **Ci**. Le ou les foyers **Fj** et les capteurs d'images **Ci** sont disposés de manière que chaque capteur d'images radiographique reçoive une projection radiographique de la région à inspecter selon au moins une direction de projection radiographique de la région à inspecter.

Cependant, dans certains modes de réalisation, plusieurs capteurs d'images peuvent être associés à un même foyer **Fj,** lequel est alors de préférence pulsé et synchronisé avec les lectures de chacun des capteurs **Ci** associés pour former des images radiographique selon les directions de projection **Dji** pour différentes valeurs de i. Alternativement dans d'autres modes de réalisation, plusieurs foyers **Fj** peuvent être associés à un même capteur d'images Ci, lesdits foyers **Fj** étant de préférence pulsés indépendamment à des instants différents et synchronisés avec les lectures du capteur **Ci** associé pour former des images radiographique selon les directions de projection **Dji,** pour différentes valeurs de **j.**

L'installation radiographique **400** comporte également un système d'acquisition relié aux capteurs d'images radiographique **Ci,** de manière à acquérir pour chaque récipient **2** au cours de son déplacement au travers du poste de mesure radiographique, au moins trois projections radiographiques de la région à inspecter présentant des directions de projection radiographiques différentes. Il est rappelé que la direction de projection radiographique associée à l'image radiographique obtenue est la direction partant du foyer et passant par le milieu de la zone de la surface sensible du capteur d'images, au moment de l'acquisition de l'image. Ainsi, les au moins trois projections radiographiques ont des directions de projections qui font deux à deux, un angle entre-elles.

Le système d'acquisition est relié au système informatique **600**. Selon une caractéristique avantageuse de réalisation, le système informatique enregistre à l'aide des capteurs d'images **Ci,** pour chaque récipient au cours de son déplacement, des images radiographiques issues d'un nombre déterminé de projections radiographiques de la région à inspecter selon des directions de projection radiographiques différentes. Typiquement, le nombre de directions de projection radiographiques **Dji** différentes est compris entre trois et quarante, et de préférence entre quatre et quinze. Selon une variante avantageuse de réalisation, l'installation **400** comporte entre trois et quarante capteurs d'images radiographiques **Ci**. Selon une variante préférée de réalisation, l'installation **400** comporte entre quatre et quinze capteurs d'images radiographiques **Ci**.

Comme cela sera expliqué en détail dans la suite de la description, le système informatique **600** est programmé pour analyser, pour chaque récipient, les au moins trois images radiographiques issues des au moins trois projections radiographiques de directions différentes de manière à déterminer, pour chaque récipient, un modèle géométrique numérique de la région à inspecter contenant les coordonnées tridimensionnelles d'un ensemble de points appartenant à la paroi du récipient dans la région inspectée. Plus précisément, chaque modèle géométrique numérique contient les coordonnées tridimensionnelles d'un ensemble de points appartenant au moins à la surface interne de la paroi du récipient et de préférence, à la surface interne et à la surface externe de la paroi du récipient. La détermination des coordonnées tridimensionnelles de ces points permet de réaliser des mesures dimensionnelles du récipient pour la région inspectée, à savoir au moins un diamètre interne du goulot ou au moins une épaisseur de la paroi de verre du corps **4** du récipient ou au moins un diamètre interne du goulot et une épaisseur de la paroi de verre du corps du récipient.

La détermination des coordonnées tridimensionnelles de ces points et la réalisation des mesures dimensionnelles peuvent être réalisées de toute manière appropriée par les techniques connues d'analyse de données géométriques tridimensionnelles.

D'une manière générale, le modèle géométrique numérique de la région à inspecter contient les coordonnées tridimensionnelles d'un ensemble de points, calculées à partir des au moins trois images radiographiques de la région à inspecter. Cet ensemble de points appartient à la surface interne et/ou externe de la paroi du récipient, avec au moins deux points tridimensionnels de l'espace situés dans un plan non orthogonal à une direction de projection radiographique **Dji.**

Avantageusement, le modèle géométrique numérique de la région à inspecter contenant les coordonnées tridimensionnelles d'un ensemble de points est constitué par :

- au moins deux points tridimensionnels de l'espace appartenant chacun à une surface interne et/ou externe de la paroi du récipient et non-situés dans un plan orthogonal à une direction de projection radiographique **Dji,** ni situés dans un plan non parallèle à la direction **T** de déplacement ;
- et/ou au moins une représentation surfacique des surfaces interne et externe de la paroi du récipient contenant des points n'appartenant pas à un plan orthogonal à une direction de projection radiographique **Dji,** et n'appartenant pas à un plan parallèle à la direction **T** de déplacement ;
- et/ou au moins une section de la région à inspecter, selon un plan différent d'un plan orthogonal à une direction de projection radiographique **Dji** et différent d'un plan parallèle à la direction **T** de déplacement.

Les mesures dimensionnelles s'effectuent ensuite selon l'une des méthodes décrites dans la suite de la description.

D'une manière générale, les mesures dimensionnelles réalisées sur le modèle géométrique numérique de chaque récipient concernent au moins un diamètre interne du goulot mesuré sur ledit modèle dans un plan non orthogonal à une direction de projection radiographique **Dji,** et/ou au moins une épaisseur de la paroi du corps mesurée sur ledit modèle dans un plan non orthogonal à une direction de projection radiographique **Dji.**

Un exemple préféré de réalisation comprend la détermination, pour chaque récipient, d'un modèle géométrique numérique représentant la surface interne et la surface externe du récipient dans la région à inspecter.

Selon cet exemple, l'analyse numérique des images radiographiques relatives à chaque récipient permet de construire pour chacun de ces récipients, un modèle géométrique numérique tridimensionnel. En d'autres termes, pour chaque récipient inspecté par radiographie, un modèle géométrique numérique tridimensionnel peut être construit à partir des images radiographiques correspondantes audit récipient. Eventuellement, ce modèle géométrique numérique peut être simplement un empilement de modèles géométriques numériques bidimensionnels. La réalisation d'un modèle géométrique numérique est la façon - en termes mathématique, graphique et de structure de données - dont des récipients tridimensionnels sont représentés et manipulés sous forme numérique dans une mémoire du système informatique **600**. Il est à considérer que dans certains de ces modes de réalisation, on peut déterminer autant de modèles géométriques numériques tridimensionnels qu'il y a d'objets radiographiés, et qu'il peut y avoir autant d'objets radiographiés que le nombre d'objets qui défilent sur le système de transport. En effet, une caractéristique de l'invention est qu'elle permet d'effectuer une mesure sur chacun des objets circulant dans l'installation, y compris à haute cadence.

La modélisation peut être volumique. Le récipient en verre peut donc être représenté par des voxels dont la valeur représente une quantité de matériau. Le voxel peut être plein, partiellement plein ou vide de matériau (dans ce cas c'est de l'air). Le modèle géométrique volumique peut être analysé pour localiser les surfaces frontières du récipient, par exemple en déterminant un ensemble de points représentatifs appartenant à ces surfaces frontières, et ensuite pour mesurer des dimensions linéaires telles que des longueurs ou des épaisseurs. Il peut aussi être transformé en modèle surfacique, c'est-à-dire dans lequel sont modélisées des surfaces frontières du récipient.

Il est possible, et même avantageux, d'obtenir un modèle surfacique directement à partir des images radiographiques c'est-à-dire sans passer par le calcul d'un modèle volumique.

Dans les modélisations surfaciques, un récipient est défini par au moins une surface tridimensionnelle, par exemple une surface tridimensionnelle correspondant à une surface frontière entre la matière du récipient et l'environnement extérieur (généralement l'air), ce qui permet d'appréhender les notions d'intérieur et d'extérieur du récipient. Généralement les surfaces tridimensionnelles se modélisent de plusieurs manières telles que par modélisation polygonale, par courbes ou surfaces paramétriques (cylindres, cônes, sphères, splines, ...) ou par subdivision de surfaces. A l'aide d'un maillage de polyèdres, par exemple des triangles, les surfaces tridimensionnelles des récipients sont représentées par des ensembles de facettes planes connexes par leurs arêtes.

Une section d'un récipient tridimensionnel est son intersection avec un plan. La section des surfaces tridimensionnelles sont des courbes bidimensionnelles dans le plan de section. La connaissance de ces courbes bidimensionnelles dans une succession de plans de coupe permet la reconstruction des surfaces tridimensionnelles.

Afin d'opérer des mesures de dimensions linéaires telles que des longueurs, il existe plusieurs approches. Une dimension linéaire est en effet une longueur mesurée le long d'une ligne. Cette ligne selon laquelle est mesurée la dimension linéaire peut être une ligne rectiligne, ou une ligne non rectiligne, par exemple une ligne courbe quelconque, une ligne circulaire, une ligne brisée, etc.... Cette ligne peut être une ligne plate, contenue dans un plan, ou une ligne tridimensionnelle qui n'est pas comprise dans un plan. L'installation radiographique **400** permet également de déterminer des angles et des coordonnées de points des surfaces du récipient dans un repère 2D ou 3D.

Dans une première méthode, dite volumique, il est possible de parcourir un modèle volumique suivant une droite ou un faisceau de droites et déterminer les voxels de frontière matière / air.

Dans une deuxième méthode, dite surfacique, il est possible de calculer un segment dont les extrémités sont les intersections d'une droite avec la surface frontière matière/air d'un modèle surfacique. Enfin, une méthode mixte consiste à transformer le modèle volumique en modèle surfacique, puis à appliquer la deuxième méthode.

Une troisième méthode consiste à déterminer dans un plan de coupe, la distance entre deux points d'une ou de deux courbes bidimensionnelles, toute courbe étant une frontière entre matière et air.

Un point tridimensionnel est un point dont sont connues les coordonnées dans l'espace tridimensionnel, dans un repère quelconque.

Ces trois méthodes précédentes sont des exemples de détermination d'une distance entre deux points tridimensionnels, pour déterminer une mesure de dimension linéaire.

Un objectif de l'invention est de réaliser des mesures plus complètes que celles rendues possibles par de simples images radiographiques bidimensionnelles. En effet, il est aisé, à l'aide d'un capteur d'images radiographiques matricielles, d'obtenir une image radiographique bidimensionnelle correspondant à une projection de la région inspectée et de mesurer des dimensions dans un plan orthogonal à la direction de projection dit « plan projeté ». De même, il est aisé, à l'aide d'un capteur d'images radiographiques linéaires, d'obtenir une image radiographique bidimensionnelle de la région inspectée, en juxtaposant les images radiographiques linéaires successives obtenues à l'aide d'un capteur d'images radiographiques linéaires Ci, pendant que le récipient traverse le plan de projection **Pji** non parallèle au déplacement, défini par un foyer **Fj** et le capteur linéaire Ci et de mesurer des dimensions de la région inspectées uniquement dans un plan projeté, qui est parallèle à la direction de déplacement. Mais par ces méthodes de simple radiographie, il est impossible de mesures des dimensions en dehors de plans projetés. En revanche, avec l'installation radiographique **400,** on peut mesurer des dimensions linéaires selon des directions qui ne sont ni contenues dans les plans projetés, ni parallèles aux plans projetés. En effet, lors du traitement d'une combinaison des images radiographiques selon au moins trois directions de projection différentes, on peut reconstruire et mesurer des dimensions selon pratiquement toutes les directions. Ceci est possible par toute méthode permettant la détermination de points tridimensionnels dans l'espace appartenant à une surface frontière incluse dans la région à inspecter du récipient. La reconstruction d'un modèle tridimensionnel de la région à inspecter, de type surfacique ou volumique ou à base de plans de coupe, est une méthode possible. En effet, on peut soit indirectement à partir d'un modèle surfacique ou volumique ou de plans de coupes, soit directement, déterminer au moins deux points tridimensionnels, voire de préférence des nuages de points tridimensionnels, répartis selon des directions non mesurables à partir des seules images radiographiques bidimensionnelles.

Le modèle géométrique numérique est donc composé d'éléments géométriques tels que points, segments, surfaces, volumes élémentaires, calculés à partir des projections radiographiques, en considérant pour calculer chaque élément, l'atténuation d'au moins certains rayons X ayant traversés ce point sur le récipient vide réel, dans le but que le modèle géométrique numérique soit une représentation fidèle de la géométrie du récipient vide réel, incluant des déformations par rapport à un récipient vide idéal. Autrement dit, les coordonnées des d'éléments géométriques sont déterminées en considérant que lesdites coordonnées ont modifié les projections radiographiques, même lorsque ces d'éléments géométriques ne sont distinguables dans aucune des projections radiographiques **2**D. Les mesures de dimensions sur le modèle géométrique numérique donnent donc des informations sur les dimensions de chaque récipient vide modélisé, à partir d'éléments géométriques distinguables dans aucune des projections radiographiques.

Dans les cas où le récipient en verre est composé d'un matériau unique, donc avec un coefficient d'atténuation constant ou considéré comme tel, il est avantageux de déterminer son modèle géométrique numérique sous la forme de surfaces. Il est possible de déterminer et représenter dans le modèle géométrique numérique par exemple, la surface interne du goulot du récipient. La région inspectée contient selon cet exemple, le goulot **3** et s'étend donc entre le plan de surface de bague **6** et un plan qui lui est parallèle. On peut alors mesurer le diamètre interne du goulot D. Plus exactement, on peut mesurer plusieurs diamètres internes du goulot D. En choisissant une hauteur donnée par exemple en choisissant un plan de coupe parallèle à la surface de la bague ou au fond du récipient, on peut mesurer plusieurs diamètres de **0** à **3**60° dans ce plan. Ainsi, il est possible de déterminer le diamètre à l'ouverture Do (ou embouchure), par exemple à **3** mm sous l'embouchure en positionnant un plan de coupe **3** mm sous la surface de bague. Il est aussi possible de déterminer un diamètre D minimum sur toute la hauteur h de la surface interne du goulot pour remplacer la mesure par brochage.

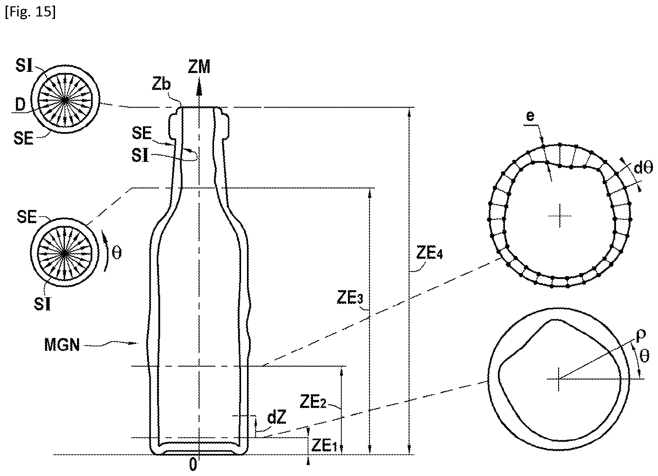

Étant donnée la géométrie des récipients, il est plus simple de raisonner en coordonnées cylindriques. Au moment de réaliser les mesures sur un récipient, le procédé a réalisé un modèle géométrique numérique MGN représentant précisément au moins la région à inspecter dudit récipient correspondant au goulot par exemple comme illustré à la **Fig. 14** ou comme illustré à la **Fig. 15,** une section verticale ou quatre sections horizontales du modèle géométrique numérique MGN du récipient.

On peut définir un repère de coordonnées cylindriques **ZM,** $\rho$**,** $\theta$ sur ce modèle géométrique numérique, avec l'axe **ZM** qui correspond à l'axe de symétrie dudit modèle de récipient, avec la hauteur **Z** selon l'axe **ZM** qui est égale à zéro lorsqu'elle est située dans le plan de pose. On peut dans le cas d'un récipient cylindrique ou conique définir **ZM** comme un axe orthogonal au plan de pose et passant par le centre du fond du récipient. De fait, le modèle géométrique numérique **MGN** d'un récipient comprend des surfaces internes **SI** et externes **SE**.

Selon une variante avantageuse pour la mesure du goulot de chaque récipient, le procédé consiste à mesurer sur le modèle géométrique numérique **MGN,** comme diamètres intérieurs **D** du goulot, les longueurs d'un ensemble de segments de droite, lesdits segments étant :

- orthogonaux à l'axe de symétrie **ZM** du modèle géométrique numérique,
- sécants avec l'axe de symétrie **ZM** du modèle géométrique numérique,
- situés à au moins deux hauteurs distinctes **ZG1, ZG2** dans le goulot du modèle géométrique numérique ;
- de directions réparties angulairement autour de l'axe de symétrie **ZM** du modèle géométrique numérique, avec au moins un segment non orthogonal aux directions de projection **Dji** ;
- pour chaque hauteur, en nombre supérieur au nombre de directions de projections **Dji** ;

- et chaque segment reliant deux points qui appartiennent à la surface interne du goulot du modèle géométrique numérique et qui sont opposés par rapport à l'axe de symétrie **ZM** du modèle géométrique numérique du récipient.

Il faut noter que les segments ne croiseraient exactement l'axe de symétrie **ZM** au sens mathématique, que dans le cas de récipients idéaux de révolution parfaite. Ceci n'est évidemment pas le cas puisque le modèle géométrique numérique représente un récipient réel.

L'installation radiographique **400** permet de réaliser en ligne, c'est-à-dire lorsque les récipients sont en translation rapide sur un convoyeur, et sans le contact d'un capteur mécanique ou pneumatique, plusieurs mesures qui sont nécessaires, selon les types de production, pour garantir la conformité du goulot.

Le brochage est la possibilité d'introduire dans le goulot un cylindre de diamètre minimum, par exemple la canule de remplissage. Pour mesurer le brochage, l'on peut déterminer, grâce à l'installation radiographique **400**, le diamètre minimum sur plusieurs hauteurs selon l'axe de symétrie **ZM** et selon plusieurs directions selon des angles $\theta$ variant de 0 à 360°. On peut également simuler l'introduction d'un cylindre, à l'intérieur de la surface interne du modèle géométrique numérique de chaque récipient, au niveau de son goulot, et déterminer le diamètre maximum que le cylindre atteint lorsqu'il est inscrit, donc en contact sans pouvoir grossir davantage, à l'intérieur de la surface interne du goulot ou d'un ensemble de points de ladite surface interne.

Comme illustré à la **Fig. 15,** on peut au moins pour deux hauteurs distinctes **ZE1, ZE2,** mesurer l'épaisseur e de la paroi le long de plusieurs segments radiaux orthogonaux à l'axe **ZM** et repartis de 0 à 360°. On réalise ainsi au minimum la même fonction que permettent les capteurs optiques dans une machine faisant tourner le récipient, à savoir, chercher l'épaisseur minimale sur la circonférence à une, deux, trois ou quatre hauteurs distinctes.

Le modèle géométrique numérique de la région inspectée de chaque récipient comprend les surfaces internes **SI** et externes **SE.** L'on peut donc déterminer l'épaisseur e en mesurant un grand nombre de segments joignant la surface externe **SE** et la surface interne **SI,** repartis uniformément sur toute la hauteur **Z** et les directions $\theta$**,** avec un pas de hauteur **dZ** et un pas angulaire **d**$\theta$ aussi fins que permis par la résolution des capteurs et du modèle géométrique numérique calculé pour chaque récipient. Ainsi, l'on peut cartographier l'épaisseur dans tout ou partie de la région d'inspection, voire d'un récipient entier.

On peut aussi calculer une épaisseur minimale sur la région à inspecter, ou bien déterminer une zone connexe de la paroi présentant une épaisseur inférieure à un seuil de tolérance appelée « zone mince » et l'on décide de la qualité du récipient en fonction de l'épaisseur minimale ou de la surface et/ou de la forme de la zone de la zone mince.

Selon une variante de réalisation, la région à inspecter dans cette installation radiographique **400** peut comprendre au moins une partie du goulot **5** du récipient de sorte que les images radiographiques sont analysées pour construire un modèle géométrique numérique d'au moins la surface interne du goulot de sorte que le diamètre interne du goulot **D** peut être mesuré à une ou plusieurs hauteurs et selon une ou plusieurs directions, et correspondre à la mesure d'une caractéristique dimensionnelle de la région à inspecter.

Selon une autre variante de réalisation, la région à inspecter dans cette installation radiographique **400** peut comprendre au moins une partie du corps **4** du récipient de sorte que les images radiographiques sont analysées de manière à construire un modèle géométrique numérique de la surface interne et de la surface externe du récipient dans la partie de paroi inspectée, et à partir des surfaces interne et externe du modèle géométrique numérique, à obtenir la mesure de l'épaisseur « **e** » de la paroi de verre du corps du récipient comprise entre lesdites surfaces.

Selon une variante préférée de réalisation, la région à inspecter comprend au moins une partie du goulot et une partie de la paroi du corps du récipient de sorte que les images radiographiques sont analysées de manière à construire un modèle géométrique numérique de la surface interne et de la surface externe du récipient, et à partir des surfaces interne et externe du modèle géométrique numérique, à obtenir les mesures d'un diamètre interne du goulot et de l'épaisseur de la paroi de verre du corps du récipient.

Certaines des méthodes de mesures précédentes reviennent à analyser la géométrie du modèle géométrique numérique de chaque récipient selon des sections successives à différentes hauteurs **Z**, de plans orthogonaux à l'axe de symétrie **ZM** du modèle géométrique numérique du récipient, donc des sections horizontales, qui sont analysées ensuite selon des directions radiales, en faisant varier la direction de mesure avec l'angle θ entre 0 et 360°. On obtient bien entendu les mêmes résultats par des coupes selon des plans sécants à l'axe de symétrie **ZM** des récipients, donc des sections verticales, reparties selon des angles θ entre 0 et 360°.

Selon une variante avantageuse de réalisation, le modèle géométrique numérique peut être construit également en utilisant un modèle géométrique a priori de la région inspectée permettant d'accélérer et fiabiliser les calculs de reconstruction du modèle géométrique numérique de chaque récipient.

Ainsi, le modèle géométrique a priori est un modèle numérique géométrique de la série de récipients, servant d'initialisation pour un logiciel de reconstruction afin de construire le modèle géométrique numérique de chaque récipient inspecté. Son rôle est principalement de fournir au système informatique, des informations sur la forme, la géométrie et les dimensions de l'objet à modéliser par le calcul.

Le système informatique dispose dans ce cas d'un modèle géométrique a priori de la région à inspecter pour effectuer cette opération de calcul. Ainsi, l'installation **400** peut comporter un dispositif de mise à disposition pour le système informatique, d'un modèle géométrique a priori de la région à inspecter pour les récipients ou des séries de récipients.

Le modèle géométrique a priori peut être obtenu par le modèle numérique de conception par ordinateur des récipients, réalisé lors de leur conception (CAO 3D), ou peut être obtenu d'un modèle numérique géométrique construit à partir de la mesure d'un ou de plusieurs récipients de la même série (donc de même modèle commercial) par un dispositif de mesure, par exemple par une machine à mesurer par palpeur ou un appareil de tomographie axiale, ou encore peut être généré par le système informatique à partir de valeurs saisies et/ou de dessins réalisés et/ou de formes sélectionnées par un opérateur sur l'interface homme-machine du système.

Il est possible de paramétrer le contrôle en mettant à disposition du système informatique des positions de jauges virtuelles. Dans ce cas le dispositif selon l'invention comporte évidemment des moyens de mise à disposition des intervalles de tolérances des mesures.

Un autre moyen de déterminer des mesures de dimensions et leur conformité est la comparaison du modèle géométrique numérique de la région inspectée avec un modèle géométrique de référence ou théorique.

Le modèle géométrique de référence est un modèle idéal de la série des récipients inspectés. Pour réaliser un contrôle dimensionnel, on peut comparer le modèle géométrique numérique de la région inspectée de chaque récipient avec le modèle géométrique de référence commun à la série de récipients, par un algorithme comprenant la mise en correspondance des modèles, puis la mesure des écarts entre les modèles. Le modèle géométrique de référence peut être issu de la CAO au moins pour la surface externe des récipients.

Selon une variante, le modèle géométrique de référence et le modèle géométrique a priori peuvent être le même modèle géométrique.

Il ressort de la description qui précède que le système informatique **600** détermine pour chaque récipient, au moins un diamètre interne du goulot et/ou une épaisseur de la paroi de verre du corps du récipient. D'une manière générale, l'installation radiographique **400** permet de réaliser une série de mesures de dimensions sur les récipients **2**. Le contrôle dimensionnel consiste à mesurer des dimensions réelles et à les comparer aux dimensions exigées. A priori, tout récipient d'une série est proche du récipient de référence idéal possédant les dimensions exigées mais s'en écarte par des variations dimensionnelles. L'objectif est généralement de comparer les mesures obtenues sur les récipients avec des valeurs exigées, par exemple définies par un service qualité. Ces mesures de dimensions ou les écarts de ces mesures par rapport aux valeurs exigées peuvent être affichées, enregistrées, etc. Elles peuvent aussi servir à prendre des décisions de conformité des récipients qui peuvent être triés automatiquement. Selon une caractéristique avantageuse de réalisation, le système informatique **600** est relié à un dispositif d'affichage des valeurs de mesures linéaires de la région à inspecter et/ou des écarts dimensionnels par rapport à des valeurs de référence. Par exemple, l'installation **400,** ou de manière plus générale la ligne de contrôle **100** selon l'invention, peut comporter un écran de visualisation des images radiographiques de la région inspectée et des dimensions mesurées.

Bien entendu, les positions relatives des foyers **Fj** et des capteurs d'images **Ci** sont diverses en étant rappelé que les foyers **Fj** et les capteurs d'images **Ci** sont positionnés en dehors du volume de convoyage **Vt**.

Selon une variante de réalisation, l'installation radiographique **400** comporte un seul foyer **Fj = F1** disposé selon un côté du volume de convoyage **Vt** et une série de capteurs d'images **Ci = C11, C12, C13,** ... disposés selon le côté opposé du volume de convoyage **Vt** pour recevoir les rayons provenant du foyer **F1** et ayant traversés la région à inspecter. Dans cet exemple, le foyer présente une ouverture **Of** qui est mesurée dans au moins un plan quelconque, comme par exemple le plan **X**, **Y** dans la **Fig. 1**, qui est supérieure ou égale à 90°. Cette ouverture **Of** est considérée en sortie de foyer, dans le cas où l'installation comprend, entre le foyer et le volume **Vt,** ou entre le volume **Vt** et les capteurs d'images, des écrans de limitation des faisceaux aux seuls faisceaux utiles, dans le but de réduire du diffusé.

Selon une autre variante de réalisation de l'installation radiographique **400,** au moins deux foyers **Fj** (**F1** et **F2**) de production de rayons X, sont positionnés séparément en deux positions distinctes et au moins trois capteurs d'images **Ci,** sensibles aux rayons X sont placés de manière que chaque foyer est associé à au moins un capteur d'images **Ci,** et que chaque capteur d'images **Ci** est associé à un foyer et reçoit les rayons X issus dudit foyer et traversant la région à inspecter. Dans cette variante, chaque foyer présente une ouverture supérieure ou égale à 45° de sorte que la somme des ouvertures des deux foyers est supérieure ou égale à 90°. Il peut ainsi être envisagé par exemple une installation radiographique **400** comportant par exemple un foyer d'ouverture Of supérieure ou égale à 120°, ou une installation radiographique **400** comportant deux foyers dont la somme des ouvertures est supérieure ou égale à 120°.

Dans l'exemple de réalisation illustré aux **Figs. 5** à **7,** l'installation radiographique **400** comporte trois foyers **F1, F2, F3** associés chacun à un tube **12** générateur distinct. L'installation radiographique **400** comporte aussi cinq capteurs d'images **C11, C12, C13, C14** et **C15** sensibles chacun aux rayons X issus du premier foyer associé **F1,** cinq capteurs d'images **C21, C22, C23, C24** et **C25** sensibles chacun aux rayons X issus du deuxième foyer associé **F2** et trois capteurs d'images **C31**, **C32**, **C33** sensibles chacun aux rayons X issus du troisième foyer associé **F3**.

Selon cet exemple de réalisation, l'installation radiographique **400** comporte au moins un foyer (et dans l'exemple, deux foyers **F1** et **F2**) de chacun desquels est issu un faisceau de rayons X divergent. Au moins un foyer (et dans l'exemple, deux foyers **F1** et **F2**) sont positionnés d'un côté du plan sécant Ps de sorte que chacun des faisceaux traverse le plan sécant Ps et la région à inspecter, tandis qu'au moins un capteur d'images **Ci** associé audit foyer **Fj** pour recevoir les rayons X issus dudit foyer **Fj** est disposé du côté opposé par rapport au plan sécant Ps. (Dans l'exemple, ce sont les cinq capteurs d'images **C11**, **C12**, **C13**, **C14** et **C15** sensibles chacun aux rayons X issus du foyer associé **F1** et les cinq capteurs d'images **C21**, **C22**, **C23**, **C24** et **C25** sensibles chacun aux rayons X issus du foyer associé **F2**). Bien entendu, il peut être prévu de disposer un foyer d'un côté du plan sécant Ps et un autre foyer de l'autre côté du plan sécant Ps de sorte que les capteurs d'images associés sont disposés également de part et d'autre du plan sécant Ps.

Selon une variante avantageuse de réalisation de l'installation radiographique **1** qui est illustrée aux **Figs. 5** à **7,** un foyer **Fj** duquel est issu un faisceau de rayons X divergent est disposé d'un côté du plan de convoyage **Pc** de sorte que son faisceau traverse le plan de convoyage **Pc,** tandis qu'au moins un capteur d'images **Ci** est associé audit foyer **Fj** pour recevoir les rayons X issus dudit foyer est positionné du côté opposé par rapport au plan de convoyage **Pc**. Dans l'exemple illustré, un foyer **F3** est disposé au-dessus du plan de convoyage **Pc** tandis que trois capteurs d'images **C31**, **C32**, **C33** sont positionnés au-dessous du plan de convoyage **Pc**. Bien entendu, la position entre le foyer et les capteurs d'images peut être inversée par rapport au plan de convoyage.

Selon une variante avantageuse de réalisation de l'installation radiographique **400**, au moins un des foyers **Fj** est disposé dans le plan de convoyage **Pc**. De préférence, ces foyers coopèrent avec des capteurs d'images associés situés à leur opposé par rapport au plan sécant Ps, et ainsi dans le cas d'un transport des récipients disposés sur un convoyeur plan, cette disposition permet que dans les images radiographiques, les projections des récipients ne soient pas superposées à la projection du convoyeur. Ainsi, dans le modèle géométrique numérique des récipients, la partie du récipient en contact avec le tronçon associé du convoyeur peut être déterminée précisément.

Selon une caractéristique avantageuse de réalisation, la disposition des capteurs d'images radiographiques **Ci** et des foyers est telle que les rayons X issus du ou des foyers **Fj** et atteignant les capteurs d'images **Ci** traversent uniquement une région à inspecter à la fois. En d'autres termes, les rayons X ne traversent qu'un seul récipient à la fois. Il est à noter que l'installation radiographique **400**, ou la ligne de contrôle **100** en général, peut comporter un système pour contrôler l'espacement entre les récipients successifs en défilement, comme par exemple des vis ou des courroies en contact latéral avec les récipients.

L'installation radiographique **400** permet d'obtenir un contrôle dimensionnel non seulement rapide, mais également peu coûteux, avec la précision nécessaire à un contrôle dimensionnel. Elle permet de réduire le nombre d'images nécessaires à la reconstruction au nombre minimum permettant d'atteindre la précision dimensionnelle voulue. Par exemple, elle permet, avec neuf projections et un nombre limité d'images de la région inspectée, de mesurer le diamètre interne d'un goulot à +/ 0,05 millimètre, ou l'épaisseur d'une paroi de récipient à +/- 0,02 millimètre. Avantageusement, l'installation radiographique **400** comporte entre un et quatre foyers **Fj**, et de préférence un ou deux foyers **Fj**, et de préférence entre quatre et quinze capteurs d'images radiographiques **Ci.**

Il convient de disposer les capteurs d'images radiographiques et le ou les foyers afin que la combinaison des au moins trois directions de projections optimise la détermination du modèle géométrique numérique de la région inspectée, en considérant qu'il faut laisser le volume traversé **Vt** libre pour la circulation des récipients. Les règles ci-après sont avantageusement mises en oeuvre, ces règles étant valables pour des capteurs d'images linéaires ou matricielles.

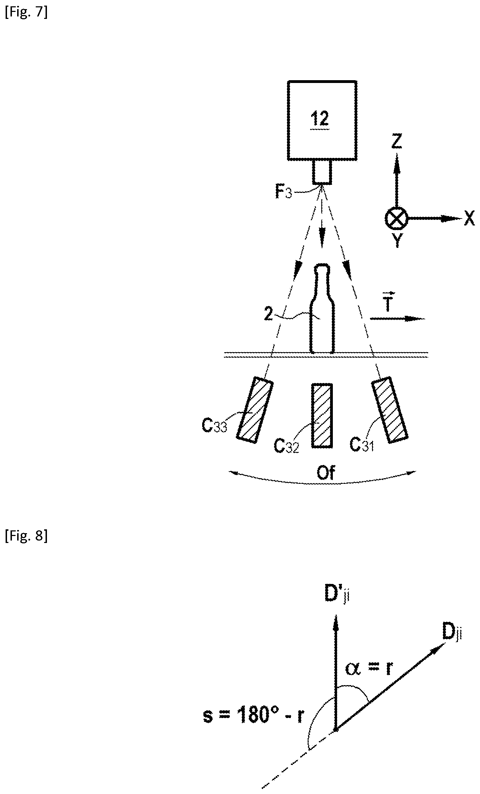

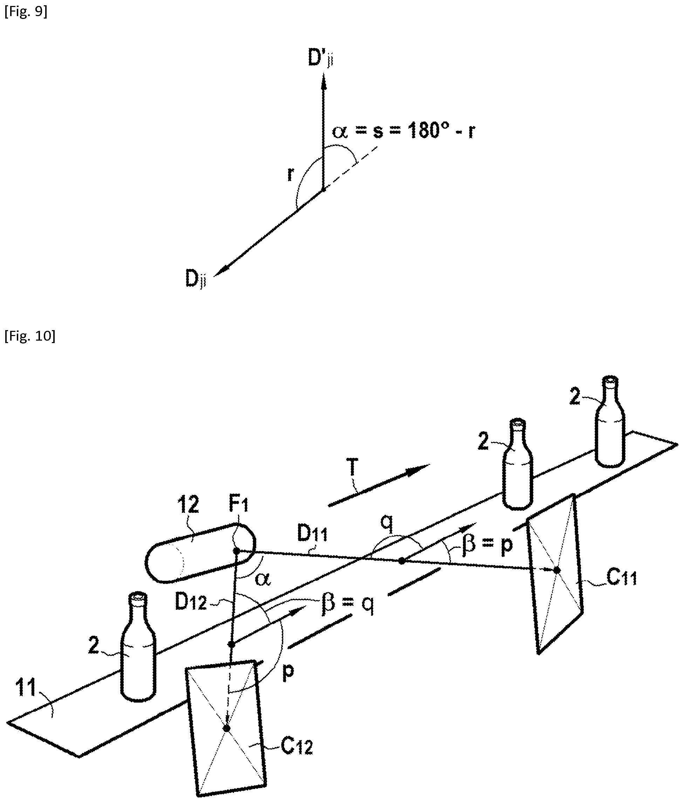

Dans ce qui suit, un angle est une valeur absolue. Les **Figs. 8** et **9** illustrent deux directions de projection radiographiques **Dji** et **D'ji** qui sont aussi des vecteurs. Ces Figures font apparaître l'angle r entre ces deux directions de projection radiographiques soit

$$r = (\widehat{Dij, D'ij})$$ et s l'angle complémentaire à l'angle r, soit s= 180°-r. Par définition, l'angle utile $\alpha$ entre deux directions de projection différentes **Dji** et **D'ji,** est le plus petit des angles r et s, soit $\alpha$ = Min(r, s). Ainsi, l'angle utile $\alpha$ est le plus petit des angles formés par les deux droites portant les directions de projection **Dji, D'ji** et ramenées en tout point de la région inspectée.

Selon une variante avantageuse, on acquiert pour chaque récipient, au moins deux images issues de deux projections radiographiques selon deux directions différentes radiographiques **Dji** et **D'ji** faisant entre elles un angle utile $\alpha$ supérieur ou égal à 45° et inférieur ou égal à 90°. Selon une variante avantageuse de réalisation, on acquiert pour chaque récipient au moins deux images issues de deux projections radiographiques selon deux directions différentes faisant entre elles un angle utile $\alpha$ supérieur ou égal à 60° et inférieur ou égal à 90°.

Pour ce faire, l'installation radiographique **400** comporte au moins un foyer et deux capteurs d'images disposés de manière que les directions de projection de la région inspectée qu'ils reçoivent possèdent entre elles un angle utile $\alpha$ supérieur ou égal à 45° et inférieur ou égal à 90° et, avantageusement supérieur ou égal à 60° et inférieur ou égal à 90°.

Par exemple comme illustré à la **Fig. 5,** l'angle utile $\alpha$ entre les directions **D15** et **D11,** et entre les directions **D13** et **D25** sont supérieurs à 45°. Bien évidemment il doit être compris qu'au moins un angle utile est supérieur ou égal à 45° et inférieur ou égal à 90° et avantageusement qu'au moins un angle utile est supérieur ou égal à 60° et inférieur ou égal à 90° et les autres angles utiles entre deux directions **Dji** sont quelconques. L'homme du métier à partir de cette règle saura rechercher une disposition qui offre une distribution la plus complète possible des directions de projections de la région inspectée.

Selon une autre caractéristique avantageuse, pour chaque récipient, le système informatique **600** acquiert au moins une image radiographique de la région inspectée correspondant à une direction de projection faisant un angle d'ouverture $\beta$ déterminée avec la direction de déplacement **T**.

Comme illustré sur les **Figs. 10** et **11,** il est considéré l'angle p entre une direction de projection (vecteur **Dji**) et la trajectoire des récipients (vecteur **T**), soit l'angle p = **(Dji, T)** c'est-à-dire p = **(D11, T)** et p = **(D12, T)** dans l'exemple illustré à la **Fig. 10** et p = **(D22, T)** et p = **(D11, T)** dans l'exemple illustré à la **Fig. 11**. L'angle q complémentaire à l'angle p est tel que q= **180°**-p. Par définition, l'angle d'ouverture $\beta$ entre une direction de projection **Dji** et la trajectoire T est le plus petit des angles p et q, à savoir $\beta$ = Min (p, q). Ainsi, l'angle d'ouverture $\beta$ est le plus petit des angles formés par les deux droites portant l'une la direction de projection **Dji** et l'autre la trajectoire T, ramenées en tout point de la région inspectée.

Selon une autre caractéristique avantageuse, pour chaque récipient, le système informatique acquiert au moins une image radiographique de la région inspectée correspondant à une direction de projection **Dji** ayant avec la direction de déplacement **T**, un angle d'ouverture $\beta$ compris entre **10°** et 60°. En d'autres termes, l'installation selon l'invention comporte au moins un foyer et un capteur d'images **Ci** disposés de manière que, lorsqu'un récipient traverse le champ des capteurs d'images, la direction de projection **Dji** de la région inspectée sur le capteur d'images **Ci** fait un angle d'ouverture $\beta$ avec la direction de déplacement **T** compris entre 10° et 60°.

En d'autres termes, la configuration de l'installation radiographique **400** est optimisée pour réduire son encombrement dans la direction de déplacement tout en conservant un volume traversé **Vt** adapté aux récipients et une bonne qualité de reconstruction.

En raison du volume traversé **Vt**, l'installation ne produit pas de projection autour de la direction de déplacement **T**. Le volume traversé **Vt** impose un angle beta minimum. Selon l'invention $\beta$ min = 10°. Il n'y a aucun capteur disposé de manière à fournir une projection d'angle $\beta$ inférieur à 10°.

Il faut déduire de ce qui précède que la répartition des angles de projections pour chaque récipient n'est pas uniforme selon l'invention.

Comme illustré à la **Fig. 9**, la répartition des angles de projection présente une lacune, qu'on appelle une région d'angle mort, de deux fois 10° soit 20°, au lieu d'avoir une couverture complète sur 180°.

Par exemple comme illustré à la **Fig. 10**, l'installation radiographique **400** comporte au moins un foyer **F1** et deux capteurs d'images **C11**, **C12** dont les directions de projections **D11**, **D12** définissent avec la direction de déplacement **T**, un angle d'ouverture β compris entre 10° et 60° correspondant respectivement aux angles p et q. Dans l'exemple illustré à la **Fig. 11**, l'installation radiographique **400** comporte au moins un capteur d'images **C11**, associé à un foyer **F1** et un capteur d'images **C22** associé à un foyer **F2**. Les directions de projections **D11**, **D22** définissent l'angle d'ouverture β peut ainsi être envisagé par exemple une installation radiographique **400** comportant par exemple un foyer d'ouverture **Of** supérieure ou égale à 120°, ou une installation radiographique **400** comportant deux foyers dont la somme des ouvertures est supérieure ou égale à 120°.compris entre 10° et 60° et correspondant aux angles p. De même, l'installation radiographique **400** illustrée à la **Fig. 5** comporte un capteur d'images **C11** associé au foyer **F1** et dont la direction de projection **D11** fait un angle d'ouverture β compris entre 10° et 60°, par rapport à la direction de déplacement **T**.

Les capteurs d'images radiographiques **Ci** sont du type matriciel ou linéaire.

Selon une variante préférée de réalisation, l'installation radiographique **400** comporte des capteurs d'images linéaires. Selon cette variante préférée, chaque capteur d'images radiographiques **Ci** comporte un réseau linéaire d'éléments sensibles radiographiques aux rayons X, distribués selon une droite de support **Li** définissant avec le foyer associé **Fj**, un plan de projection **Pji** contenant la direction de projection radiographique **Dji (Fig. 2)**. Ces capteurs d'images radiographiques **Ci** sont disposés de manière qu'au moins m éléments sensibles radiographiques de chacun de ces capteurs d'images radiographiques reçoivent la projection radiographique de la région à inspecter par le faisceau de rayons X issu du foyer **Fj** associé, avec les plans de projection **Pji** pour les différents capteurs d'images qui sont distincts entre eux et non parallèles au plan de convoyage **Pc**. Le nombre m d'éléments sensibles de chaque capteur d'images radiographiques linéaires est supérieur à 128 de préférence supérieur à 512. La distance entre éléments sensibles radiographiques voisins (appelée « pas » ou « pitch » en anglais) et/ou la dimension des éléments sensibles radiographiques est de préférence inférieure à 800 μm. La fréquence de lecture des lignes d'images est de préférence supérieure à 100 Hz, avantageusement supérieure à **1**kHz. Bien entendu ces paramètres sont adaptés en fonction de la taille des récipients, la précision recherchée et la vitesse de défilement.

Selon une caractéristique avantageuse de réalisation, au moins trois capteurs d'images radiographiques **Ci** linéaires ont leurs droites de support **Li** parallèles entre elles.

Selon une autre caractéristique avantageuse de réalisation, au moins trois capteurs d'images radiographiques **Ci** linéaires ont leurs droites de support **Li** orthogonales au plan de convoyage **Pc**.

Selon une variante, un foyer **Fj** est positionné afin que son faisceau traverse la région inspectée puis le plan de convoyage **Pc**. De plus, au moins un capteur d'images radiographiques **Ci** linéaire associé est positionné opposé au foyer **Fj** par rapport au plan de convoyage **Pc** et de manière que sa droite support **Li** soit parallèle au plan de convoyage **Pc.**

Selon ces variantes de réalisation avec des capteurs d'images radiographiques linéaires, le système d'acquisition acquiert à l'aide de chacun des au moins trois capteurs d'image radiographiques **Ci,** à chaque déplacement incrémental de chaque récipient sur la trajectoire, des images linéaires radiographiques de la région à inspecter selon un nombre choisi afin que pour chaque récipient, l'ensemble de la région à inspecter se trouve représentée complètement dans l'ensemble des images linéaires radiographiques. Ainsi, lors du déplacement d'un récipient, chaque capteur d'images radiographiques est apte à acquérir des images radiographiques linéaires de sorte que l'ensemble de la région à inspecter du récipient se trouve représenté complètement dans l'ensemble des images linéaires radiographiques obtenues à partir dudit capteur d'images radiographiques. Ainsi, pour chaque récipient, il est obtenu au moins trois ensembles d'images linéaires radiographiques de la région à inspecter qui sont ensuite analysées. Il est possible de constituer des images radiographiques matricielles de la région inspectée, par juxtaposition des ensembles d'images linéaires radiographiques. Mais la reconstruction du modèle géométrique et la mesure ne l'imposent pas nécessairement.

Il est à noter que compte tenu du volume traversé **Vt,** aucune projection radiographique n'est acquise dans la région d'angle mort (β < ±10°) située de part et d'autre de la direction de déplacement **T**. L'installation radiographique **400** permet, malgré l'absence de projections radiographiques dans cet intervalle d'angles, de reconstruire, grâce au modèle géométrique a priori, un modèle géométrique numérique précis et complet du récipient. Il est ainsi possible de réaliser des mesures de dimension linéaire sur tout le modèle géométrique numérique et en particulier selon des directions non orthogonales aux directions de projection possibles, y compris des mesures de dimension linéaire selon des directions de mesure orthogonales aux directions de projections manquantes correspondant à la région d'angle mort située de part et d'autre de la direction de déplacement **T.**

Le déplacement incrémental est la translation effectuée par le récipient entre deux acquisitions successives d'images. Pour une vitesse de défilement donnée des récipients, le déplacement incrémental est limité inférieurement par la vitesse de lecture des capteurs d'images. Ce paramètre, combiné à la résolution verticale des capteurs d'images linéaires, (ou aux résolutions horizontale et verticale des capteurs d'images matricielles), conditionne la densité de points mesurés du modèle géométrique numérique, donc in fine la résolution spatiale et la précision de la mesure de la caractéristique dimensionnelle de la région à inspecter. Par exemple, le déplacement incrémental pourra être inférieur à 0.5 mm, de préférence inférieur à 0.2 mm ce qui signifie que les capteurs d'images sont lus 5 fois durant un déplacement de 1 mm des récipients.

Bien entendu, le nombre de foyers, le nombre de capteurs d'images radiographiques associés à chaque foyer, et leurs dispositions relatives sont choisis de toute manière appropriée en fonction du degré de précision de mesure souhaité, de la forme des récipients et de leur espacement sur le convoyeur.

L'installation radiographique **400** permet la mesure de dimensions (pour un contrôle dimensionnel) sur des récipients en verre défilant à haute cadence et sans contact, par au moins trois projections rayons X de directions différentes, et moyennant un calcul optimal, rapide et suffisamment juste.

Il est à noter que dans les verreries, il est possible que plusieurs séries de récipients différents soient présentes en même temps sur une même ligne de contrôle. L'installation radiographique **400,** et de manière plus générale la ligne de contrôle **100,** selon l'invention peut être utilisée pour inspecter un flux de récipients composé de plusieurs séries différentes, par exemple une première série et une deuxième série. Dans ce cas, l'installation radiographique **400,** ou de manière plus générale la ligne de contrôle **100,** comporte un système d'indication au système informatique **600** de la série à laquelle appartient chacun des récipients afin de mettre en oeuvre le procédé de l'invention à tous les récipients d'une même série. Autrement dit, il est prévu la mise à disposition, pour le système informatique d'un modèle géométrique a priori de chaque série de récipient, et le système informatique est adapté afin d'associer les images radiographiques de chaque récipient avec la série à laquelle il appartient.

On remarque que, dans chaque poste, la zone de contact des récipients avec le tronçon du dispositif de transport qui est associé à ce poste est de préférence distincte de la zone à inspecter des récipients à ce poste, surtout pour les postes de contrôle de bague, de contrôle de fond et de contrôle d'épaule ou de corps qui mettent en oeuvre un contrôle optique par rayons lumineux.

De plus, dans une ligne de contrôle telle que décrite ci-dessus, il est possible de prévoir que les récipients sont convoyés sans déplacement vertical, ni dans les trois postes de contrôle bague, de contrôle fond et de mesure radiographique, ni entre les postes de contrôle bague, de contrôle fond et de mesure radiographique. Cela simplifie la conception de la ligne, en réduit le coût, permet des cadences élevées, et simplifie les opérations de changement de format.

Tout particulièrement, dans une ligne de contrôle mettant en oeuvre les installations telles que décrites ci-dessus, il est possible de prévoir que les récipients sont convoyés sans rotation contrôlée autour de leur axe central dans les trois postes de contrôle bague, de contrôle fond et de mesure radiographique, ceci tout en permettant un contrôle des glaçures et la mesure de dimensions linéaires sur les 360 degrés du récipient autour de son axe central **A2**. De plus, et de préférence, dans une ligne de contrôle mettant en oeuvre les installations telles que décrites ci-dessus, il est possible de prévoir que les récipients sont convoyés sans rotation contrôlée entre les postes de contrôle bague, de contrôle fond et de mesure radiographique.

Il a déjà été proposé par exemple, dans les documents EP2368861ou WO2008101492, que chaque récipient de la série de récipients porte un identifiant unique. Cet identifiant unique, pour chaque récipient, est relié à, ou contient, au moins des données de production du récipient, et/ou un horodatage et/ou le numéro du moule dans lequel a été formé le récipient et/ou le numéro de section ou de cavité dans laquelle a été formé le récipient. Dans ce cas il peut être prévu que la ligne de contrôle comporte au moins un lecteur de l'identifiant unique des récipients inspectés par la ligne de contrôle. Il est possible de prévoir un système informatique **600** qui reçoit :

- en provenance de l'installation de contrôle bague, au moins une information de contrôle bague pour le récipient inspecté ;
- en provenance de l'installation de contrôle fond, au moins une information de contrôle fond pour le récipient inspecté ;
- en provenance de l'installation radiographique de mesure, au moins une mesure de dimension linéaire pour le récipient inspecté.

Dans ce cas, le système informatique peut être configuré pour créer un rapport informatique liant, pour tous les récipients inspectés de la série, l'identifiant unique d'un récipient, l'au moins une information de contrôle bague, l'au moins une information de contrôle fond et l'au moins une mesure pour ce récipient inspecté, et pour stocker ce rapport informatique dans une mémoire électronique de telle sorte que le rapport reste accessible ensuite de préférence durant toute la vie du récipient, y compris par exemple au moins jusqu' à son acquisition par un client final, donc généralement pendant plusieurs semaines, de préférence plusieurs mois, voire plusieurs années.

Bien entendu, si la ligne de contrôle comprend une installation de contrôle d'épaule et/ou de corps, on prévoira avantageusement qu'une information de contrôle d'épaule et/ou de corps pour le récipient inspecté soit aussi reçue par le système informatique et soit aussi liée aux autres informations dans le rapport informatique.

Par exemple, le rapport informatique peut être une partie d'une base de donnée dans laquelle ces données sont reliées entre elles comme se rapportant à un même élément, en l'occurrence le récipient qui peut être identifié par son identifiant unique. Le rapport informatique pour un récipient peut comporter d'autres données, notamment des données de production permettant d'identifier par exemple le lieu, la date, l'heure, la minute, la seconde de moulage, et/ou la machine de production, le moule, la cavité, etc.... Plus tard, d'autres données, par exemple de remplissage, de distribution, de commercialisation, d'utilisation ou de recyclage, pourront être agrégées dans le rapport informatique. Le rapport informatique peut être intégré dans une « blockchain » permettant d'assurer une traçabilité infalsifiable.

Par ailleurs, le système informatique **600** peut avantageusement être configuré pour effectuer un traitement informatique sur les rapports informatiques d'un groupe de récipients de la série. Ce traitement peut être un traitement statistique. Le système informatique peut d'ailleurs être configuré pour commander une action correctrice sur un paramètre de production des récipients, sur la base de ce traitement informatique sur les rapports informatiques d'un groupe de récipients de la série.

Selon une caractéristique avantageuse de réalisation, le système informatique peut être relié à un dispositif de tri des récipients en fonction de la mesure linéaire de la région à inspecter et/ou en fonction d'une ou plusieurs informations de contrôle. Ainsi, ce dispositif de tri peut éjecter du dispositif de transport, les récipients considérés comme défectueux en considération des dimensions linéaires mesurées.

L'invention n'est pas limitée aux exemples décrits et représentés car diverses modifications peuvent y être apportées sans sortir de son cadre, qui est défini exclusivement par les présentes revendications.

## Revendications

**1.** Ligne de contrôle de récipients vides en verre d'une série (**2**), chaque récipient de la série présentant une paroi qui est délimitée par une surface interne (**SI**) et une surface externe (**SE**), qui présente un axe central (**A2**), et qui forme, de haut en bas le long de l'axe central :

    - un goulot (**5**) terminé par une bague (**6**) dont une face supérieure définit un plan supérieur (**Psup**) du récipient, perpendiculaire à l'axe central,
    - une épaule (**4'**),
    - un corps (**4**),
    - et un fond (**3**) de récipient qui définit un plan inférieur (**Pinf**) du récipient, perpendiculaire à l'axe central ;
    la ligne de contrôle (**100**) comportant un dispositif (**11, 112, 113, 114**) de transport qui assure, par contact avec au moins une région de contact des récipients, le transport des récipients selon une trajectoire (**T**) de déplacement, les récipients parcourant un volume de convoyage (**Vt**) étendu selon la trajectoire (**T**) de déplacement ; **caractérisée en ce que** la ligne de contrôle comprend, agencées chacune à des postes distincts les uns des autres le long de la trajectoire (**T**) de déplacement :

    a) à un poste de contrôle de bague, une installation de contrôle de bague (**200**) capable de détecter sans contact, par rayons lumineux, de défauts de type glaçures dans le goulot (**5**) des récipients, l'installation (**200**) comportant :

        a1) une zone d'inspection de l'installation de contrôle de bague, dans laquelle doit être située le goulot d'un récipient pour être inspecté, ladite zone comportant un plan de référence haut (**Prefh**) destiné à coïncider avec le plan supérieur du récipient en cours d'inspection et comportant un axe de référence (**A200**) destiné à coïncider avec l'axe central (**A2**) du récipient pour une position du récipient en cours d'inspection ;
        a2) un tronçon (**112**) du dispositif (**11**) de transport qui assure, dans la zone d'inspection de l'installation, le transport des récipients selon une portion rectiligne de la trajectoire (**T**) de déplacement, dans un plan de convoyage horizontal (**Pc**) perpendiculaire à l'axe central des récipients,
        a3) une série de plusieurs émetteurs lumineux directifs (**201, 202, ..., 20n**) qui sont répartis angulairement autour de l'axe de référence de l'installation et qui délivrent, en direction de la zone d'inspection de l'installation, chacun un faisceau lumineux directif selon un axe de faisceau (**A201, A202, ..., A20n**) qui lui est propre, de manière que la zone d'inspection soit éclairée par les faisceaux lumineux directifs selon une multitude d'angles d'azimut distincts en projection dans le plan de référence haut ;
        a4) plusieurs récepteurs lumineux (**211, 212, ..., 21n**) qui sont répartis angulairement autour de l'axe de référence de l'installation et qui ont chacun un axe de vision (**A211, A212, ..., A21n**) et un angle de champ de vision (**AV211,...**) autour de cet axe de vision ;
        a5) avec des éléments optiques agencés de part et d'autre du plan de référence associé, ces éléments optiques appartenant soit à des émetteur lumineux de l'installation soit à des récepteurs lumineux de l'installation, mais tous en dehors du volume de convoyage;

b) à un poste de contrôle de fond, une installation de contrôle de fond (**300**) capable de détecter sans contact, par rayons lumineux, de défauts de type glaçures dans le fond (**3**) des récipients, l'installation (**300**) comportant :

b1) une zone d'inspection de l'installation de contrôle de fond dans laquelle doit être située le fond d'un récipient pour être inspecté, ladite zone comportant un plan de référence bas (**Prefb**) destiné à coïncider avec le plan inférieur du récipient en cours d'inspection et comportant un axe de référence (**A300**) destiné à coïncider avec l'axe central du récipient pour une position du récipient en cours d'inspection ;

b2) un tronçon (**113**) du dispositif (**11**) de transport qui assure, dans la zone d'inspection de l'installation, le transport des récipients selon une portion rectiligne de la trajectoire (**T**) de déplacement, dans un plan de convoyage horizontal (**Pc**) perpendiculaire à l'axe central des récipients,

b3) une série de plusieurs émetteurs lumineux directifs (**301, 302, ..., 30n**) qui sont répartis angulairement autour de l'axe de référence de l'installation et qui délivrent, en direction de la zone d'inspection de l'installation, chacun un faisceau lumineux directif selon un axe de faisceau (**A301, A302, ..., A30n**) qui lui est propre, de manière que la zone d'inspection soit éclairée par les faisceaux lumineux directifs selon une multitude d'angles d'azimut distincts en projection dans le plan de référence bas ;

b4) plusieurs récepteurs photosensibles (**311, 312, ..., 31n**) qui sont répartis angulairement autour de l'axe de référence de l'installation et qui ont chacun un axe de vision (**A311, A312, ..., A31n**) et un angle de champ de vision (**AV311**) autour de cet axe de vision ;

b5) avec des éléments optiques agencés de part et d'autre du plan de référence bas associé, ces éléments optiques appartenant soit à des émetteur lumineux de l'installation soit à des récepteurs lumineux de l'installation, mais tous en dehors du volume de convoyage ;

c) à un poste de mesure radiographique, une installation radiographique (**400**) de mesure automatique de dimensions linéaires d'au moins une région à inspecter de récipients, ayant :

c1) au moins un foyer (**Fj**) d'un tube (**12**) générateur de rayons X situé en dehors du volume traversé (**Vt**), et créant un faisceau divergent de rayons X dirigé pour traverser au moins une région à inspecter comprenant au moins une partie du goulot et/ou une partie du corps du récipient ;

c2) un tronçon (**114**) du dispositif (**11**) de transport qui assure, dans la zone d'inspection de l'installation, le transport des récipients selon une portion rectiligne de la trajectoire (**T**) de déplacement, dans un plan de convoyage horizontal (**Pc**) perpendiculaire à l'axe central des récipients,

c3) un ou plusieurs capteurs d'images radiographiques (**Ci**), situés en dehors du volume de convoyage (**Vt**), de manière à recevoir des rayons X issus d'un foyer (**Fj**), le ou les foyers (**Fj**) et les capteurs d'images radiographiques (**Ci**) étant disposés de manière que chaque capteur d'images reçoive la projection radiographique de la région à inspecter par les rayons issus du foyer (**Fj**) lorsque le récipient traverse ces rayons, les directions de projection radiographique de ces projections radiographiques étant différentes entre elles ;

c4) un système d'acquisition relié aux capteurs d'images radiographiques (**Ci**), de manière à acquérir pour chaque récipient au cours de son déplacement, au moins trois images radiographiques de la région à inspecter, obtenues d'au moins trois projections radiographiques de la région à inspecter, avec des directions de projection radiographique différentes ;

c5) un système informatique analysant les au moins trois images radiographiques, issues d'au moins les trois projections radiographiques différentes, de manière à déterminer au moins un diamètre interne du goulot dans un plan non orthogonal à une direction de projection radiographique (**Dji**), et/ou au moins une épaisseur de la paroi du corps dans un plan non orthogonal à une direction de projection radiographique (**Dji**).

2. Ligne de contrôle selon la revendication **1**, **caractérisée en ce qu'**elle comporte, à un poste de contrôle d'épaule et/ou de corps, distinct des postes de contrôle de bague, de contrôle de fond et de mesure radiographique, une installation de contrôle d'épaule et/ou de corps (**500**) capable de détecter sans contact, par rayons lumineux, de défauts de type glaçures dans l'épaule et/ou le corps des récipients, l'installation (**500**) comportant :

> d1) une zone d'inspection de l'installation de contrôle d'épaule et/ou de corps dans laquelle doit être située l'épaule et/ou le corps d'un récipient pour être inspecté, ladite zone comportant un plan de référence intermédiaire destiné à couper l'épaule et/ou le corps du récipient en cours d'inspection et comportant un axe de référence (**A500**) destiné à coïncider avec l'axe central du récipient pour une position du récipient en cours d'inspection ;
> d2) un tronçon du dispositif (**11**) de transport qui assure, dans la zone d'inspection de l'installation, le transport des récipients selon une portion rectiligne de la trajectoire (**T**) de déplacement, dans un plan de convoyage horizontal (**Pc**) perpendiculaire à l'axe central des récipients,
> d3) ▪ une série de plusieurs émetteurs lumineux directif qui sont répartis angulairement autour de l'axe de référence de l'installation et qui délivrent, en direction de la zone d'inspection de l'installation, chacun un faisceau lumineux directif selon un axe de faisceau qui lui est propre, de manière que la zone d'inspection soit éclairée par les faisceaux lumineux directifs selon une multitude d'angles d'azimut distincts en projection dans le plan de référence intermédiaire ;
> d4) plusieurs récepteurs lumineux qui sont répartis angulairement autour de l'axe de référence de l'installation et qui ont chacun un axe de vision et un angle de champ de vision autour de cet axe de vision ;
> d5) avec des éléments optiques agencés de part et d'autre du plan de référence intermédiaire, ces éléments optiques appartenant soit à des émetteur lumineux de l'installation soit à des récepteurs lumineux de l'installation, mais tous en dehors du volume de convoyage.

3. Ligne de contrôle selon l'une des revendications précédentes, **caractérisée en ce que** dans chacune des zones d'inspection des installations de contrôle de bague (**200**), de contrôle de fond (**300**) et radiographique de mesure (**400**), le dispositif (**11**) de transport assure, dans la zone d'inspection de l'installation, le transport des récipients le long de la trajectoire de déplacement sans rotation contrôlée autour de leur axe central (**A2**).

4. Ligne de contrôle selon l'une des revendications précédentes, **caractérisée en ce que** dans chacune des zones d'inspection des installations de contrôle de bague (**200**), de contrôle de fond (**300**) et radiographique de mesure (**400**), le dispositif (**11**) de transport assure, dans la zone d'inspection de l'installation, le transport des récipients le long de la trajectoire de déplacement de telle sorte qu'ils sont immobiles en rotation autour de leur axe central (**A2**).

5. Ligne de contrôle selon l'une des revendications précédentes, **caractérisée en ce que**, entre chacune des installations de contrôle de bague (**200**), de contrôle de fond (**300**) et radiographique de mesure (**400**), le dispositif (**11**) de transport assure le transport des récipients le long de la trajectoire de déplacement sans rotation contrôlée autour de leur axe central (**A2**).

6. Ligne de contrôle selon l'une des revendications précédentes, **caractérisée en ce que** le dispositif transport (**11**) est formé, à chacun des postes, par un tronçon de convoyage associé (**112**, **113**, **114**) du dispositif de transport qui assure le transport de chaque récipient (**2**) à travers le poste en étant en contact avec récipient, et **en ce que** un des tronçons de convoyage associés respectivement aux postes de contrôle de bague, de contrôle de fond et de mesure radiographique assure un contact avec une première région de contact des récipients, tandis qu'un autre des tronçons de convoyage associés respectivement aux postes de contrôle de bague, de contrôle de fond et de mesure radiographique assure un contact avec une deuxième région de contact des récipients qui est distincte de la première région de contact.

7. Ligne de contrôle selon la revendication **6, caractérisée en ce que**, dans chaque poste, la zone de contact des récipients avec le tronçon du dispositif de transport (**11**) qui est associé à ce poste est distincte de la zone à inspecter des récipients à ce poste.

8. Ligne de contrôle selon l'une des revendications précédentes, **caractérisée en ce que** dans chacune des installations de contrôle de bague (**200**), de contrôle de fond (**300**) et radiographique de mesure (**400**), le dispositif (**11**) de transport assure le transport des récipients sans déplacement vertical.

**9.** Ligne de contrôle selon l'une des revendications précédentes, **caractérisée en ce que** le dispositif (**11**) de transport assure le transport des récipients (**2**) sans déplacement vertical dans la ligne de contrôle (**100**), ni dans les trois postes de contrôle bague, de contrôle de fond et de mesure radiographique, ni entre les postes de contrôle de bague, de contrôle fond et de mesure radiographique.

**10.** Ligne de contrôle selon l'une des revendications précédentes, **caractérisée en ce que** les récipients (**2**) sont convoyés sans rotation contrôlée autour de leur axe central (**A2**), ni dans les trois postes de contrôle de bague, de contrôle fond et de mesure radiographique, ni entre les postes de contrôle de bague, de contrôle de fond et de mesure radiographique.

**11.** Ligne de contrôle selon l'une des revendications précédentes, **caractérisée en ce que** l'installation de contrôle de bague (**200**) comporte des éléments optiques d'émetteurs lumineux directifs (**201, 202, ..., 20n**) agencés au-dessus du plan de référence haut (**Prefh**) et des éléments optiques d'émetteurs lumineux (**201, 202, ..., 20n**) agencés en-dessous du plan de référence haut (**Prefh**), mais en dehors du volume de convoyage (**Vt**).

**12.** Ligne de contrôle selon l'une des revendications précédentes, **caractérisée en ce que** l'installation de contrôle de bague (**200**) comporte des éléments optiques de récepteurs lumineux (**211, 212, ..., 21n**) agencés au-dessus du plan de référence haut (**Prefh**) et des éléments optiques de récepteurs lumineux (**211, 212, ..., 21n**) agencés au-dessous du plan de référence haut (**Prefh**), mais en dehors du volume de convoyage (**Vt**).

**13.** Ligne de contrôle selon l'une des revendications précédentes, **caractérisée en ce que** l'installation de contrôle de fond (**300**) comporte des éléments optiques d'émetteurs lumineux directifs (**301, 302, ..., 30n**) agencés au-dessous du plan de référence bas (**Prefb**) et des éléments optiques d'émetteurs lumineux directifs (**301, 302, ..., 30n**) agencés au-dessus du plan de référence bas (**Prefb**), mais en dehors du volume de convoyage (**Vt**).

**14.** Ligne de contrôle selon l'une des revendications précédentes, **caractérisée en ce que** l'installation de contrôle de fond (300) comporte des éléments optiques de récepteurs lumineux (**311, 312, ..., 31n**) agencés au-dessous du plan de référence bas (**Prefb**) et des éléments optiques de récepteurs lumineux (**311, 312, ..., 31n**) agencés au-dessus du plan de référence bas (**Prefb**), mais en dehors du volume de convoyage (**Vt**).

**15.** Ligne de contrôle selon l'une des revendications précédentes, **caractérisée en ce que** l'installation de contrôle (**200, 300**) comporte des émetteurs lumineux directifs (**201, 202, ..., 20n, 301, 302, ..., 30n**) qui sont répartis de manière que la zone d'inspection soit éclairée par les faisceaux lumineux directifs selon une multitude d'angles d'élévation distincts par rapport au plan de référence (**Prefh, Prefb**).

**16.** Ligne de contrôle selon l'une des revendications précédentes, **caractérisée en ce que** la détermination d'au moins un diamètre interne du goulot et/ou d'au moins une épaisseur de la paroi du corps comporte la construction, pour chaque récipient, un modèle géométrique numérique de la région à inspecter du récipient.

**17.** Ligne de contrôle selon la revendication **16**, **caractérisée en ce que** ledit modèle géométrique numérique contient les coordonnées tridimensionnelles d'un ensemble de points, calculées à partir des au moins trois images radiographiques, cet ensemble de points appartenant à la surface interne et/ou externe de la paroi du récipient, avec au moins deux points situés dans un plan non orthogonal à une direction de projection radiographique (**Dji**), et **en ce que** l'au moins un diamètre interne du goulot, et/ou l'au moins une épaisseur de la paroi du corps mesurée sont mesurés sur le modèle géométrique numérique dans un plan non orthogonal à une direction de projection radiographique (**Dji**).

**Patentansprüche**

**1.** Straße zum Prüfen von leeren Glasbehältern einer Serie (2), wobei jeder Behälter der Serie eine Wand aufweist, die von einer Innenfläche (SI) und einer Außenfläche (SE) begrenzt ist, die eine Mittelachse (A2) aufweist, und die entlang der Mittelachse von oben nach unten folgendes bildet:

    - einen Hals (5), der durch einen Ring (6) abgeschlossen ist, von welchem eine Oberseite eine zu der Mittelachse senkrechte obere Ebene (Psup) des Behälters definiert,
    - eine Schulter (4'),
    - einen Körper (4),
    - und einen Behälterboden (3), der eine zu der Mittelachse senkrechte untere Ebene (Pinf) des Behälters definiert,
    wobei die Prüfstraße (100) eine Transportvorrichtung (11, 112, 113, 114) umfasst, die durch Kontakt mit wenigstens einem Kontaktbereich der Behälter den Transport der Behälter entlang einer Bewegungsbahn (T) sicherstellt, wobei die Behälter ein Fördervolumen (Vt), das entlang der Bewegungsbahn (T) erstreckt ist, durchlaufen,

**dadurch gekennzeichnet, dass** die Prüfstraße, jeweils an voneinander getrennten Stationen entlang der Bewegungsbahn (T) angeordnet, umfasst:

a) an einer Ringprüfstation eine Ringprüfanlage (200), die in der Lage ist, Defekte vom Typ Glasur in dem Hals (5) der Behälter berührungslos durch Lichtstrahlen zu erfassen, wobei die Anlage (200) umfasst:

a1) einen Prüfbereich der Ringprüfanlage, in dem sich der Hals eines Behälters befinden soll, um geprüft zu werden, wobei der Bereich eine obere Referenzebene (Prefh), die dazu bestimmt ist, mit der oberen Ebene des in Prüfung befindlichen Behälters zusammenzufallen, sowie eine Referenzachse (A200) umfasst, die dazu bestimmt ist, mit der Mittelachse (A2) des Behälters für eine Position des in Prüfung befindlichen Behälters zusammenzufallen,

a2) einen Abschnitt (112) der Transportvorrichtung (11), der in dem Prüfbereich der Anlage den Transport der Behälter entlang eines geradlinigen Abschnitts der Bewegungsbahn (T), in einer horizontalen Förderebene (Pc) senkrecht zur Mittelachse der Behälter sicherstellt,

a3) eine Reihe von mehreren Richtlichtsendern (201, 202, ..., 20n), die um die Referenzachse der Anlage winkelmäßig verteilt sind und die in Richtung des Prüfbereiches der Anlage jeweils einen gerichteten Lichtstrahl entlang einer ihm eigenen Strahlachse (A201, A202, ..., A20n) abgeben, so dass der Prüfbereich durch die gerichteten Lichtstrahlen unter einer Vielzahl unterschiedlicher Azimutwinkel in Projektion in der oberen Referenzebene beleuchtet wird,

a4) mehrere Lichtempfänger (211, 212, ..., 21n), die um die Referenzachse der Anlage winkelmäßig verteilt sind und die jeweils eine Sichtachse (A211, A212, ..., A21n) und einen Sichtfeldwinkel (AV211, ...) um diese Sichtachse herum aufweisen,

a5) mit auf beiden Seiten der zugeordneten Referenzebene angeordneten optischen Elementen, wobei diese optischen Elemente entweder zu Lichtsendern der Anlage oder zu Lichtempfängern der Anlage gehören, jedoch alle außerhalb des Fördervolumens,

b) an einer Bodenprüfstation eine Bodenprüfanlage (300), die in der Lage ist, Defekte vom Typ Glasur in dem Boden (3) der Behälter berührungslos durch Lichtstrahlen zu erfassen, wobei die Anlage (300) umfasst:

b1) einen Prüfbereich der Bodenprüfanlage, in dem sich der Boden eines Behälters befinden soll, um geprüft zu werden, wobei der Bereich eine untere Referenzebene (Prefb) umfasst, die dazu bestimmt ist, mit der unteren Ebene des in Prüfung befindlichen Behälters zusammenzufallen, sowie eine Referenzachse (A300) umfasst, die dazu bestimmt ist, mit der Mittelachse des Behälters für eine Position des in Prüfung befindlichen Behälters zusammenzufallen,

b2) einen Abschnitt (113) der Transportvorrichtung (11), der in dem Prüfbereich der Anlage den Transport der Behälter entlang eines geradlinigen Abschnitts der Bewegungsbahn (T) in einer horizontalen Förderebene (Pc) senkrecht zur Mittelachse der Behälter sicherstellt,

b3) eine Reihe von mehreren Richtlichtsendern (301, 302, ..., 30n), die um die Referenzachse der Anlage winkelmäßig verteilt sind und die in Richtung des Prüfbereiches der Anlage jeweils einen gerichteten Lichtstrahl entlang einer ihm eigenen Strahlachse (A301, A302, ..., A30n) abgeben, so dass der Prüfbereich durch die gerichteten Lichtstrahlen unter einer Vielzahl unterschiedlicher Azimutwinkel in Projektion in der unteren Referenzebene beleuchtet wird,

b4) mehrere lichtempfindliche Empfänger (311, 312, ..., 31n), die um die Referenzachse der Anlage winkelmäßig verteilt sind und die jeweils eine Sichtachse (A311, A312, ..., A31n) und einen Sichtfeldwinkel (AV311) um diese Sichtachse herum aufweisen,

b5) mit auf beiden Seiten der zugeordneten unteren Referenzebene angeordneten optischen Elementen, wobei diese optischen Elemente entweder zu Lichtsendern der Anlage oder zu Lichtempfängern der Anlage gehören, jedoch alle außerhalb des Fördervolumens,

c) an einer Röntgenmessstation eine Röntgenanlage (400) zum automatischen Messen von linearen Abmessungen wenigstens eines zu prüfenden Bereichs von Behältern, mit:

c1) wenigstens einem Brennpunkt (Fj) einer Röntgenstrahlen erzeugenden Röhre (12), die sich außerhalb des durchquerten Volumens (Vt) befindet und ein divergentes Bündel von Röntgenstrahlen erzeugt, das so gerichtet ist, dass es wenigstens einen zu prüfenden Bereich durchquert, der wenigstens einen Teil des Halses und/oder einen Teil des Körpers des Behälters umfasst,

c2) einem Abschnitt (114) der Transportvorrichtung (11), der in dem Prüfbereich der Anlage den Transport der Behälter entlang eines geradlinigen Abschnitts der Bewegungsbahn (T) in einer horizontalen Förderebene (Pc) senkrecht zur Mittelachse der Behälter sicherstellt,

c3) einem oder mehreren Röntgenbildsensoren (Ci), die sich außerhalb des Fördervolumens (Vt) befinden, um aus einem Brennpunkt (Fj) kommende Röntgenstrahlen zu empfangen, wobei der oder die Brennpunkt(e) (Fj) und die Röntgenbildsensoren (Ci) derart angeordnet sind, dass jeder Bildsensor die Röntgenprojektion des zu prüfenden Bereichs durch die von dem Brennpunkt (Fj) kommenden Strahlen empfängt, wenn der Behälter diese Strahlen durchläuft, wobei die Röntgenprojektionsrichtungen dieser Röntgenprojektionen untereinander verschieden sind:

c4) ein Erfassungssystem, das mit den Röntgenbildsensoren (Ci) verbunden ist, um für jeden Behälter im Laufe seiner Bewegung wenigstens drei Röntgenbilder des zu prüfenden Bereichs aufzunehmen, die aus wenigstens drei Röntgenprojektionen des zu prüfenden Bereichs, mit unterschiedlichen Röntgenprojektionsrichtungen, erhalten werden,

c5) ein Computersystem, das die wenigstens drei Röntgenbilder analysiert, die aus wenigstens den drei verschiedenen Röntgenprojektionen hervorgehen, um wenigstens einen Innendurchmesser des Halses in einer Ebene zu bestimmen, die nicht orthogonal zu einer Röntgenprojektionsrichtung (Dji) ist, und/oder wenigstens eine Dicke der Wand des Körpers in einer Ebene, die nicht orthogonal zu einer Röntgenprojektionsrichtung (Dji) ist.

2. Prüfstraße nach Anspruch 1, **dadurch gekennzeichnet, dass** sie an einer Schulter- und/oder Körperprüfstation, welche von den Stationen zum Prüfen des Rings, zum Prüfen des Bodens und zur Röntgenmessung getrennt ist, eine Schulter- und/oder Körperprüfanlage (500) aufweist, die in der Lage ist, Defekte vom Typ Glasur in der Schulter und/oder dem Körper der Behälter berührungslos durch Lichtstrahlen zu erfassen, wobei die Anlage (500) umfasst:

d1) einen Prüfbereich der Schulter- und/der Körperprüfanlage, in dem sich die Schulter und/oder der Körper eines Behälters befinden soll, um geprüft zu werden, wobei der Bereich eine Zwischenreferenzebene umfasst, die dazu bestimmt ist, die Schulter und/oder den Körper des in Prüfung befindlichen Behälters zu schneiden, sowie eine Referenzachse (A500) umfasst, die dazu bestimmt ist, mit der Mittelachse des Behälters für eine Position des in Prüfung befindlichen Behälters zusammenzufallen,

d2) einen Abschnitt der Transportvorrichtung (11), der in dem Prüfbereich der Anlage den Transport der Behälter entlang eines geradlinigen Abschnitts der Bewegungsbahn (T) in einer horizontalen Förderebene (Pc) senkrecht zur Mittelachse der Behälter sicherstellt,

d3) eine Reihe von mehreren Richtlichtsendern, die um die Referenzachse der Anlage winkelmäßig verteilt sind und die in Richtung des Prüfbereiches der Anlage jeweils einen gerichteten Lichtstrahl entlang einer ihm eigenen Strahlachse abgeben, so dass der Prüfbereich durch die gerichteten Lichtstrahlen unter einer Vielzahl unterschiedlicher Azimutwinkel in Projektion in der Zwischenreferenzebene beleuchtet wird,

d4) mehrere Lichtempfänger, die um die Referenzachse der Anlage winkelmäßig verteilt sind und die jeweils eine Sichtachse und einen Sichtfeldwinkel um diese Sichtachse herum aufweisen,

d5) mit auf beiden Seiten der Zwischenreferenzebene angeordneten optischen Elementen, wobei diese optischen Elemente entweder zu Lichtsendern der Anlage oder zu Lichtempfängern der Anlage gehören, jedoch alle außerhalb des Fördervolumens.

**3.** Prüfstraße nach einem der vorhergehenden Ansprüche, **dadurch gekennzeichnet, dass** in jedem der Prüfbereiche der Anlagen zur Ringprüfung (200), zur Bodenprüfung (300) und zur Röntgenmessung (400) die Transportvorrichtung (11) in dem Prüfbereich der Anlage den Transport der Behälter entlang der Bewegungsbahn ohne kontrollierte Rotation um ihre Mittelachse (A2) sicherstellt.

**4.** Prüfstraße nach einem der vorhergehenden Ansprüche, **dadurch gekennzeichnet, dass** in jedem der Prüfbereiche der Anlagen zur Ringprüfung (200), zur Bodenprüfung (300) und zur Röntgenmessung (400) die Transportvorrichtung (11) in dem Prüfbereich der Anlage den Transport der Behälter entlang der Bewegungsbahn derart sicherstellt, dass sie um ihre Mittelachse (A2) herum drehunbeweglich sind.

**5.** Prüfstraße nach einem der vorhergehenden Ansprüche, **dadurch gekennzeichnet, dass** zwischen jeder der Anlagen zur Ringprüfung (200), zur Bodenprüfung (300) und zur Röntgenmessung (400) die Transportvorrichtung (11) den Transport der Behälter entlang der Bewegungsbahn ohne kontrollierte Rotation um ihre Mittelachse (A2) sicherstellt.

**6.** Prüfstraße nach einem der vorhergehenden Ansprüche, **dadurch gekennzeichnet, dass** die Transportvorrichtung (11) an jeder der Stationen durch einen zugeordneten Förderabschnitt (112, 113, 114) der Transportvorrichtung gebildet ist, der den Transport eines jeden Behälters (2) durch die Station, indem er mit dem Behälter in Kontakt steht, sicherstellt, und dass einer der Förderabschnitte, die den Stationen zur Ringprüfung, zur Bodenprüfung bzw. zur Röntgenmessung zugeordnet sind, einen Kontakt mit einem ersten Kontaktbereich der Behälter sicherstellt, während ein anderer der Förderabschnitte, die den Stationen zur Ringprüfung, zur Bodenprüfung bzw. zur Röntgenmessung zugeordnet sind, einen Kontakt mit einem zweiten Kontaktbereich der Behälter sicherstellt, der von dem ersten Kontaktbereich getrennt ist.

**7.** Prüfstraße nach Anspruch 6, **dadurch gekennzeichnet, dass** in jeder Station der Kontaktbereich der Behälter mit dem Abschnitt der Transportvorrichtung (11), der dieser Station zugeordnet ist, von dem zu prüfenden Bereich der Behälter an dieser Station getrennt ist.

**8.** Prüfstraße nach einem der vorhergehenden Ansprüche, **dadurch gekennzeichnet, dass** in jeder der Anlagen zur Ringprüfung (200), zur Bodenprüfung (300) und zur Röntgenmessung (400) die Transportvorrichtung (11) den Transport der Behälter ohne vertikale Bewegung sicherstellt.

**9.** Prüfstraße nach einem der vorhergehenden Ansprüche, **dadurch gekennzeichnet, dass** die Transportvorrichtung (11) den Transport der Behälter (2) ohne vertikale Bewegung auf der Prüfstraße (100) weder in den drei Stationen zur Ringprüfung, zur Bodenprüfung und zur Röntgenmessung noch zwischen den Stationen zur Ringprüfung, zur Bodenprüfung und zur Röntgenmessung sicherstellt.

**10.** Prüfstraße nach einem der vorhergehenden Ansprüche, **dadurch gekennzeichnet, dass** die Behälter (2) ohne kontrollierte Rotation um ihre Mittelachse (A2) befördert werden, weder in den drei Stationen zur Ringprüfung, zur Bodenprüfung und zur Röntgenmessung noch zwischen den Stationen zur Ringprüfung, zur Bodenprüfung und zur Röntgenmessung.

**11.** Prüfstraße nach einem der vorhergehenden Ansprüche, **dadurch gekennzeichnet, dass** die Ringprüfanlage (200) optische Richtlichtsender-Elemente (201, 202, ..., 20n) umfasst, welche oberhalb der oberen Referenzebene (Prefh) angeordnet sind, sowie optische Lichtsender-Elemente (201, 202, ..., 20n), welche unterhalb der oberen Referenzebene (Prefh), aber außerhalb des Fördervolumens (Vt) angeordnet sind.

**12.** Prüfstraße nach einem der vorhergehenden Ansprüche, **dadurch gekennzeichnet, dass** die Ringprüfanlage (200) optische Lichtempfänger-Elemente (211, 212, ..., 21n) umfasst, welche oberhalb der oberen Referenzebene (Prefh) angeordnet sind, sowie optische Lichtempfänger-Elemente (211, 212, ..., 21n), welche unterhalb der oberen Referenzebene (Prefh), aber außerhalb des Fördervolumens (Vt) angeordnet sind.

**13.** Prüfstraße nach einem der vorhergehenden Ansprüche, **dadurch gekennzeichnet, dass** die Bodenprüfanlage (300) optische Richtlichtsender-Elemente (301, 302, ..., 30n) umfasst, welche unterhalb der unteren Referenzebene (Prefb) angeordnet sind, sowie optische Richtlichtsender-Elemente (301, 302, ..., 30n), welche oberhalb der unteren Referenzebene (Prefb), aber außerhalb des Fördervolumens (Vt) angeordnet sind.

**14.** Prüfstraße nach einem der vorhergehenden Ansprüche, **dadurch gekennzeichnet, dass** die Bodenprüfanlage (300) optische Lichtempfänger-Elemente (311, 312, ..., 31n) umfasst, welche unterhalb der unteren Referenzebene (Prefb) angeordnet sind, sowie optische Lichtempfänger-Elemente (311, 312, ..., 31n), welche oberhalb der unteren Referenzebene (Prefb), aber außerhalb des Fördervolumens (Vt) angeordnet sind.

**15.** Prüfstraße nach einem der vorhergehenden Ansprüche, **dadurch gekennzeichnet, dass** die Prüfanlage (200, 300) Richtlichtsender (201, 202, ..., 20n, 301, 302, ..., 30n) umfasst, die so verteilt sind, dass der Prüfbereich durch die gerichteten Lichtstrahlen unter einer Vielzahl unterschiedlicher Höhenwinkel in Bezug auf die Referenzebene (Prefh, Prefb) beleuchtet wird.

**16.** Prüfstraße nach einem der vorhergehenden Ansprüche, **dadurch gekennzeichnet, dass** die Bestimmung wenigstens eines Innendurchmessers des Halses und/oder wenigstens einer Dicke der Wand des Körpers das Erstellen - für einen jeden Behälter - eines digitalen geometrischen Modells des zu prüfenden Bereiches des Behälters umfasst.

**17.** Prüfstraße nach Anspruch 16, **dadurch gekennzeichnet, dass** das digitale geometrische Modell die dreidimensionalen Koordinaten einer Punktemenge enthält, die anhand der wenigstens drei Röntgenbilder berechnet werden, wobei diese Punktemenge zur Innenfläche und/oder zur Außenfläche der Wand des Behälters gehört, wobei wenigstens zwei Punkte in einer Ebene liegen, die nicht orthogonal zu einer Röntgenprojektionsrichtung (Dji) ist, und dass der wenigstens eine Innendurchmesser des Halses und/oder die wenigstens eine gemessene Dicke des Körpers an dem digitalen geometrischen Modell in einer Ebene gemessen werden, die nicht orthogonal zu einer Röntgenprojektionsrichtung (Dji) ist.

**Claims**

**1.** A line for inspecting empty glass containers of a series (**22**. , each container of the series having a wall which is delimited by an inner surface (**SI**) and an outer surface (**SE**), which has a central axis (**A2**), and which forms, from top to bottom along the central axis:

- a neck (**5**) ending with a finish (**6**), an upper face of which defines an upper plane (**Psup**) of the container, perpendicular to the central axis,
- a shoulder (**4'**),
- a body (**4**),
- and a container base (**3**) which defines a lower plane (**Pinf**) of the container, perpendicular to the central axis;
the inspection line (**100**) including a transport device (**11, 112, 113, 114**) which ensures, by contact with at least one contact region of the containers, the transport of the containers along a trajectory of displacement (**T**), the containers traveling through a conveying volume (**Vt**) extended along the trajectory of displacement (**T**); **characterized in that** the inspection line comprises, each arranged at stations distinct from each other along the trajectory of displacement (**T**):

a) at a finish inspection station, a finish inspection installation (**200**) capable of detecting without contact, by light rays, check-type defects in the neck (**5**) of the containers, the installation (**200**) including:

a1) an inspection area of the finish inspection installation, in which the neck of a container must be located in order to be inspected, said area including a top reference plane (**Prefh**) intended to coincide with the upper plane of the container under inspection and including a reference axis (**A200**) intended to coincide with the central axis (**A2**) of the container for a position of the container under inspection;
a2) a section (**112**) of the transport device (**11**) which ensures, in the inspection area of the installation, the transport of the containers along a rectilinear portion of the trajectory of displacement (**T**), in a horizontal conveying plane (**Pc**) perpendicular to the central axis of the containers,
a3) a series of several directional light emitters (**201, 202, ..., 20n**) which are angularly distributed around the reference axis of the installation and which each deliver, in the direction of the inspection area of the installation, a directional light beam along a beam axis (**A201, A202, ..., A20n**) specific thereto, such that the inspection area is lighted by the directional light beams at a multitude of distinct azimuth angles in projection in the top reference plane;
a4) several light receivers (**211, 212, ..., 21n**) which are angularly distributed around the reference axis of the installation and which each have an axis of view (**A211, A212, ..., A21n**) and a field-of-view angle (**AV211, ...**) around this axis of view;
a5) with optical elements arranged on either side of the associated reference plane, these optical elements belonging either to light emitters of the installation or to light receivers of the installation, but all outside the conveying volume;

b) at a base inspection station, a base inspection installation (**300**) capable of detecting without contact, by light rays, check-type defects in the base (**3**) of the containers, the installation (**300**) including:

> b1) an inspection area of the base inspection installation in which the base of a container must be located in order to be inspected, said area including a bottom reference plane (**Prefb**) intended to coincide with the lower plane of the container under inspection and including a reference axis (**A300**) intended to coincide with the central axis of the container for a position of the container under inspection;
>
> b2) a section (**113**) of the transport device (**11**) which ensures, in the inspection area of the installation, the transport of the containers along a rectilinear portion of the trajectory of displacement (**T**), in a horizontal conveying plane (**Pc**) perpendicular to the central axis of the containers,
>
> b3) a series of several directional light emitters (**301, 302, ..., 30n**) which are angularly distributed around the reference axis of the installation and which each deliver, in the direction of the inspection area of the installation, a directional light beam along a beam axis (**A301, A302, ..., A30n**) specific thereto, such that the inspection area is lighted by the directional light beams at a multitude of distinct azimuth angles in projection in the bottom reference plane;
>
> b4) several photosensitive receivers (**311, 312, ..., 31n**) which are angularly distributed around the reference axis of the installation and which each have an axis of view (**A311, A312, ..., A31n**) and a field-of-view angle (**AV311**) around this axis of view;
>
> b5) with optical elements arranged on either side of the associated bottom reference plane, these optical elements belonging either to light emitters of the installation or to light receivers of the installation, but all outside the conveying volume;

c) at a radiographic measuring station, a radiographic installation (**400**) for automatically measuring linear dimensions of at least one region to be inspected of containers, having:

> c1) at least one focal point (**Fj**) of an X-ray generating tube (**12**) located outside the traversed volume (**Vt**), and creating a divergent X-ray beam directed to pass through at least one region to be inspected comprising at least part the neck and/or part of the body of the container;

c2) a section (**114**) of the transport device (**11**) which ensures, in the inspection area of the installation, the transport of the containers along a rectilinear portion of the trajectory of displacement (**T**), in a horizontal conveying plane (**Pc**) perpendicular to the central axis of the containers,

c3) one or several radiographic image sensors (**Ci**), located outside the conveying volume (**Vt**), so as to receive X-rays derived from a focal point (**Fj**), the focal point(s) (**Fj**) and the radiographic image sensors (**Ci**) being disposed such that each image sensor receives the radiographic projection of the region to be inspected by the rays derived from the focal point (**Fj**) when the container passes through these rays, the directions of radiographic projection of these radiographic projections being different from each other;

c4) an acquisition system connected to the radiographic image sensors (**Ci**), so as to acquire for each container during its displacement, at least three radiographic images of the region to be inspected, obtained from at least three radiographic projections of the region to be inspected, with different directions of radiographic projection;

c5) a computer system analyzing the at least three radiographic images, derived from at least the three different radiographic projections, so as to determine at least one inner diameter of the neck in a plane not orthogonal to a direction of radiographic projection (**Dji**), and/or at least one thickness of the body wall in a plane not orthogonal to a direction of radiographic projection (**Dji**).

2. The inspection line according to claim **1**, **characterized in that** it includes, at a shoulder and/or body inspection station, distinct from the bottom inspection, base inspection and radiographic measuring stations, a shoulder and/or body inspection installation (**500**) capable of detecting without contact, by light rays, check-type defects in the shoulder and/or body of the containers, the installation (**500**) including:

> d1) an inspection area of the shoulder and/or body inspection installation in which the shoulder and/or the body of a container must be located in order to be inspected, said area including an intermediate reference plane intended to cut the shoulder and/or the body of the container under inspection and including a reference axis (**A500**) intended to coincide with the central axis of the container for a position of the container under inspection;
> d2) a section of the transport device (**11**) which ensures, in the inspection area of the installation, the transport of the containers along a rectilinear portion of the trajectory of displacement (**T**), in a horizontal conveying plane (**Pc**) perpendicular to the central axis of the containers,
> d3) a series of several directional light emitters which are angularly distributed around the reference axis of the installation and which each deliver, in the direction of the inspection area of the installation, a directional light beam along a beam axis specific thereto, such that the inspection area is lighted by the directional light beams at a multitude of distinct azimuth angles in projection in the intermediate reference plane ;
> d4) several light receivers which are angularly distributed around the reference axis of the installation and which each have an axis of view and an field-of-view angle around this axis of view;
> d5) with optical elements arranged on either side of the intermediate reference plane, these optical elements belonging either to light emitters of the installation or to light receivers of the installation, but all outside the conveying volume.

3. The inspection line according to any of the preceding claims, **characterized in that** in each of the inspection areas of the bottom inspection (**200**), base inspection (**300**) and radiographic measuring (**400**) installations, the transport device (**11**) ensures, in the inspection area of the installation, the transport of the containers along the trajectory of displacement without controlled rotation around their central axis (**A2**).

4. The inspection line according to any of the preceding claims, **characterized in that** in each of the inspection areas of the finish inspection (**200**), base inspection (**300**) and radiographic measuring (**400**) installations, the transport device (**11**) ensures, in the inspection area of the installation, the transport of the containers along the trajectory of displacement such that they are stationary in rotation around their central axis (**A2**).

5. The inspection line according to any of the preceding claims, **characterized in that**, between each of the finish inspection (**200**), base inspection (**300**) and radiographic measuring (**400**) installations, the transport device (**11**) ensures the transport of the containers along the trajectory of displacement without controlled rotation around their central axis (**A2**).

6. The inspection line according to any of the preceding claims, **characterized in that** the transport device (**11**) is formed, at each of the stations, by an associated conveying section (**112**, **113, 114**) of the transport device which ensures the transport of each container (**2**) through the station while being in contact with the container, and **in that** one of the conveying sections associated respectively with the finish inspection, base inspection and radiographic measuring stations ensures a contact with a first contact region of the containers, while another of the conveying sections associated respectively with the finish inspection, base inspection and radiographic measuring stations ensures a contact with a second contact region of the containers which is distinct from the first contact region.

7. The inspection line according to claim **6**, **characterized in that**, in each station, the area of contact of the containers with the section of the transport device (**11**) which is associated with this station is distinct from the area to be inspected of the containers at this station.

8. The inspection line according to any of the preceding claims, **characterized in that** in each of the finish inspection (**200**), base inspection (**300**) and radiographic measuring (**400**) installations, the transport device (**11**) ensures the transport of the containers without vertical displacement.

9. The inspection line according to any of the preceding claims, **characterized in that** the transport device (**11**) ensures the transport of the containers (**2**) without vertical displacement in the inspection line (**100**), neither in the three finish inspection, base inspection and radiographic measuring stations, nor between the finish inspection, base inspection and radiographic measuring stations.

10. The inspection line according to any of the preceding claims, **characterized in that** the containers (**2**) are conveyed without controlled rotation around their central axis (**A2**), neither in the three finish inspection, base inspection and radiographic measuring stations, nor between the finish inspection, base inspection and radiographic measuring stations.

11. The inspection line according to any of the preceding claims, **characterized in that** the finish inspection installation (**200**) includes optical elements of directional light emitters (**201, 202, ..., 20n**) arranged above the top reference plane (**Prefh**) and optical elements of light emitters (**201, 202, ..., 20n**) arranged below the top reference plane (**Prefh**), but outside the conveying volume (**Vt**).

12. The inspection line according to any of the preceding claims, **characterized in that** the finish inspection installation (**200**) includes optical elements of light receivers **(211, 212, ..., 21n)** arranged above the top reference plane **(Prefh)** and optical elements of light receivers **(211, 212, ..., 21n)** arranged below the top reference plane **(Prefh),** but outside the conveying volume (**Vt**).

13. The inspection line according to any of the preceding claims, **characterized in that** the base inspection installation (**300**) includes optical elements of directional light emitters **(301, 302, ..., 30n)** arranged below the bottom reference plane (**Prefb**) and optical elements of directional light emitters **(301, 302, ..., 30n)** arranged above the bottom reference plane **(Prefb),** but outside the conveying volume (**Vt**).

14. The inspection line according to any of the preceding claims, **characterized in that** the base inspection installation (**300**) includes optical elements of light receivers **(311, 312, ..., 31n)** arranged below the bottom reference plane **(Prefb)** and optical elements of light receivers **(311, 312, ..., 31n)** arranged above the bottom reference plane **(Prefb),** but outside the conveying volume (**Vt**).

15. The inspection line according to any of the preceding claims, **characterized in that** the inspection installation (**200, 300**) includes directional light emitters **(201, 202, ..., 20n, 301, 302, ..., 30n)** which are distributed such that the inspection area is lighted by the directional light beams at a multitude of distinct elevation angles relative to the reference plane **(Prefh, Prefb).**

16. The inspection line according to any of the preceding claims, **characterized in that** the determination of at least one inner diameter of the neck and/or at least one thickness of the body wall includes the construction, for each container, a digital geometric model of the region to be inspected of the container.

17. The inspection line according to claim **16, characterized in that** said digital geometric model contains the three-dimensional coordinates of a set of points, calculated from the at least three radiographic images, this set of points belonging to the inner and/or outer surface of the wall of the container, with at least two points located in a plane not orthogonal to a direction of radiographic projection (**Dji**), and **in that** the at least one inner diameter of the neck, and/or the at least one thickness of the wall of the measured body are measured on the digital geometric model in a plane not orthogonal to a direction of radiographic projection (**Dji**).

[Fig. 1]

[Fig. 2]

[Fig. 3]

[Fig. 4]

[Fig. 5]

[Fig. 6]

EP 3 963 284 B1

[Fig. 7]

[Fig. 8]

$$s = 180° - r$$

$$\alpha = r$$

41

[Fig. 9]

$$\alpha = s = 180° - r$$

[Fig. 10]

[Fig. 11]

[Fig. 12]

[Fig. 13]

[Fig. 14]

[Fig. 15]

[Fig. 16]

[Fig. 17]

[Fig. 18]

[Fig. 19]

200

A2, A200

Prefh

2

11,112

[Fig. 20]

200

A2, A200

Prefh

2

11,112

T

EP 3 963 284 B1

[Fig. 21]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0320139 A
- EP 0584673 A
- DE 102007044530
- FR 2738343 A1
- EP 2676127 A
- FR 2818748
- GB 1432120 A
- FR 2965344
- EP 2622305 A
- WO 2010025539 A
- JP S60260807 B
- US 5864600 A
- US 20090262891 A
- DE 19756697
- WO 2010092368 A
- US 20060058974 A
- EP 0053151 A
- EP 1147405 A
- EP 2082217 A
- US 4293219 A
- EP 2434276 A
- US 20130222575 A1
- EP 2368861 A
- WO 2008101492 A